# EUROPEAN PATENT APPLICATION

(11) **EP 4 836 399 A1**
(43) Date of publication of application: **04.11.2026**
(21) Application number: 23962906.6
(22) Date of filing: 29.12.2023
(51) Int. Cl.: H04N 19/117

(54) **ENCODING METHOD, DECODING METHOD, CODE STREAM, ENCODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HUO, Junyan, Dongguan, Guangdong 523860 (CN); MA, Yanzhuo, Dongguan, Guangdong 523860 (CN); YANG, Fuzheng, Dongguan, Guangdong 523860 (CN); HAO, Xue, Dongguan, Guangdong 523860 (CN); LI, Ming, Dongguan, Guangdong 523860 (CN)
(74) Representative: RGTH
(86) International application number: PCT/CN2023/143587
(87) International publication number: WO 2025/138232

(57) **Abstract**

The present application discloses an encoding method, a decoding method, a code stream, an encoder, a decoder, and al storage medium. The method comprises: determining prediction parameters of a current block; on the basis of the prediction parameters, determining a first reference prediction parameter set of the current block, wherein the first reference prediction parameter set comprises one or more first candidate reference prediction parameters; on the basis of the first reference prediction parameter set, determining a first color component reference sample value and a second color component reference sample value of the current block; on the basis of the first color component reference sample value and the second color component reference sample value, determining a mappingl relationship between a first color component and a second color component; and on the basis of the mapping relationship and a firstl color component sample value of the current block, determining a predicted value of the second color component of the current block. In this way, the uniformity of chroma prediction can be improved, the accuracy of chroma prediction can also be improved, the codel rate can be saved, and the encoding and decoding efficiency can be improved.

## Description

### TECHNICAL FIELD

The present disclosure relates to the technical field of video encoding and decoding, and in particular, to an encoding method and a decoding method, a bitstream, an encoder, a decoder, and a storage medium.

### BACKGROUND

As people's requirements for video display quality increase, new video application forms such as high definition and ultra high definition videos emerge. International standards organizations ISO/IEC and ITU-T's Joint Video Exploration Team (JVET) has specified the video coding standard H.266/Versatile Video Coding (VVC). Intra block copy (IBC) is a block-level coding mode provided by VVC for video sequences of a screen content type.

In related technologies, for Direct Mode (DM), if an IBC mode is used for a luma block, then the acquired chroma mode is a DC mode, and in this case, an intra prediction mode of the chroma mode cannot be properly determined, resulting in inaccurate chroma prediction of a current block, and loss of coding efficiency.

### SUMMARY

The present disclosure provides an encoding method and a decoding method, a bitstream, an encoder, a decoder, and a storage medium, which may not only improve the singleness of chroma prediction, but also may improve the accuracy of chroma prediction, and save bit rate, thereby improving encoding and decoding efficiency.

The technical solutions of the present disclosure may be implemented as follows.

In a first aspect, the embodiments of the present disclosure provide a decoding method, applied to a decoder, the method including:
determining a prediction parameter of a current block;
determining a first reference prediction parameter set of the current block according to the prediction parameter; where the first reference prediction parameter set includes one or more first candidate reference prediction parameters;
determining a first color component reference sample value and a second color component reference sample value of the current block according to the first reference prediction parameter set;
determining a mapping relationship between a first color component and a second color component according to the first color component reference sample value and the second color component reference sample value; and
determining a prediction value of the second color component of the current block according to the mapping relationship and a first color component sample value of the current block.

In a second aspect, the embodiments of the present disclosure provide an encoding method, applied to an encoder, the method including:
determining a prediction parameter of a current block;
determining a first reference prediction parameter set of the current block according to the prediction parameter; where the first reference prediction parameter set includes one or more first candidate reference prediction parameters;
determining a first color component reference sample value and a second color component reference sample value of the current block according to the first reference prediction parameter set;
determining a mapping relationship between a first color component and a second color component according to the first color component reference sample value and the second color component reference sample value; and
determining a prediction value of the second color component of the current block according to the mapping relationship and a first color component sample value of the current block.

In a third aspect, the embodiments of the present disclosure provide a bitstream, the bitstream is generated by performing bit encoding according to to-be-encoded information; where the to-be-encoded information includes at least one of:
a residual value of a second color component of a current block, a value of filter identification information, a mapping relationship index value, a value of a first syntax element, and a value of a second syntax element; where the filter identification information is used to indicate a downsampling method of the current block, the first syntax element is used to indicate whether a first prediction mode is used for the current block, and the second syntax element is used to indicate whether the first prediction mode is allowed to be used for the current block.

In a fourth aspect, the embodiments of the present disclosure provide an encoder, including a first determination unit and a first prediction unit, where:
the first determination unit is configured to: determine a prediction parameter of a current block; determine a first reference prediction parameter set of the current block according to the prediction parameter; where the first reference prediction parameter set includes one or more first candidate reference prediction parameters;
the first determination unit is further configured to: determine a first color component reference sample value and a second color component reference sample value of the current block according to the first reference prediction parameter set; determine a mapping relationship between a first color component and a second color component according to the first color component reference sample value and the second color component reference sample value; and
the first prediction unit is configured to: determine a prediction value of the second color component of the current block according to the mapping relationship and a first color component sample value of the current block.

In a fifth aspect, the embodiments of the present disclosure provide an encoder, including a first memory and a first processor, where:
the first memory is configured to store a computer program capable of being run on the first processor; and
the first processor is configured to: upon running the computer program, perform method according to the second aspect.

In a sixth aspect, the embodiments of the present disclosure provide a decoder, including a second determination unit and a second prediction unit, where:
the second determination unit is configured to: determine a prediction parameter of a current block; determine a first reference prediction parameter set of the current block according to the prediction parameter; where the first reference prediction parameter set includes one or more first candidate reference prediction parameters;
the second determination unit is further configured to: determine a first color component reference sample value and a second color component reference sample value of the current block according to the first reference prediction parameter set; determine a mapping relationship between a first color component and a second color component according to the first color component reference sample value and the second color component reference sample value; and
the second prediction unit is configured to: determine a prediction value of the second color component of the current block according to the mapping relationship and a first color component sample value of the current block.

In a seventh aspect, the embodiments of the present disclosure provide a decoder, including a second memory and a second processor, where:
the second memory is configured to store a computer program capable of being run on the second processor; and
the second processor is configured to: upon running the computer program, perform the method according to the first aspect.

In an eighth aspect, the embodiments of the present disclosure provide a computer-readable storage medium, the computer-readable storage medium stores a computer program, and the computer program, upon being executed by at least one processor, implements the method according to the first aspect or the method according to the second aspect.

The embodiments of the present disclosure provide an encoding method and a decoding method, a bitstream, an encoder, a decoder, and a storage medium, including: whether at an encoder side or a decoder side, determining a prediction parameter of a current block; determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; determining a mapping relationship between a first color component and a second color component according to the first color component reference sample value and the second color component reference sample value; and determining a prediction value of the second color component of the current block according to the mapping relationship and a first color component sample value of the current block. In this way, if a BVG-LUT mode is used for the current block, then a first reference prediction parameter set applied to a chroma component may be determined, and according to the first reference prediction parameter set, a luma component reference sample value and a chroma component reference sample value of the current block are determined, thereby constructing a mapping relationship between the luma component and the chroma component, and then the chroma component is predicted by utilizing the mapping relationship. That is, a correlation between a reconstructed sample and a sample of the current block in the current picture is fully utilized here, which improves a singularity of chroma prediction, thereby improving the accuracy of chroma prediction; moreover, according to the constructed mapping relationship, pixel-level prediction may also be effectively performed, thereby further saving bit rate, improving encoding and decoding efficiency, and then improving encoding and decoding performance.

### BRIEF DESCRIPTION OF THE DRAWINGS

FIG. 1 is a flow schematic diagram for acquiring a reconstructed sample based on an IBC mode.
FIG. 2 is a schematic diagram of position distribution of adjacent blocks provided in the embodiments of the present disclosure.
FIG. 3 is a schematic diagram 1 of a position relationship between a luma block and a chroma block provided in the embodiments of the present disclosure.
FIG. 4A is a schematic diagram of a composition block diagram of an encoder provided in the embodiments of the present disclosure.
FIG. 4B is a schematic diagram of a composition block diagram of a decoder provided in the embodiments of the present disclosure.
FIG. 5 is a schematic diagram of a network architecture of an encoding and decoding system provided in the embodiments of the present disclosure.
FIG. 6 is a flow schematic diagram 1 of a decoding method provided in the embodiments of the present disclosure.
FIG. 7 is a flow schematic diagram 2 of a decoding method provided in the embodiments of the present disclosure.
FIG. 8 is a flow schematic diagram 3 of a decoding method provided in the embodiments of the present disclosure.
FIG. 9 is a schematic diagram 2 of a position relationship between a luma block and a chroma block provided in the embodiments of the present disclosure.
FIG. 10 is a schematic diagram 3 of a position relationship between a luma block and a chroma block provided in the embodiments of the present disclosure.
FIG. 11 is a schematic diagram 4 of a position relationship between a luma block and a chroma block provided in the embodiments of the present disclosure.
FIG. 12 is a structural schematic diagram of whether an offset position does not cover a current block provided in the embodiments of the present disclosure.
FIG. 13 is a structural schematic diagram of whether an offset position exceeds a preset available region provided in the embodiments of the present disclosure.
FIG. 14 is a schematic diagram of types of templates provided in the embodiments of the present disclosure.
FIG. 15 is a schematic diagram of motion compensation of templates provided in the embodiments of the present disclosure.
FIG. 16 is a schematic diagram of positions of a collocated luma region and a reference luma region provided in the embodiments of the present disclosure.
FIG. 17A is a schematic diagram 1 of downsampling provided in the embodiments of the present disclosure.
FIG. 17B is a schematic diagram 2 of downsampling provided in the embodiments of the present disclosure.
FIG. 17C is a schematic diagram 3 of downsampling provided in the embodiments of the present disclosure.
FIG. 17D is a schematic diagram 4 of downsampling provided in the embodiments of the present disclosure.
FIG. 17E is a schematic diagram 5 of downsampling provided in the embodiments of the present disclosure.
FIG. 17F is a schematic diagram 6 of downsampling provided in the embodiments of the present disclosure.
FIG. 18 is a flow schematic diagram 4 of a decoding method provided in the embodiments of the present disclosure.
FIG. 19 is a flow schematic diagram 5 of a decoding method provided in the embodiments of the present disclosure.
FIG. 20 is a flow schematic diagram 1 of an encoding method provided in the embodiments of the present disclosure.
FIG. 21 is a flow schematic diagram 2 of an encoding method provided in the embodiments of the present disclosure.
FIG. 22 is a detailed flow schematic diagram of an encoding method provided in the embodiments of the present disclosure.
FIG. 23 is a flow schematic diagram of BV-based chroma prediction provided in the embodiments of the present disclosure.
FIG. 24 is a schematic diagram of a composition structure of an encoder provided in the embodiments of the present disclosure.
FIG. 25 is a schematic diagram of a specific hardware structure of an encoder provided in the embodiments of the present disclosure.
FIG. 26 is a schematic diagram of a composition structure of a decoder provided in the embodiments of the present disclosure.
FIG. 27 is a schematic diagram of a specific hardware structure of a decoder provided in the embodiments of the present disclosure.
FIG. 28 is a schematic diagram of a composition structure of an encoding and decoding system provided in the embodiments of the present disclosure.

### DETAILED DESCRIPTION

In order to have a more detailed understanding of the features and technical contents of the embodiments of the present disclosure, the implementations of the embodiments of the present disclosure is described in detail below with reference to the drawings. The drawings are for reference and illustration only and are not used to limit the embodiments of the present disclosure.

Unless otherwise defined, all technical and scientific terms used herein have the same meaning as that commonly understood by those skilled in the technical field of the present disclosure. The terms used herein are only for the purpose of describing the embodiments of the present disclosure and are not intended to limit the present disclosure.

In the following description, the involved "some embodiments", describes a subset of all possible embodiments, but it may be understood that "some embodiments" may be the same subset or different subsets of all possible embodiments, and may be combined with each other without conflict. It should also be noted that the terms "first/second/third" involved in the embodiments of the present disclosure are only used to distinguish similar objects and do not represent a specific order for the objects. It may be understood that "first/second/third" may be interchanged in a specific order or sequence when permitted, so that the embodiments of the present disclosure described herein can be implemented in an order other than that illustrated or described herein.

Before providing the further detailed description of the embodiments of the present disclosure, the nouns and terms involved in the embodiments of the present disclosure are described, the nouns and terms involved in the embodiments of the present disclosure are applicable to the following interpretations:
coding block (CB);
intra block copy (IBC);
screen content coding (SCC);
block matching (BM);
coding unit (CU);
block vector (BV);
motion vector (MV);
direct block vector (DBV);
block vector guided LUT (BVG-LUT);
advanced motion vector prediction (IBC Advanced Motion Vector Prediction, AMVP);
cross-component linear model prediction (CCLM);
merge mode (MERGE mode);
planar mode (PLANAR mode);
sum of absolute difference (SAD);
sum of absolute transformed difference (SATD);
mean squared error (MSE);
root mean square error (RMSE);
mean absolute error (MAE);
mean absolute deviation (MAD);
H.266/versatile video coding (Versatile Video Coding, VVC); and
VVC reference software test platform (VVC Test Model, VTM).

It may be understood that in a video picture, a first color component, a second color component, and a third color component are generally used to represent a coding block. The three color components are respectively a luma component, a blue chroma component, and a red chroma component, and specifically, the luma component is generally denoted by a symbol Y, the blue chroma component is generally denoted by a symbol Cb or U, and the red chroma component is generally denoted by a symbol Cr or V; in this way, the video picture may be represented in a YCbCr format, or represented in a YUV format.

It may also be understood that IBC is an extension tool of VVC for video sequence coding of a screen content type, and it significantly improves the coding efficiency of screen content sequences. Specifically, IBC is a block-level coding mode, and similar to the inter technology, an encoder side performs a motion search, specifically, finds an optimal block vector (which may also be referred to as a motion vector) for the current coding block by block matching. The block vector is a vector from the current block to a reference block. A difference from the inter technology is that the optimal block vector of IBC is searched in a reconstructed region of a picture in which the current block is located (i.e., a current coding picture), while an inter motion vector is searched in reference pictures other than the current coding picture (e.g., reference pictures of the current coding picture in the temporal domain).

In H.266/VVC, a specific process of acquiring a reconstructed value of a current block in the IBC mode may include: deriving a block vector, deriving a prediction sample by using the block vector, deriving a residual sample, and deriving a reconstructed sample by using the prediction sample and the residual sample.

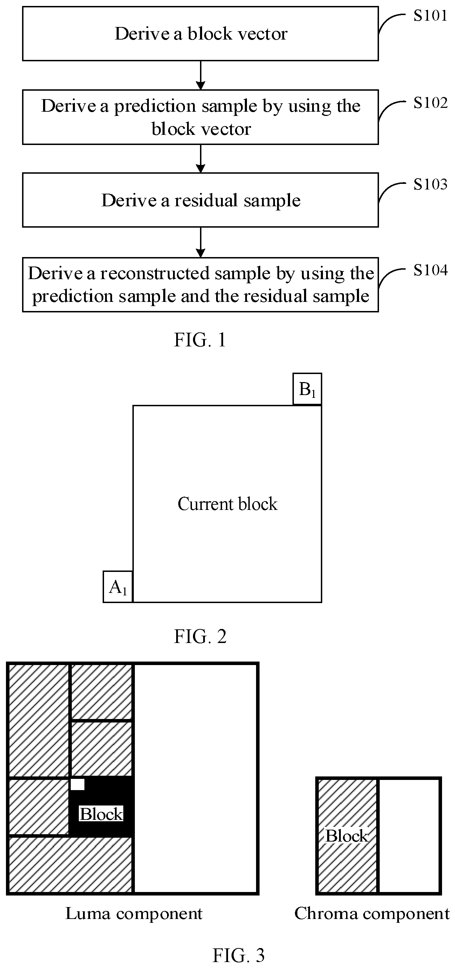

In a specific implementation, for a process of acquiring a reconstructed sample in the IBC mode, as shown in FIG. 1, the process may include S101 to S104.

In S101: a block vector is derived.

For the luma component, the input includes: a luma position (xCb, yCb), specifying an upper-left sample of the current block relative to an upper-left luma sample of the current picture; a variable cbWidth, specifying a width of the current block in luma samples; and a variable cbHeight, specifying a height of the current block in luma samples. The output includes: bvL of luma (Block Vector for Luma samples). It should be noted that the current block containing luma samples may also be referred to as a "luma block".

Here, the IBC mode is classified into an IBC merge mode and an IBC AMVP mode, and when bvL is derived, an IBC block vector candidate list bvCandList needs to be constructed respectively; a detailed introduction to the construction process of an IBC MERGE list is provided below, where the construction process of an IBC AMVP list is the consistent with that of the IBC MERGE list, but the maximum numbers of candidates of the two may be different.

Step 1: When IsGt4by4 is equal to TRUE (the variable IsGt4by4 is TRUE when a width of the luma block multiplied by the height is greater than 16), availability and a block vector candidate of a spatial block of an adjacent coding unit are determined according to a luma block position (xCb, yCb), a width cbWidth and a height cbHeight of the luma block, and correspondingly, an availability flag availableFlagA₁, availableFlagB₁ and block vectors bvA₁ and bvB₁ of the adjacent block are set. The relative positions of adjacent blocks in which A₁ and B₁ are located with respect to the current block are as shown in FIG. 2.

Step 2: When IsGt4by4 is equal to TRUE, for the construction of the block vector candidate list bvCandList, the pseudo code is as follows:

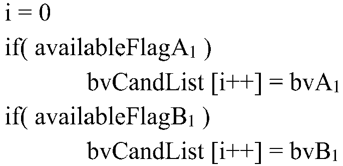

Step 3: The derivation process of the variable numCurrCand (the number of candidates currently obtained) is as follows:
if IsGt4by4 is equal to TRUE, numCurrCand is set equal to the number of candidates in bvCandList; otherwise, numCurrCand is set to 0.

Step 4: When numCurrCand is less than MaxNumIbcMergeCand (a maximum number of candidates in the MERGE mode) and NumHmvpIbcCand (a maximum number of candidates of a historical optimal block vector Hmvp in the IBC mode) is greater than 0, bvCandList and numCurrCand are used as the input and the modified bvCandList and numCurrCand are used as the output, a derivation process of a history-based IBC block vector candidate specified by a decoding specification is invoked.

Step 5: When numCurrCand is less than MaxNumIbcMergeCand, the following is applied until numCurrCand is equal to MaxNumIbcMergeCand:
bvCandList[numCurrCand][0] is set equal to 0 (a horizontal component of BV);
bvCandList[numCurrCand][1] is set equal to 0 (a vertical component of BV);
numCurrCand is increased by 1.

In this way, the block vector candidate list bvCandList is constructed completely; an index bvIdx of the candidate is derived as follows, where general_merge_flag indicates whether it is the IBC merge mode: 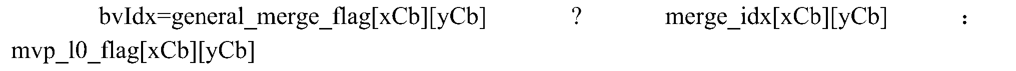 bvIdx = general_merge_flag[xCb][yCb] ? merge_idx[xCb][yCb] : mvp_10_flag[xCb][yCb]

In this way, according to the index bvIdx and the block vector candidate list bvCandList, the specific bvL may be obtained: $bvL \left[0\right] = bvCandList \left[bvIdx\right] \left[0\right] ;$ $bvL \left[1\right] = bvCandList \left[bvIdx\right] \left[1\right] .$

For the IBC AMVP mode, the specific bvL obtained according to the index bvIdx and the block vector candidate list bvCandList is a prediction bvL, and an actual bvL further needs to be added a block vector difference (BVD), and the specific process thereof is as follows.

Step 1: Horizontal and vertical components of the BVD are obtained. MvdL0 is a forward motion vector difference, the horizontal component of the BVD is denoted by bvd[0], and the vertical component of the BVD is denoted by bvd[1], specifically as follows: $bvd \left[0\right] = MvdL 0 \left[xCb\right] \left[yCb\right] \left[0\right] ;$ $bvd \left[1\right] = MvdL 0 \left[xCb\right] \left[yCb\right] \left[1\right] .$

Step 2: A rounding operation is performed on the above acquired prediction bvL. A right shift parameter AmvrShift is used for rounding, and a left shift parameter AmvrShift is used to improve resolution. Specifically, it is as follows: $Offset = \left(AmvrShift==0\right) ? 0 : \left(\left(1≪\left(AmvrShift-1\right)\right)-1\right) ;$ $bvL \left[0\right] = Sign \left(bvL\left[0\right]\right) * \left(\left(\left(Abs\left(bvL\left[0\right]\right)+offset\right)≫AmvrShift\right)≪AmvrShift\right) ;$ $bvL \left[1\right] = Sign \left(bvL\left[1\right]\right) * \left(\left(\left(Abs\left(bvL\left[1\right]\right)+offset\right)≫AmvrShift\right)≪AmvrShift\right) .$

Step 3: For the actual bvL, its range needs to be controlled between -2¹⁷ to 2¹⁷ - 1, and the specific derivation process is as follows: $u \left[0\right] = \left(bvL\left[0\right]+bvd\left[0\right]+{2}^{18}\right) % {2}^{18} ;$ $bvL \left[0\right] = \left(u\left[0\right]>={2}^{17}\right) ? \left(u\left[0\right]-{2}^{18}\right) : u \left[0\right] ;$ $u \left[1\right] = \left(bvL\left[1\right]+bvd\left[1\right]+{2}^{18}\right) % {2}^{18} ;$ $bvL \left[1\right] = \left(u\left[1\right]>={2}^{17}\right) ? \left(u\left[1\right]-{2}^{18}\right) : u \left[1\right] .$

For the chroma component, if dual tree partition is used, IBC is not performed on the chroma component; if single tree partition is used, a BV of the chroma component needs to be derived.

The input includes: a bvL (1/16 pixel precision) of luma. The output includes: a chroma block vector (Block Vector Chroma, bvC) (1/32 pixel precision). The specific derivation process is as follows: $bvC \left[0\right] = \left(\left(bvL\left[0\right]≫\left(3+SubWidthC\right)\right)*32\right) ;$ $bvC \left[1\right] = \left(\left(bvL\left[1\right]≫\left(3+SubHeightC\right)\right)*32\right) .$

In S102: A prediction sample is derived by using the block vector.

Here, the input includes: a luma position (xCb, yCb), specifying an upper-left sample of the current block relative to an upper-left luma sample of the current picture; a variable cbWidth, specifying a width of the current block in luma samples; a variable cbHeight, specifying a height of the current block in luma samples; a block vector BV; a variable cIdx, specifying a color component index of the current block. The output includes: an array of prediction samples predSamples.

For the prediction sample, the specific derivation process is as follows:
when cIdx is equal to 0, i.e., it is the luma component, for x = xCb...xCb + cbWidth - 1 and y = yCb... yCb + cbHeight - 1: $xVb = \left(x+\left(bv\left[0\right]≫4\right)\right) & \left(IbcBufWidthY-1\right) ;$ $yVb = \left(y+\left(bv\left[1\right]≫4\right)\right) & \left(CtbSizeY-1\right) ;$ $predSamples \left[x\right] \left[y\right] = ibcVirBuf \left[0\right] \left[xVb\right] \left[yVb\right] .$

IbcBufWidthY is a width of luma pixels of a reconstructed buffer unit (Buffer) stored for IBC, CtbSizeY is a size of a CTU (Coding Tree Unit), and ibcVirBuf is a reconstructed pixel stored for IBC.

When cIdx is not equal to 0, i.e., it is the chroma component, for x = xCb / SubWidthC ... xCb / SubWidthC + cbWidth / SubWidthC - 1 and y = yCb / SubHeightC ... yCb / SubHeightC + cbHeight / SubHeightC - 1: $xVb = \left(x+\left(bv\left[0\right]≫\left(3+SubWidthC\right)\right)\right) & \left(IbcBufWidthC-1\right) ;$ $yVb = \left(y+\left(bv\left[1\right]≫\left(3+SubHeightC\right)\right)\right) & \left(\left(CtbSizeY/SubHeightC\right)-1\right) ;$ $predSamples \left[x\right] \left[y\right] = ibcVirBuf \left[cIdx\right] \left[xVb\right] \left[yVb\right] .$

Variables SubWidthC and SubHeightC specifically depend on a color sampling format specified by sps_chroma_format_idc, and the specific corresponding relationship is shown in Table 1.

**Table 1**

| sps_chroma_format_idc | color sampling format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |
| 3 | 4:4:4 | 1 | 1 |

In S103: A residual sample is derived.

A bitstream is decoded, to determine the residual sample of the current block.

In S104: A reconstructed sample is derived by using the prediction sample and the residual sample.

The reconstructed sample of the current block is determined according to the prediction sample and the residual sample of the current block. For example, a sum value of the prediction sample and the residual of the current block is calculated, and the reconstructed sample of the current block is set equal to the sum value; where the calculation process includes an operation of limiting the sum value within a preset value range, where the preset value range is determined according to a bit depth of the reconstructed sample.

In another specific implementation, for the derivation process of the chroma prediction mode in H.266/VVC, the input includes: a luma location (xCb, yCb), specifying an upper-left sample of the current block relative to an upper-left luma sample of the current picture; a variable cbWidth, specifying a width of the current block in luma samples; a variable cbHeight, specifying a height of the current block in luma samples; a variable treeType, specifying whether single tree partition or dual tree partition is used. The output includes: a chroma intra prediction mode IntraPredModeC[xCb][yCb] and a Matrix-based Intra Prediction (MIP) chroma direct mode flag MipChromaDirectFlag[xCb][yCb].

If treeType is equal to SINGLE_TREE, i.e., in a case of single tree partition, sps_chroma_format_idc is equal to 3, i.e., YUV444 format (4:4:4 format), intra_chroma_pred_mode is equal to 4, and IntraMipFlag[xCb][yCb] is equal to 1, i.e., a prediction mode of a corresponding collocated luma center block is an MIP mode, then:
① the MIP chroma direct mode flag MipChromaDirectFlag[xCb][yCb] is set to 1, i.e., the MIP mode of luma is used for chroma;
② the chroma intra prediction mode IntraPredModeC[xCb][yCb] is set equal to IntraPredModeY[xCb][yCb].

Otherwise:
① the MIP chroma direct mode flag MipChromaDirectFlag[xCb][yCb] is set to 0.
② a corresponding luma intra prediction mode lumaIntraPredMode is derived as follows:
   if IntraMipFlag[xCb + cbWidth / 2][yCb + cbHeight / 2] is equal to 1, then lumaIntraPredMode is set equal to INTRA_PLANAR.
   otherwise, if CuPredMode[0][xCb + cbWidth / 2][yCb + cbHeight / 2] is equal to MODE_IBC or MODE_PLT, then lumaIntraPredMode is set equal to INTRA_DC.

Note: In Enhanced Compression Model (ECM), the IntraTmp mode is newly introduced; if CuPredMode[0][xCb + cbWidth / 2][yCb + cbHeight / 2] is equal to MODE_INTRA and it is the IntraTmp mode, then lumaIntraPredMode is set equal to INTRA_PLANAR.

Otherwise, lumaIntraPredMode is set equal to IntraPredModeY[xCb + cbWidth / 2][yCb + cbHeight / 2].

③ The chroma intra prediction mode IntraPredModeC[xCb][yCb] is derived as follows:
if cu_act_enabled_flag[xCb][yCb] is equal to 1, then the chroma intra prediction mode IntraPredModeC[xCb][yCb] is set equal to lumaIntraPredMode.
otherwise:
   if BdpcmFlag[xCb][yCb][1] is equal to 1, then IntraPredModeC[xCb][yCb] is set equal to BdpcmDir[xCb][yCb][1] ? INTRA_ANGULAR50 : INTRA_ANGULAR18.
   otherwise cu_act_enabled_flag[xCb][yCb] is equal to 0 and BdpcmFlag[xCb][yCb][1] is equal to 0, the chroma intra prediction mode IntraPredModeC[xCb][yCb] uses cclm_mode_flag, cclm_mode_idx, intra_chroma_pred_mode and lumaIntraPredMode specified in Table 2.

**Table 2**

| cclm_mode _flag | cclm_mode _idx | intra_chroma _pred_mode | lumaIntraPredMode | | | | |
|---|---|---|---|---|---|---|---|
| | | | 0 | 50 | 18 | 1 | X (0<=X<=66) |
| 0 | - | 0 | 66 | 0 | 0 | 0 | 0 |
| 0 | - | 1 | 50 | 66 | 50 | 50 | 50 |
| 0 | - | 2 | 18 | 18 | 66 | 18 | 18 |
| 0 | - | 3 | 1 | 1 | 1 | 66 | 1 |
| 0 | - | 4 | 0 | 50 | 18 | 1 | X |
| 1 | 0 | - | 81 | 81 | 81 | 81 | 81 |
| 1 | 1 | - | 82 | 82 | 82 | 82 | 82 |
| 1 | 2 | - | 83 | 83 | 83 | 83 | 83 |

When sps_chroma_format_idc is equal to 2, the chroma intra prediction mode X in Table 2 may be used to derive the chroma intra prediction mode Y; specifically, reference is made to the specification of the mapping process from mode X to mode Y shown in Table 3, and then, the chroma intra prediction mode X is set equal to the chroma intra prediction mode Y.

**Table 3**

| | | | | | | | | | | | | | | | | | |
|---|---|---|---|---|---|---|---|---|---|---|---|---|---|---|---|---|---|
| mode X | 0 | 1 | 2 | 3 | 4 | 5 | 6 | 7 | 8 | 9 | 10 | 11 | 12 | 13 | 14 | 15 | 16 |
| mode Y | 0 | 1 | 61 | 62 | 63 | 64 | 65 | 66 | 2 | 3 | 5 | 6 | 8 | 10 | 12 | 13 | 14 |
| mode X | 18 | 19 | 20 | 21 | 22 | 23 | 24 | 25 | 26 | 27 | 28 | 29 | 30 | 31 | 32 | 33 | 34 |
| mode Y | 18 | 20 | 22 | 23 | 24 | 26 | 28 | 30 | 31 | 33 | 34 | 35 | 36 | 37 | 38 | 39 | 40 |
| mode X | 36 | 37 | 38 | 39 | 40 | 41 | 42 | 43 | 44 | 45 | 46 | 47 | 48 | 49 | 50 | 51 | 52 |
| mode Y | 41 | 42 | 43 | 43 | 44 | 44 | 45 | 45 | 46 | 47 | 48 | 48 | 49 | 49 | 50 | 51 | 51 |
| mode X | 54 | 55 | 56 | 57 | 58 | 59 | 60 | 61 | 62 | 63 | 64 | 65 | 66 | | | | |
| mode Y | 52 | 53 | 54 | 55 | 55 | 56 | 56 | 57 | 57 | 58 | 59 | 59 | 60 | | | | |

In another specific implementation, for the DM mode, the DM mode refers to directly using the luma prediction mode information of the corresponding position:

When dual tree partition is used for an I frame, separate block partition structures are allowed to be used for the luma component and the chroma component, such as the Dual Tree mode in H.266/VVC. In this case, the luma component at the corresponding position of the chroma coding block may include multiple luma coding blocks; as shown in FIG. 3, in H.266/VVC, when the value of intra_chroma_pred_mode is equal to 4, it indicates that the current chroma block is decoded by using the DM mode.

An intra prediction mode of the chroma block is determined according to an intra prediction mode of a luma block at a center position of a corresponding collocated luma region of the chroma block. The determination may be by directly using the intra prediction mode of the luma block, or an intra prediction mode that is further derived.

In an actual implementation, a center position coordinate of the corresponding collocated luma region of the chroma block may be used as a reference point, and the intra prediction mode of the luma block containing the reference point may be used to determine the intra prediction mode of the chroma block. The determination may be by directly using the intra prediction mode of the luma block, or an intra prediction mode that is further derived.

Additionally, in the embodiments of the present disclosure, the block mentioned here may be a CU, or a sub-block, or a transform block, etc., which is not limited in any way.

The coding block position used by the DM mode is specifically described as follows.

A position of the current chroma block, i.e., a position of the upper-left chroma sample of the current chroma block relative to the upper-left chroma sample of the current picture, chromaPos = (x, y), is acquired; the chromaPos is scaled according to the color sampling format as shown in Table 4, to obtain the collocated luma region position lumaPos = (xCb, yCb) corresponding to the current chroma block.

**Table 4**

| sps_chroma_format_idc | Chroma sampling format | xCb | yCb |
|---|---|---|---|
| 0 | Monochrome | - | - |
| 1 | 4:2:0 | x << 1 | y << 1 |
| 2 | 4:2:2 | x << 1 | y |
| 3 | 4:4:4 | x | y |

The luma position (xCb, yCb) specifies a position of the upper-left luma sample of the luma region corresponding to the current chroma block relative to the upper-left luma sample of the current picture; a variable cbWidth specifies a width of the current block in luma samples; and a variable cbHeight specifies a height of the current block in luma samples.

The position relationship between the current chroma block and the corresponding luma region is shown in FIG. 3; the center luma pixel position of the luma region corresponding to the current chroma CU is described as follows, where xCenter represents a horizontal coordinate position, yCenter represents a vertical coordinate position, and the coding block containing this pixel position is a block at the center position of the luma block corresponding to the chroma block: $xCenter = xCb + cbWidth ≫ 1 ;$ $yCenter = yCb + cbHeight ≫ 1 .$

In another specific implementation, for the decoding process of chroma prediction in H.266/VVC, syntax elements related to the decoding are shown in Table 5. Additionally, for the value of the syntax element intra_chroma_pred_mode, the corresponding bin string is shown in Table 6; for different syntax elements (e.g., cclm_mode_flag, cclm_mode_idx, and intra_chroma_pred_mode, etc.), the coding method used for each coding bit is specifically shown in Table 7.

**Table 5**

| | |
|---|---|
| if( !cu_act_enabled_flag ) { | |
| if(cbWidth / SubWidthC <= MaxTsSize&&cbHeight / SubHeightC <= MaxTs Size && sps_bdpcm_enabled_flag ) | |
| intr**a_bdpcm_chroma_flag** | ae(v) |
| if( intra_bdpcm_chroma_flag ) | |
| **intra_bdpcm_chroma_dir_flag** | ae(v) |
| else { | |
| if( CclmEnabled ) | |
| **cclm_mode_flag** | ae(v) |
| if( cclm_mode_flag ) | |
| **cclm_mode_idx** | ae(v) |
| else | |
| **intra_chroma_pred_mode** | ae(v) |
| } | |
| } | |

**Table 6**

| Value of intra_chroma_pred_mode | Bin string |
|---|---|
| 0 | 100 |
| 1 | 101 |
| 2 | 110 |
| 3 | 111 |
| 4 | 0 |

**Table 7**

| Syntax element | binIdx | | | | | |
|---|---|---|---|---|---|---|
| | 0 | 1 | 2 | 3 | 4 | >=5 |
| cclm_mode_flag | 0 | na | na | na | na | na |
| cclm_mode_idx | 0 | bypass | na | na | na | na |
| intra_chroma_pred_mode | 0 | bypass | bypass | na | na | na |

The binIdx represents a bit position number; if binIdx = 0, it indicates the 0th bit; if binIdx = 1, it indicates the 1st bit. Additionally, the bypass indicates a bypass mode, and na indicates no processing.

In the related art, under dual tree partition: for the DM mode, if the corresponding luma block is in the IBC mode, then the acquired chroma prediction mode is the DC mode, which loses coding efficiency. That is, in the chroma prediction process, the correlation between the reconstructed sample and the sample of the current coding block in the current picture is not used, resulting in a loss of coding efficiency.

Based on this, the embodiments of the present disclosure provide an encoding method and a decoding method, including: determining a prediction parameter of a current block; determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; determining a mapping relationship between a first color component and a second color component according to the first color component reference sample value and the second color component reference sample value; and determining a prediction value of the second color component of the current block according to the mapping relationship and a first color component sample value of the current block.

In this way, if a BVG-LUT mode is used for the current block, then a first reference prediction parameter set applied to a chroma component may be determined, and according to the first reference prediction parameter set, a luma component reference sample value and a chroma component reference sample value of the current block are determined, thereby constructing a mapping relationship between the luma component and the chroma component, and then the chroma component is predicted by utilizing the mapping relationship. That is, a correlation between a reconstructed sample and a sample of the current block in the current picture is fully utilized here, which improves a singularity of chroma prediction, thereby improving the accuracy of chroma prediction; moreover, according to the constructed mapping relationship, pixel-level prediction may also be effectively performed, thereby further saving bit rate, improving encoding and decoding efficiency, and then improving encoding and decoding performance.

Various embodiments of the present disclosure will be described in detail below with reference to the drawings.

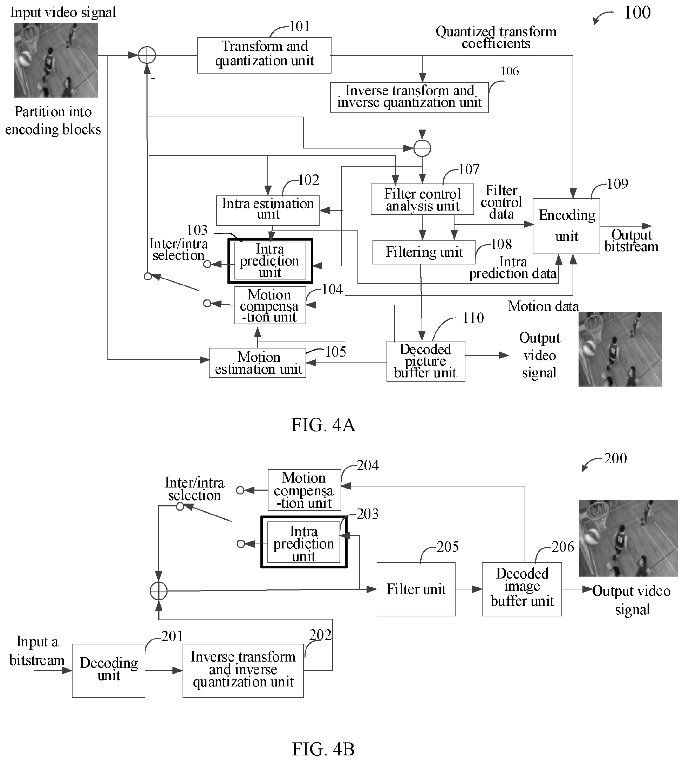

Referring to FIG. 4A, it shows a schematic diagram of a composition block diagram of an encoder provided in the embodiments of the present disclosure. As shown in FIG. 4A, an encoder 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, an encoding unit 109, and a decoded picture buffer unit 110, etc., where the filtering unit 108 may implement deblocking filtering and sample adaptive offset (SAO) filtering, and the encoding unit 109 may implement header information encoding and context-based adaptive binary arithmetic coding (CABAC). For an input original video signal, a video coding block may be obtained through the division of a coding tree unit (CTU), and then, with residual pixel information obtained by intra or inter prediction, the video coding block is transformed through the transform and quantization unit 101, which includes: transforming residual information from a pixel domain to a transform domain, and quantizing the obtained transform coefficient, so as to further reduce a bit rate; the intra estimation unit 102 and the intra prediction unit 103 are used for performing intra prediction on the video coding block; specifically, the intra estimation unit 102 and the intra prediction unit 103 are used for determining an intra prediction mode to be used for encoding the video coding block; the motion compensation unit 104 and the motion estimation unit 105 are used for performing inter prediction encoding of the received video coding block relative to one or more blocks in one or more reference frames, to provide temporal prediction information; the motion estimation performed by the motion estimation unit 105 is a process of generating a motion vector, where the motion vector may estimate the motion of the video coding block, and then, motion compensation is performed by the motion compensation unit 104 based on the motion vector determined by the motion estimation unit 105; after the intra prediction mode is determined, the intra prediction unit 103 is further used for providing the selected intra prediction data to the encoding unit 109, and the motion estimation unit 105 also sends the calculated and determined motion vector data to the encoding unit 109; in addition, the inverse transform and inverse quantization unit 106 is used for reconstruction of the video coding block, to reconstruct a residual block in the pixel domain, and the reconstructed residual block is processed by the filter control analysis unit 107 and the filtering unit 108 to remove blocking artifacts, and then the reconstructed residual block is added to a predictive block in a frame of the decoded picture buffer unit 110, to generate a reconstructed video coding block; the encoding unit 109 is used for encoding various encoding parameters and quantized transform coefficients, and in a CABAC-based encoding algorithm, the context content may be based on an adjacent coding block, and may be used to encode information indicating the determined intra prediction mode, to output a bitstream of the video signal; and the decoded picture buffer unit 110 is used for storing the reconstructed video coding block for prediction reference. As video picture encoding proceeds, new reconstructed video coding blocks are continuously generated, and these reconstructed video coding blocks are all stored in the decoded picture buffer unit 110.

Referring to FIG. 4B, it shows a schematic diagram of a composition block diagram of a decoder provided in the embodiments of the present disclosure. As shown in FIG. 4B, a decoder 200 includes a decoding unit 201, an inverse transform and inverse quantization unit 202, an intra prediction unit 203, a motion compensation unit 204, a filtering unit 205, and a decoded picture buffer unit 206, etc., where the decoding unit 201 may implement header information decoding and CABAC decoding, and the filtering unit 205 may implement deblocking filtering and SAO filtering. After the input video signal is processed through the encoding process in FIG. 4A, a bitstream of the video signal is output; the bitstream is input into the decoder 200, and first, it is processed through the decoding unit 201, used for obtaining a decoded transform coefficient; the transform coefficient is processed by the inverse transform and inverse quantization unit 202, so as to generate a residual block in the pixel domain; the intra prediction unit 203 may be used for generating prediction data of the current video decoding block, based on a determined intra prediction mode and data from a previously decoded block of the current frame or picture; the motion compensation unit 204 determines prediction information for the video decoding block, by parsing a motion vector and other associated syntax elements, and uses the prediction information to generate a predictive block of the video decoding block being decoded; a decoded video block is formed by summing the residual block from the inverse transform and inverse quantization unit 202 and the corresponding predictive block generated by the intra prediction unit 203 or the motion compensation unit 204; the decoded video signal is processed through the filtering unit 205 to remove blocking artifacts, which may improve video quality; then the decoded video block is stored in the decoded picture buffer unit 206, where the decoded picture buffer unit 206 stores reference pictures for subsequent intra prediction or motion compensation, and meanwhile, is also used for outputting the video signal, thereby obtaining a restored original video signal.

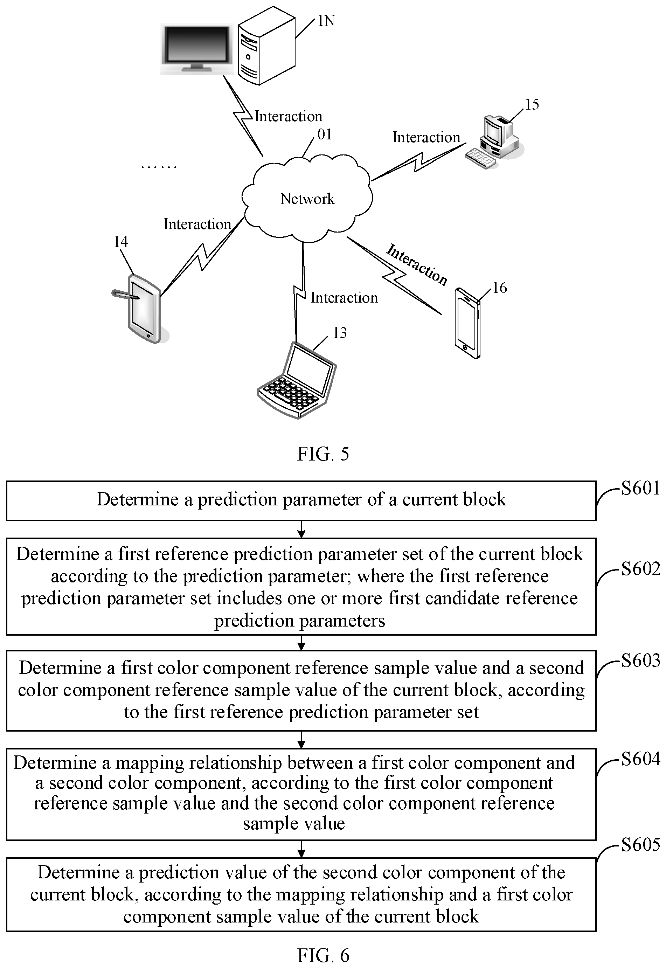

Furthermore, the embodiments of the present disclosure also provide a network architecture of an encoding and decoding system including an encoder and a decoder, where FIG. 5 shows a network architecture diagram of an encoding and decoding system provided in the embodiments of the present disclosure. As shown in FIG. 5, the network architecture includes one or more electronic devices 13 to 1N and a communication network 01, where the electronic devices 13 to 1N may perform video interaction via the communication network 01. In an implementation, the electronic device may be various types of devices having a video encoding and decoding function, for example, the electronic device may include a smartphone, a tablet, a personal computer, a personal digital assistant, a navigator, a digital phone, a video phone, a television, a sensing device, a server, etc., which is not limited in any way here.

It should be noted that the decoder or encoder in the embodiments of the present disclosure may be the above-mentioned electronic device. The encoder may also be referred to as a "video encoder" or an "picture encoder", and the decoder may also be referred to as a "video decoder" or an "picture decoder".

It should also be noted that the encoding and decoding methods of the embodiments of the present disclosure is mainly applied to the intra prediction unit 103 part as shown in FIG. 4A and the intra prediction unit 203 part as shown in FIG. 4B. That is, the embodiments of the present disclosure may be applied to an encoder, may also be applied to a decoder, and may even be applied to both an encoder and a decoder simultaneously, but the embodiments of the present disclosure do not impose any limitation.

It should also be noted that, when applied to the intra prediction unit 103 part, the "current block" specifically refers to a coding block on which intra prediction is to be performed currently; when applied to the intra prediction unit 203 part, the "current block" specifically refers to a decoding block on which intra prediction is to be performed currently.

In an embodiment of the present disclosure, FIG. 6 is a flow schematic diagram 1 of a decoding method provided in the embodiments of the present disclosure. As shown in FIG. 6, the method may include S601 to S605.

In S601: a prediction parameter of a current block is determined.

It should be noted that the decoding method of the embodiments of the present disclosure is applied to a decoder. In addition, the decoding method may specifically refer to an intra prediction method, and more specifically, it is a chroma prediction method based on a block vector. A video picture may be partitioned into multiple decoding blocks, each decoding block may include a first color component, a second color component, and a third color component, and the current block in the embodiments of the present disclosure refers to a decoding block on which chroma prediction is to be performed currently, in the video picture.

Here, if prediction of the first color component is performed on the current block, and the first color component is a luma component, then the current block may also be referred to as a luma block; or, if prediction of the second color component is performed on the current block, and the second color component is a chroma component, then the current block may also be referred to as a chroma block.

It should also be noted that, in the embodiments of the present disclosure, for a prediction parameter, the prediction parameter may be used to indicate whether a first prediction mode is used for the current block. In some embodiments, the method may include: decoding a bitstream, to determine the prediction parameter of the current block.

In the embodiments of the present disclosure, if a value of the prediction parameter is a first value, it is determined that the first prediction mode is used for the current block; if the value of the prediction parameter is a second value, it is determined that the first prediction mode is not used for the current block.

In some embodiments, for the prediction parameter, the method may further include: decoding a bitstream, to determine a value of a first syntax element; and determining the prediction parameter of the current block according to the value of the first syntax element.

It should be noted that, in the embodiments of the present disclosure, the first syntax element may be represented by intra_bvglut_flag, or may also be represented by bvglut_flag. The first syntax element may be used to indicate whether the first prediction mode is used for the current block. Here, if the value of the first syntax element is a first value, it is determined that the first prediction mode is used for the current block; if the value of the first syntax element is a second value, it is determined that the first prediction mode is not used for the current block.

It should also be noted that, in the embodiments of the present disclosure, determining the prediction parameter of the current block according to the value of the first syntax element, may include: setting the value of the prediction parameter to be equal to the value of the first syntax element.

It should also be noted that, in the embodiments of the present disclosure, the first value is different from the second value. The first value may be set to 1 and the second value may be set to 0; or, the first value may be set to 0 and the second value may be set to 1; or, the first value may be set to true and the second value may be set to false; or, the first value may be set to false and the second value may be set to true.

In a specific embodiment, the first value is set to 1, and the second value is set to 0. Exemplarily, if the value of the first syntax element is 1, it indicates that the prediction parameter indicates that the first prediction mode is used for the current block, and in this case, the decoding method of the embodiments of the present disclosure continues to be performed; otherwise, if the value of the first syntax element is 0, it indicates that the prediction parameter indicates that the first prediction mode is not used for the current block, and in this case, other prediction modes in the related art (e.g., PLANAR mode, CCLM mode, angular prediction mode, etc.) may be used for the decoding processing.

In S602: a first reference prediction parameter set of the current block is determined according to the prediction parameter; where the first reference prediction parameter set includes one or more first candidate reference prediction parameters.

It should be noted that, in the embodiments of the present disclosure, when the prediction parameter indicates that the first prediction mode is used for the current block, the first reference prediction parameter set of the current block is determined. The first prediction mode may be a BVG-LUT mode. That is, for the current block, if the BVG-LUT mode is used for the current block, then the first reference prediction parameter set of the current block may be determined.

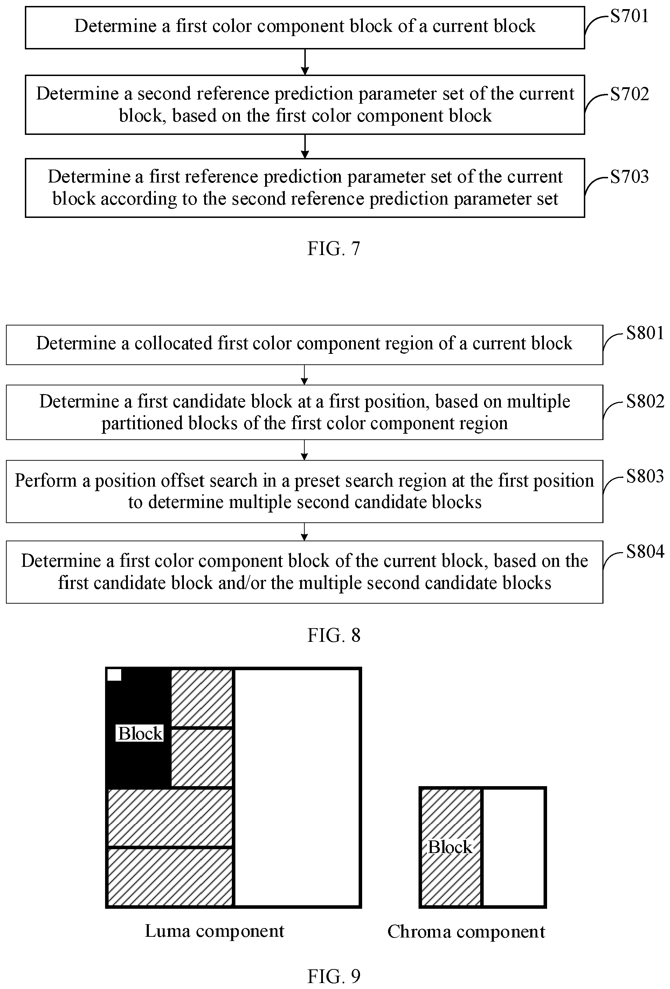

In some embodiments, for determining the first reference prediction parameter set of the current block, as shown in FIG. 7, the method may include S701 to S703.

In S701: a first color component block of the current block is determined.

In S702: a second reference prediction parameter set of the current block is determined according to the first color component block.

In S703: the first reference prediction parameter set of the current block is determined according to the second reference prediction parameter set.

It should be noted that, in the embodiments of the present disclosure, the first reference prediction parameter set may include one or more first candidate reference prediction parameters. The first candidate reference prediction parameter may be a vector parameter based on the second color component.

It should also be noted that, in the embodiments of the present disclosure, the second reference prediction parameter set may include one or more second candidate reference prediction parameters. The second candidate reference prediction parameter may be a vector parameter based on the first color component.

Exemplarily, the first color component may be a luma component, and the second color component may be a chroma component; then the first candidate reference prediction parameter may be a vector parameter based on the chroma component, and the second candidate reference prediction parameter may be a vector parameter based on the luma component.

In some embodiments, the vector parameter includes one of: a block vector parameter, a motion vector parameter. That is, whether it is the first reference prediction parameter set or the second reference prediction parameter set, it may be a parameter list applied to a BV, or a parameter list applied to an MV.

In a specific embodiment, taking the BV as an example, the "first reference prediction parameter" here may be a block vector parameter based on the chroma component, and then the first reference prediction parameter set may be referred to as a chroma BVC candidate list; the "second reference prediction parameter" here may be a block vector parameter based on the luma component, and then the second reference prediction parameter set may be referred to as a luma BVL candidate list.

In some embodiments, for determining the first color component block of the current block, as shown in FIG. 8, the method may include S801 to S804.

In S801: a collocated first color component region of the current block is determined.

In S802: a first candidate block at a first position is determined based on multiple partitioned blocks of the first color component region.

In S803: a position offset search is performed in a preset search region at the first position to determine multiple second candidate blocks.

In S804: the first color component block of the current block is determined based on the first candidate block and/or the multiple second candidate blocks.

It should be noted that, in the embodiments of the present disclosure, the collocated first color component region of the current block is determined first; then, the first color component block of the current block is determined based on multiple partitioned blocks of the first color component region.

It should be noted that, in the embodiments of the present disclosure, if the first color component is the luma component, the first color component region may also be referred to as a "collocated luma region". For example, if the current block is a chroma block, the collocated luma region may refer to a collocated luma region corresponding to the current block. For the current block, block partition may be performed on the collocated first color component region, for example, block partition using a binary tree structure, a ternary tree structure, a quad tree structure, etc., to obtain multiple blocks, each of the blocks may be considered as a CU, a sub-block, or a transform block; then the first color component block of the current block is determined from the multiple partitioned blocks.

Exemplarily, taking FIG. 3 as an example, the region filled with slanted lines represents a collocated luma region corresponding to the chroma component. In the collocated luma region, it may be partitioned into multiple blocks; a block at a center position may be selected from these blocks as a corresponding luma block of the current block, for example, the block filled with black in FIG. 3 is the corresponding luma block (the first color component block) of the current block.

In a specific embodiment, for determining the first color component block of the current block, the method may include: determining a first candidate block at a first position from multiple partitioned blocks of the first color component region; and determining the first color component block of the current block according to the first candidate block at the first position.

In the embodiments of the present disclosure, the first position may refer to any position in the first color component region. Exemplarily, the first position may be a center position, an upper-left corner position, a lower-right corner position, a specific position, etc., in the first color component region.

In the embodiments of the present disclosure, the first candidate block may refer to a block at the first position. In a specific embodiment, a block at the center position in the first color component region is selected as the first candidate block; and/or a block at an upper-left corner position in the first color component region is selected as the first candidate block; and/or a block at a lower-right corner position in the first color component region is selected as the first candidate block, etc., and any limitation is not imposed here.

Furthermore, in some embodiments, for determining the first color component block of the current block according to the first candidate block at the first position, the method may include: performing a position offset search in a preset search region at the first position to determine multiple second candidate blocks; and determining the first color component block of the current block according to the first candidate block and/or the multiple second candidate blocks.

In the embodiments of the present disclosure, performing the position offset search in the preset search region at the first position, may be searching multiple positions toward directions such as upper-left, upper, left, etc., on the basis of the first position, for example, an upper-left coordinate offset (xOffset, yOffset)=(-2,-2), an upper coordinate offset (xOffset, yOffset)=(0,-2), a left coordinate offset (xOffset, yOffset)=(-2,0), etc., of the first position may be acquired, and any limitation is not imposed here.

In some embodiments, determining the first color component block of the current block, may include: determining position information of the current block; performing scaling processing on the position information of the current block according to a preset sampling format, to obtain collocated region position information corresponding to the current block; determining target position information according to the collocated region position information, and using a candidate block containing the target position information as the first color component block of the current block.

In some embodiments, determining the target position information according to the collocated region position information, may include: performing a center position calculation according to the collocated region position information, and using obtained center position information as the target position information; or, performing an upper-left corner position calculation according to the collocated region position information, and using obtained upper-left position information as the target position information; or, performing a lower-right corner position calculation according to the collocated region position information, and using obtained lower-left position information as the target position information.

In the embodiments of the present disclosure, the preset sampling format may be a chroma sampling format (or referred to as a color sampling format). Exemplarily, a mapping relationship between the position (x, y) of the current block and the collocated region position (xCb, yCb) is shown in Table 4.

In a possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

Here, it is assumed that a position of a collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 3) corresponding to the current block is cbWidth, and a height thereof is cbHeight; then a block at the center position (a center position block in the luma region) is a luma block containing the center coordinate (xCb+cbWidth>>1, yCb+cbHeight>>1), i.e., the block filled with black in FIG. 3. In FIG. 3, a white small block indicates a position of the center coordinate, which may be used to locate a position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an upper coordinate offset (xOffset, yOffset) = (0, -2), and a left coordinate offset (xOffset, yOffset) = (-2, 0) of the center position of the collocated luma region. The luma block used for the luma region is a luma block containing the position coordinate (xCb+cbWidth>>1 + xOffset, yCb+cbHeight>>1 + yOffset).

In another possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

Here, it is assumed that a position of the collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 9) corresponding to the current block is cbWidth, and a height thereof is cbHeight; then a block at the upper-left corner position (an upper-left corner block in the luma region) is a luma block containing the upper-left corner coordinate (xCb, yCb), i.e., the block filled with black in FIG. 9. In FIG. 9, a white small block indicates the position of the upper-left corner coordinate, which may be used to locate the position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an upper coordinate offset (xOffset, yOffset) = (0, -2), and a left coordinate offset (xOffset, yOffset) = (-2, 0) of the upper-left corner position of the collocated luma region. The luma block used for the luma region is a luma block containing the position coordinate (xCb+ xOffset, yCb + yOffset).

In yet another possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

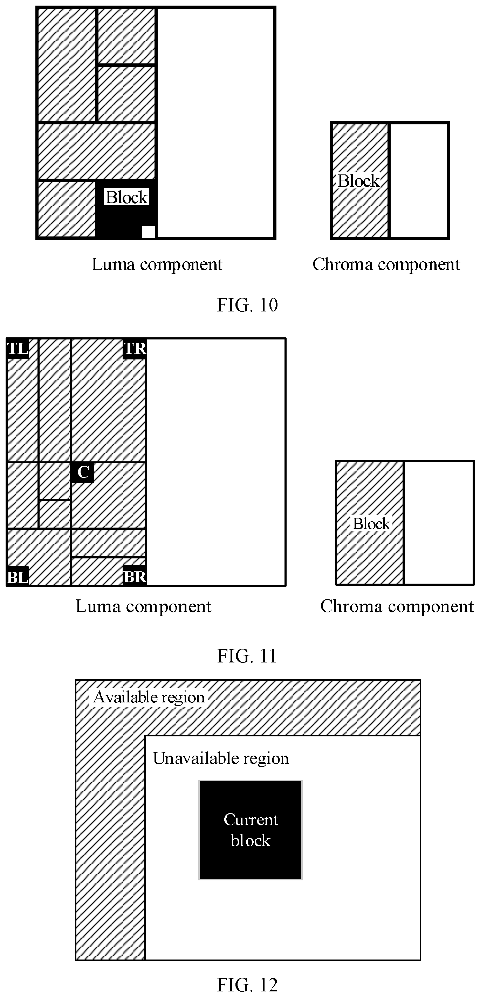

Here, it is assumed that a position of the collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 10) corresponding to the current block is cbWidth, and a height thereof is cbHeight; then a block at the lower-right corner position (a lower-right corner block in the luma region) is a luma block containing the lower-right corner coordinate (xCb + cbWidth-1, yCb + cbHeight-1), i.e., the block filled with black in FIG. 10. In FIG. 10, a white small block indicates the position of the lower-right corner coordinate, which may be used to locate the position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an uppper coordinate offset (xOffset, yOffset) = (0, -2), and a left coordinate offset (xOffset, yOffset) = (-2, 0) of the lower-right corner position of the collocated luma region. The luma block used for the luma region is a luma block containing the position coordinate (xCb + cbWidth - 1 + xOffset, yCb + cbHeight - 1 + yOffset).

That is, in the embodiments of the present disclosure, for the first candidate block used as the first color component block, it may be a block at any position among the multiple blocks shown in FIG. 3. For example, it is the block (the block filled with black) at the center position in the collocated luma region as shown in FIG. 3, the block (the block filled with black) at the upper-left corner position in the collocated luma region as shown in FIG. 9, the block (the block filled with black) at the lower-right corner position in the collocated luma region as shown in FIG. 10, or even a block at the upper-right corner position or a block at the lower-left corner position in the collocated luma region, or even a block at the center position of the upper-left region, etc., which is not limited in any way here. Furthermore, on the basis of the first candidate block, multiple positions may be searched toward the upper-left, upper, and left, etc., to obtain multiple second candidate blocks. Then, according to the first candidate block and/or the multiple second candidate blocks, the first color component block of the current block can be determined.

In some embodiments, the method may further include: determining at least one candidate block at a preset position from multiple partitioned blocks of the first color component region; and determining the first color component block of the current block according to the at least one candidate block.

In the embodiments of the present disclosure, the at least one candidate block may be used as the first color component block of the current block. That is, for the first color component block, it may be at least one candidate block acquired sequentially. For example, as shown in FIG. 11, CUs at five luma pixel positions are included here, specifically: C, TL, TR, BL, and BR. However, the embodiments of the present disclosure are not limited to five positions, and may be multiple different positions; moreover, they are not limited to the five positions shown in FIG. 11, and any limitation is not imposed thereto.

In yet another possible implementation, taking blocks including five luma pixel positions shown in FIG. 11 as an example, acquisition may be performed sequentially in a preset order, where the preset order includes but is not limited to the following order: C -> TL -> TR -> BL -> BR.

For the detailed position derivation process of C, TL, TR, BL, BR: the position of the current block, that is, the position of the upper-left corner chroma sample of the current block relative to the upper-left corner chroma sample of the current picture, chromaPos = (x, y), is acquired; and the chromaPos is scaled according to the chroma sampling format shown in Table 4, to obtain the collocated luma region position lumaPos = (xCb, yCb) corresponding to the current block.

Here, it is assumed that the position of the collocated luma pixel corresponding to the upper-left corner of the current block relative to the upper-left corner luma pixel of the picture (i.e., the position of the luma pixel TL) is (xCb, yCb), and the width of the collocated luma region corresponding to the current chroma coding block (i.e., the entire region filled with slanted lines of the luma component in FIG. 11) is cbWidth, and the height thereof is cbHeight.

The coordinate of the position of the luma pixel C is (xCb + cbWidth / 2, yCb + cbHeight / 2).

The coordinate of the position of the luma pixel TL is (xCb, yCb).

The coordinate of the position of the luma pixel TR is (xCb + cbWidth - 1, yCb).

The coordinate of the position of the luma pixel BL is (xCb, yCb + cbHeight - 1).

The coordinate of the position of the luma pixel BR is (xCb + cbWidth - 1, yCb + cbHeight - 1).

Here, when searching each position, multiple positions may also be searched toward the upper-left, upper, left at the position, including but not limited to the following exemplary search positions: acquiring the upper-left coordinate offset (xOffset, yOffset) = (-2, -2), the upper coordinate offset (xOffset, yOffset) = (0, -2), and the left coordinate offset (xOffset, yOffset) = (-2, 0) of the position. The luma block used for the luma region is a luma block containing a position coordinate resulting from adding the above coordinate offset to the coordinate of the position.

In this way, for the current block, a corresponding first color component block needs to be determined first. Exemplarily, when the first color component is the luma component, a corresponding luma block of the current block needs to be determined here. Specifically, one or more corresponding luma blocks may be determined by using the above several possible implementations.

It can be understood that after the first color component block is determined, a second reference prediction parameter set of the current block may be constructed. In some embodiments, the method may include: determining one or more candidate vector parameters based on the first color component according to the first color component block; determining the second reference prediction parameter set of the current block according to the one or more candidate vector parameters based on the first color component.

It should be noted that, in the embodiments of the present disclosure, determining the second reference prediction parameter set of the current block according to the one or more candidate vector parameters based on the first color component, may include: adjusting the candidate vector parameter based on the first color component, to determine a candidate vector parameter based on the second color component; when the candidate vector parameter based on the second color component satisfies a preset availability condition, using the candidate vector parameter based on the first color component as a second candidate reference prediction parameter to add to the second reference prediction parameter set.

Here, taking the block vector parameter BV as an example, it is assumed that the current block is a chroma block and the first color component block is a luma block, then the candidate vector parameter based on the first color component may be a BV of the luma block, i.e., BVL; the candidate vector parameter based on the second color component may be a BV of the chroma block, i.e., BVC.

It should also be noted that, in the embodiments of the present disclosure, it is assumed that the candidate vector parameter based on the first color component is a luma BV = (BVLₕₒᵣ, BVLᵥₑᵣ) and the candidate vector parameter based on the second color component is a chroma BV = (BVCₕₒᵣ, BVCᵥₑᵣ), then the corresponding chroma BV may be determined by adjusting the BVL (luma BV).

In a specific embodiment, adjusting the candidate vector parameter based on the first color component to determine the candidate vector parameter based on the second color component, may include: determining a preset sampling format of the current block; scaling the candidate vector parameter based on the first color component according to the preset sampling format, to determine the candidate vector parameter based on the second color component.

It should be noted that, in the embodiments of the present disclosure, the above adjustment may include scaling processing according to the preset sampling format. The preset sampling format may be a mapping relationship between a luma BV and a scaled chroma BV as shown in Table 8.

**Table 8**

| sps_chroma_format_idc | Color sampling format | BVCₕₒᵣ | BVCᵥₑᵣ |
|---|---|---|---|
| 0 | Monochrome | - | - |
| 1 | 4:2:0 | BVLₕₒᵣ>>1 | BVLᵥₑᵣ>>1 |
| 2 | 4:2:2 | BVLₕₒᵣ>>1 | BVLᵥₑᵣ |
| 3 | 4:4:4 | BVLₕₒᵣ | BVLᵥₑᵣ |

Here, the preset sampling format may refer to a color sampling format, for example, monochrome, 4:2:0, 4:2:2, 4:4:4, etc. The syntax element sps_chroma_format_idc is used to indicate a type of the color sampling format, where the color sampling format is specifically a chroma sampling format. Here, types of color sampling formats are different, then their corresponding scaling operations are different.

Exemplarily, if the value of sps_chroma_format_idc is 0, it is determined that the color sampling format is monochrome, i.e., there is no chroma BV parameter (BVCₕₒᵣ, BVCₕₒᵣ); if the value of sps_chroma_format_idc is 1, it is determined that the color sampling format is 4:2:0, and in this case, the mapping relationship between the luma BV and the chroma BV is: BVCₕₒᵣ = BVLₕₒᵣ>>1, BVCₕₒᵣ= BVLᵥₑᵣ>>1; if the value of sps_chroma_format_idc is 2, it is determined that the color sampling format is 4:2:2, and in this case, the mapping relationship between the luma BV and the chroma BV is: BVCₕₒᵣ = BVLₕₒᵣ>>1, BVCₕₒᵣ= BVLᵥₑᵣ; if the value of sps_chroma_format_idc is 3, it is indicated that the color sampling format is 4:4:4, and in this case, the mapping relationship between the luma BV and the chroma BV is: BVCₕₒᵣ = BVLₕₒᵣ, BVCₕₒᵣ= BVLᵥₑᵣ.

In this way, based on Table 8, it may be selected to scale the candidate BVL according to the color sampling format to obtain a scaled BVC; then it is determined whether the scaled BVC satisfies the preset availability condition. The scaled BVC satisfies the preset availability condition, including but not limited to:
an offset position indicated by the scaled BVC does not exceed a picture boundary;
an offset position indicated by the scaled BVC does not exceed a slice boundary;
an offset position indicated by the scaled BVC does not cover the current block;
an offset position indicated by the scaled BVC does not exceed a preset available region;
an offset position indicated by the scaled BVC has been reconstructed.

It should also be noted that, in the embodiments of the present disclosure, according to the first color component block, the obtained one or more candidate vector parameters based on the first color component (i.e., one or more candidate BVLs) are scaled. If a certain candidate BVL is scaled based on the color sampling format shown in Table 8 and the scaled BVC satisfies the preset availability condition, then this candidate BVL may be used as a second candidate reference prediction parameter to add to the second reference prediction parameter set, thereby constructing the second reference prediction parameter set. The second reference prediction parameter set may include one or more second candidate reference prediction parameters.

It can also be understood that after the second reference prediction parameter set is constructed, the first reference prediction parameter set of the current block may be further determined. In some embodiments, the method may include: adjusting the one or more second candidate reference prediction parameters in the second reference prediction parameter set to determine first candidate reference prediction parameters respectively corresponding to the one or more second candidate reference prediction parameters; determining the first reference prediction parameter set of the current block according to the first candidate reference prediction parameters respectively corresponding to the one or more second candidate reference prediction parameters.

It should be noted that, in the embodiments of the present disclosure, the number of first candidate reference prediction parameters is the same as that of second candidate reference prediction parameters. That is, for each second candidate reference prediction parameter, it may be adjusted to obtain one or more first candidate reference prediction parameters, and then an available first candidate reference prediction parameter is decided from them. However, it should be noted that the number of first candidate reference prediction parameters may also be different from that of second candidate reference prediction parameters; in this case, more than one available first candidate reference prediction parameter may be decided from each second candidate reference prediction parameter, and any limitation is not imposed here.

In some embodiments, for adjusting the one or more second candidate reference prediction parameters in the second reference prediction parameter set to determine first candidate reference prediction parameters respectively corresponding to the one or more second candidate reference prediction parameters, taking one of the second candidate reference prediction parameters as an example here, the method may include: adjusting the second candidate reference prediction parameter to determine a third reference prediction parameter set based on the second color component; and determining a first candidate reference prediction parameter corresponding to the second candidate reference prediction parameter based on the third reference prediction parameter set.

In the embodiments of the present disclosure, for each second candidate reference prediction parameter, this method may be used to determine its corresponding first candidate reference prediction parameter, to obtain the first reference prediction parameter set.

Exemplarily, it is assumed that the current block is a chroma block and the first color component block is a luma block, then the first candidate reference prediction parameter may be a candidate BV of the chroma block, i.e., a candidate BVC; the second candidate reference prediction parameter may be a candidate BV of the luma block, i.e., a candidate BVL. One or more candidate vector parameters based on the second color component (i.e., one or more candidate BVCs) may be determined by adjusting the second candidate reference prediction parameter, and these candidate BVCs can construct the third reference prediction parameter set.

It can be understood that, in the embodiments of the present disclosure, it is assumed that the second candidate reference prediction parameter is a luma BV=(BVLhor, BVLver), and the candidate vector parameter based on the second color component is a chroma BV=(BVChor, BVCver), then it may be selected to construct a chroma BVC candidate list including one or more candidate block vector parameters by adjusting the BVL (luma BV) or the BVC (chroma BV).

In a possible implementation, adjusting the second candidate reference prediction parameter to determine the third reference prediction parameter set based on the second color component, may include: scaling the second candidate reference prediction parameter according to a preset sampling format of the current block to determine a candidate vector parameter based on the second color component, and adding the candidate vector parameter based on the second color component to the third reference prediction parameter set.

It should be noted that, in the embodiments of the present disclosure, the above adjustment may include scaling processing according to the preset sampling format. The preset sampling format may be a mapping relationship between a luma BV and a scaled chroma BV as shown in Table 8. Here, the preset sampling format may refer to a color sampling format, for example, monochrome, 4:2:0, 4:2:2, 4:4:4, etc. Thus, it may be selected to perform scaling according to the color sampling format shown in Table 8, and add the scaled BVC is used as a candidate vector parameter to add to the third reference prediction parameter set.

In another possible implementation, adjusting the second candidate reference prediction parameter to determine the third reference prediction parameter set based on the second color component, may include: scaling the second candidate reference prediction parameter according to a preset sampling format of the current block, to determine a first initial vector parameter based on the second color component; and performing an offset calculation on the first initial vector parameter based on the second color component according to one or more offset values, to determine one or more candidate vector parameters based on the second color component, and adding the one or more candidate vector parameters based on the second color component to the third reference prediction parameter set.

In yet another possible implementation, adjusting the second candidate reference prediction parameter to determine the third reference prediction parameter set based on the second color component, may include: performing an offset calculation on the second candidate reference prediction parameter according to one or more offset values, to determine one or more second initial vector parameters based on the first color component; and scaling the one or more second initial vector parameters based on the first color component according to a preset sampling format of the current block, to determine one or more candidate vector parameters based on the second color component, and adding the one or more candidate vector parameters based on the second color component to the third reference prediction parameter set.

It should be noted that, in the embodiments of the present disclosure, the above-mentioned one or more offset values may be any number of any values, for example, -1, +1, -2, +2, -3, +3, etc., and any limitation is not imposed here.

That is, in the embodiments of the present disclosure, after acquiring the BV of the corresponding luma block, it may be denoted as BVL, and the chroma BV, which may be denoted as BVC, is acquired through the BVL; then, the BVL or the BVC may be adjusted to construct chroma BVC candidate items including one or more candidates. A construction method of the candidate items includes but is not limited to the following cases.

In a possible construction method, the BVL may be adjusted to form four cases, thereby implementing the adjustment of the BVC. When the BVL is odd, four cases are taken, such as: BVL=(BVLhor, BVLver), BVL=(BVLhor+1, BVLver), BVL=(BVLhor, BVLver+1), BVL=(BVLhor+1, BVLver+1). When the BVL is even, BVL = (BVLhor, BVLver) is taken.

Alternatively, when the BVL is even, four cases are taken, such as: BVL = (BVLₕₒᵣ, BVLᵥₑᵣ), BVL = (BVLₕₒᵣ + 1, BVLᵥₑᵣ), BVL = (BVLₕₒᵣ, BVLᵥₑᵣ + 1), BVL = (BVLₕₒᵣ + 1, BVLᵥₑᵣ + 1).

Here, BVC[0] = BVL[0] * 2 / SubWidthC, BVC[1] = BVL[1] * 2 / SubHeightC. SubWidthC and SubHeightC may be determined according to the mapping relationship between sps_chroma_format_idc and the color sampling format in Table 1.

The BVL is scaled according to the above formulas to obtain the BVC; in this way, when the BVL is odd or even, four BVC candidates are formed, and these candidates are added to the chroma BVC candidate list (i.e., the third reference prediction parameter set).

In another possible construction method, the BVL may be adjusted to form four cases, thereby implementing the adjustment of the BVC. When the BVL is odd, four cases are taken, such as: BVL=(BVLhor, BVLver), BVL=(BVLhor+1, BVLver), BVL=(BVLhor, BVLver+1), BVL=(BVLhor+1, BVLver+1). When the BVL is even, four cases are taken, such as: BVL = (BVLhor, BVLver), BVL = (BVLhor-1, BVLver), BVL = (BVLhor, BVLver-1), BVL = (BVLhor-1, BVLver-1). Next, the BVL is scaled according to the color sampling format in Table 8 to obtain the BVC, in this way, when the BVL is odd or even, four BVC candidates are formed, and these candidates are added to the chroma BVC candidate list (i.e., the third reference prediction parameter set).

It should be noted that, in this construction method, operations in different cases of odd and even may also be unified by the following calculation: four cases are taken, such as: BVL=(BVLhor-1, BVLver-1), BVL=(BVLhor+1, BVLver-1), BVL=(BVLhor-1, BVLver+1), BVL=(BVLhor+1, BVLver+1).

In yet another possible construction method, the BVL may be adjusted to form multiple cases, thereby implementing the adjustment of the BVC. When the BVL is odd, multiple cases are taken, such as: BVL=(BVLhor, BVLver), BVL=(BVLhor+1, BVLver), BVL=(BVLhor, BVLver+1), BVL=(BVLhor+1, BVLver+1), BVL=(BVLhor+3, BVLver), BVL=(BVLhor, BVLver+3), BVL=(BVLhor+3, BVLver+3), BVL=(BVLhor-2, BVLver), BVL=(BVLhor, BVLver-2), and a list is constructed for these candidates in order. When the BVL is even, multiple cases are taken, such as: BVL = (BVLhor, BVLver), BVL = (BVLhor-1, BVLver), BVL = (BVLhor, BVLver-1), BVL = (BVLhor-1, BVLver-1), BVL = (BVLhor-3, BVLver), BVL = (BVLhor, BVLver-3), BVL = (BVLhor-3, BVLver-3), BVL = (BVLhor+2, BVLver), BVL = (BVLhor, BVLver+2). Next, the BVL is scaled according to the color sampling format in Table 8 to obtain the BVC, in this way, when BVL is odd or even, multiple BVC candidates are formed, and these candidates are added to the chroma BVC candidate list (i.e., the third reference prediction parameter set).

It should be noted that, in this construction method, operations in different cases of odd and even may also be unified by the following calculation: cases are taken, such as: BVL=(BVLhor-1, BVLver-1), BVL=(BVLhor+1, BVLver-1), BVL=(BVLhor-1, BVLver+1), BVL=(BVLhor+1, BVLver+1), BVL=(BVLhor+3, BVLver-1), BVL=(BVLhor-1, BVLver+3), BVL=(BVLhor+3, BVLver+3), BVL=(BVLhor-3, BVLver-1), BVL=(BVLhor-1, BVLver-3), etc.

In yet another possible construction method, the obtained BVC may also be adjusted to obtain nine candidates: i.e., cases are set as: BVC=(BVChor, BVCver), BVC=(BVChor-1, BVCver), BVC=(BVChor, BVCver-1), BVC=(BVChor-1, BVCver-1), BVC=(BVChor+1, BVCver), BVC=(BVChor, BVCver+1), BVC=(BVChor+1, BVCver+1), BVC=(BVChor-1, BVCver+1), BVC=(BVChor+1, BVCver-1), thereby forming nine BVC candidates, and these candidates are added to the chroma BVC candidate list (i.e., the third reference prediction parameter set).

In yet another possible construction method, the obtained BVC may also be adjusted to obtain multiple candidates: i.e., cases are set as: BVC=(BVChor, BVCver), BVC=(BVChor-1, BVCver), BVC=(BVChor, BVCver-1), BVC=(BVChor-1, BVCver-1), BVC=(BVChor+1, BVCver), BVC=(BVChor, BVCver+1), BVC=(BVChor+1, BVCver+1), BVC=(BVChor-1, BVCver+1), BVC=(BVChor+1, BVCver-1), BVC=(BVChor-2, BVCver), BVC=(BVChor, BVCver-2), BVC=(BVChor-2, BVCver-2), BVC=(BVChor+2, BVCver), BVC=(BVChor, BVCver+2), BVC=(BVChor+2, BVCver+2), BVC=(BVChor-2, BVCver+2), BVC=(BVChor+2, BVCver-2), etc., thereby forming multiple BVC candidates, and these candidates are added to the chroma BVC candidate list (i.e., the third reference prediction parameter set).

It should also be noted that, in the embodiments of the present disclosure, for the case where BVL is odd or even, since BVL is a two-dimensional vector, here it specifically refers to that a certain component thereof is odd or even. In addition, the "+1", "-1", "+2", "-2", "+3", "-3" here all refer to integer pixel precision.

It can be understood that, in the embodiments of the present disclosure, when determining the first candidate reference prediction parameter according to the third reference prediction parameter set, it also needs to determine whether a candidate vector parameter in the third reference prediction parameter set is available, that is, one or more available candidate vector parameters need to be selected from the third reference prediction parameter set. Therefore, in some embodiments, determining the first candidate reference prediction parameter corresponding to the second candidate reference prediction parameter according to the third reference prediction parameter set, may include: determining whether one or more candidate vector parameters satisfying a preset availability condition exist in the third reference prediction parameter set; when one or more candidate vector parameters satisfying the preset availability condition exist in the third reference prediction parameter set, determining the first candidate reference prediction parameter according to the one or more candidate vector parameters.

Specifically, in the embodiments of the present disclosure, only when a candidate vector parameter satisfies the preset availability condition, it is possible to determine the candidate vector parameter as the first candidate reference prediction parameter.

In some embodiments, one or more candidate vector parameters satisfy the preset availability condition, including but not limited to:
an offset position indicated by the one or more candidate vector parameters does not exceed a picture boundary;
an offset position indicated by the one or more candidate vector parameters does not exceed a slice boundary;
an offset position indicated by the one or more candidate vector parameters does not cover the current block;
an offset position indicated by the one or more candidate vector parameters does not exceed a preset available region;
an offset position indicated by the one or more candidate vector parameters has been reconstructed.

It should be noted that, in the embodiments of the present disclosure, assuming the position (xCb, yCb) of the current block, for a candidate vector parameter, BVC=(BVChor, BVCver), then a corresponding offset position (xCb+BVChor, yCb+BVCver) is found. Here, that the offset position does not exceed the picture boundary, may also be specifically described by using data such as coordinate position information and a size parameter of the current block. For example, xCb + width + BVChor <= xCb, or yCb + height + BVCver <= yCb.

It should also be noted that, in the embodiments of the present disclosure, for the preset availability condition here, whether to exceed a slice boundary may also be considered. For example, an offset position indicated by one or more candidate vector parameters does not exceed a slice boundary, or an offset position indicated by one or more candidate vector parameters does not exceed a tile boundary.

In the embodiments of the present disclosure, only when all of the above conditions are satisfied, it can be determined that the candidate vector parameter satisfies the preset availability condition, i.e., the candidate vector parameter is available. In a specific embodiment, taking one of the candidate vector parameters as an example, the candidate vector parameter satisfies the preset availability condition, at least including: an offset position indicated by the candidate vector parameter does not exceed the picture boundary; and an offset position indicated by the candidate vector parameter does not exceed the slice boundary; and an offset position indicated by the candidate vector parameter does not cover the current block; and an offset position indicated by the candidate vector parameter does not exceed the preset available region; and an offset position indicated by the candidate vector parameter has been reconstructed.

Exemplarily, FIG. 12 shows a structural schematic diagram of whether an offset position does not cover a current block provided in the embodiments of the present disclosure. As shown in FIG. 12, a block filled with black represents the current block, a region filled with slanted lines represents an available region, and an unfilled region represents an unavailable region. For the current block, if an offset position indicated by the candidate block vector parameter is in the unavailable region, then a case occurs that the offset position covers the current block.

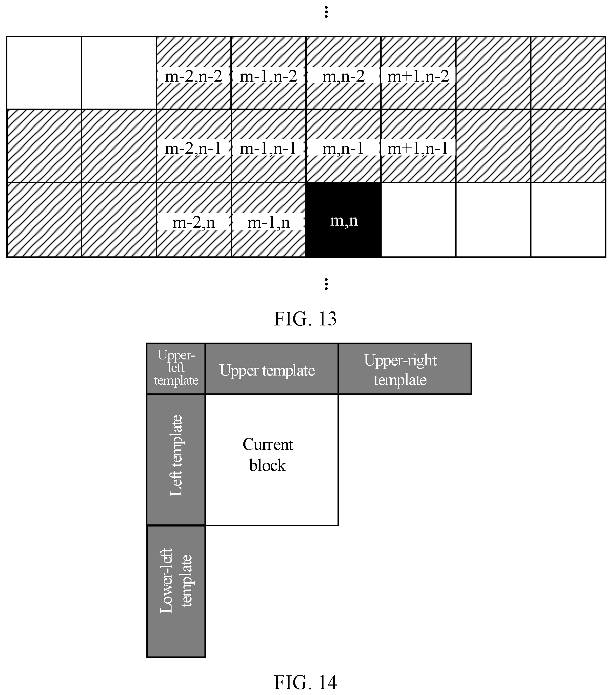

Exemplarily, FIG. 13 shows a structural schematic diagram of whether an offset position exceeds a preset available region provided in the embodiments of the present disclosure. As shown in FIG. 13, a block filled with black represents a current block, a region filled with slanted lines represents an available region, and reference blocks within the available region have all been reconstructed. In the embodiments of the present disclosure, considering the storage capacity of Buffer, generally, these reference blocks adjacent to the current block (m, n), specifically: reference block (m-2, n-2), reference block (m-1, n-2), reference block (m, n-2), reference block (m+1, n-2), reference block (m-2, n-1), reference block (m-1, n-1), reference block (m, n-1), reference block (m+1, n-1), reference block (m-2, n), reference block (m-1, n), etc., may be used as the preset available region.

That is, when determining whether to be available, the position (xCb, yCb) of the current block may be acquired, a chroma BVC = (BVChor, BVCver) may be acquired, a corresponding offset position (xCb + BVChor, yCb + BVCver) may be found, and the following conditions, including but not limited to the following conditions (i.e., the preset availability condition), may be determined; if all conditions are satisfied, the chroma BV is available:
whether the obtained offset position does not exceed the picture boundary;
whether the obtained offset position does not cover the current block, specifically referring to FIG. 12; $xCb + width + BVChor < = xCb , or yCb + height + BVCver < = yCb ;$
whether the obtained offset position does not exceed the preset available region, specifically referring to FIG. 13;
whether the obtained offset position has been reconstructed.

It can also be understood that, in the embodiments of the present disclosure, the construction method of the third reference prediction parameter set includes but is not limited to the multiple cases described above, one of which may be used to construct a candidate list, or multiple methods may be used simultaneously to construct the list, that is, four BVC candidates are determined for each BVL to construct the third reference prediction parameter set. Then, for the four BVC candidates corresponding to each BVL, an available BVC, i.e., the first candidate reference prediction parameter corresponding to the BVL, is decided.

In some embodiments, determining the first candidate reference prediction parameter according to one or more candidate vector parameters, includes: in a case where a candidate vector parameter satisfying the preset availability condition exists in the third reference prediction parameter set, determining the candidate vector parameter satisfying the preset availability condition as the first candidate reference prediction parameter; in a case where multiple candidate vector parameters satisfying the preset availability condition exist in the third reference prediction parameter set, performing a decision on the multiple candidate vector parameters satisfying the preset availability condition to determine the first candidate reference prediction parameter.

It should be noted that, in the embodiments of the present disclosure, if there are one or more candidate vector parameters satisfying the preset availability condition, then when determining the first candidate reference prediction parameter according to the one or more candidate vector parameters, a certain candidate vector parameter satisfying the preset availability condition may be directly determined as the first candidate reference prediction parameter. That is, if there is only one BVC candidate satisfying the preset availability condition in the constructed available BVC candidate list, then the finally selected first candidate reference prediction parameter is this BVC.

It also should be noted that, in the embodiments of the present disclosure, if there are multiple candidate vector parameters satisfying the preset availability condition, then a decision may be performed on the multiple candidate vector parameters satisfying the preset availability condition. Specifically, it may be: determining a first template of the current block; determining respective first matching templates of the multiple candidate vector parameters according to the first template and the multiple candidate vector parameters; in response to the first template and the first matching templates satisfying a preset existence condition, calculating matching errors between the first template of the current block and the first matching templates according to a preset error criterion, to determine respective first cost values of the multiple candidate vector parameters; and determining a minimum cost value from the respective first cost values of the multiple candidate vector parameters, and determining a candidate vector parameter corresponding to the minimum cost value as the first candidate reference prediction parameter.

That is, in the embodiments of the present disclosure, for multiple candidate vector parameters satisfying the preset availability condition, after determining the first cost values corresponding to the multiple candidate vector parameters, one or more candidate vector parameters may be determined from the multiple candidate vector parameters according to the first cost values. Exemplarily, if there are multiple available BVC candidates in the constructed available BVC candidate list, then the decision needs to be performed on these available BVCs to obtain a final BV, the method of the decision includes but is not limited to a method of performing the decision by using a template.

It should be noted that, in the embodiments of the present disclosure, the first template includes one or more sample values in an adjacent decoded region of the current block. Correspondingly, a type of the first template may include at least one of: an upper template, an upper-right template, a left template, a lower-left template, and an upper-left template. The upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

It also should be noted that, in the embodiments of the present disclosure, when selecting the template (the first template of the current block), according to pixel availability of the adjacent region of the current block, it is determined whether a pixel at a template position is available, including reconstructed chroma information. FIG. 14 is a schematic diagram of template types, as shown in FIG. 14, according to a relative position relationship between a template and the current block, the templates may be classified into template types such as an upper template, a left template, an upper-right template, a lower-left template, and an upper-left template. Template sizes of different types of different coding blocks may be fixedly the same or may be different.

For example, for a template size, a same template size may be selected for the current block of any size; the following formulas illustrates a setting condition of a template size, where nTbW and nTbH are a width and a height of the current block respectively, and iTempW and iTempH are a width and a height of the used template respectively: $upper template : \left\{\begin{matrix}iTempW = nTbW \\ iTempH = 1\end{matrix}\right.$ (1) $left template : \left\{\begin{matrix}iTempW = 1 \\ iTempH = nTbH\end{matrix}\right.$ (2)

For example, different template sizes may be selected according to different sizes of the current block, and the following formulas describe a size setting condition of a template, where nTbW and nTbH are the width and height of the current block respectively, and iTempW and iTempH are the width and height of the used template respectively: $upper template : \left\{\begin{matrix}\left\{\begin{matrix}iTempW = nTbW \\ iTempH = 2\end{matrix}, min\left(nTbW, nTbH\right)\leq 4\right. \\ \left\{\begin{matrix}iTempW = nTbW \\ iTempH = 4\end{matrix}, min\left(nTbW, nTbH\right)>4\right.\end{matrix}\right.$ (3) $left template : \left\{\begin{matrix}\left\{\begin{matrix}iTempW = 2 \\ iTempH = nTbH\end{matrix},min\left(nTbW, nTbH\right)\leq 4\right. \\ \left\{\begin{matrix}iTempW = 4 \\ iTempH = nTbH\end{matrix},min\left(nTbW, nTbH\right)>4\right.\end{matrix}\right.$ (4) where $Min \left(x, y\right) = \left\{\begin{matrix}x , & x \leq y \\ y , & x > y\end{matrix}\right.$.

For example, different template sizes may also be selected according to a number of pixels in the current block, and the following formulas illustrate a size setting condition of a template, where nTbW and nTbH are a width and a height of the current block respectively, nTbW×nTbH is the number of pixels of the current block, and iTempW and iTempH are a width and a height of the used template respectively: $upper template : \left\{\begin{matrix}\left\{\begin{matrix}iTempW = nTbW \\ iTempH = 2\end{matrix}, nTbW\times nTbH\leq 16\right. \\ \left\{\begin{matrix}iTempW = nTbW \\ iTempH = 4\end{matrix}, nTbW\times nTbH>16\right.\end{matrix}\right.$ (5) $left template : \left\{\begin{matrix}\left\{\begin{matrix}iTempW = 2 \\ iTempH = nTbH\end{matrix}, nTbW\times nTbH\leq 16\right. \\ \left\{\begin{matrix}iTempW = 4 \\ iTempH = nTbH\end{matrix}, nTbW\times nTbH>16\right.\end{matrix}\right.$ (6)

In some embodiments, when determining a first matching template according to multiple candidate vector parameters, taking the position of the current point as a starting point, a region that is indicated by the multiple candidate vector parameters, has a same shape as the first template and contains a same number of sample values, is determined as the first matching template.

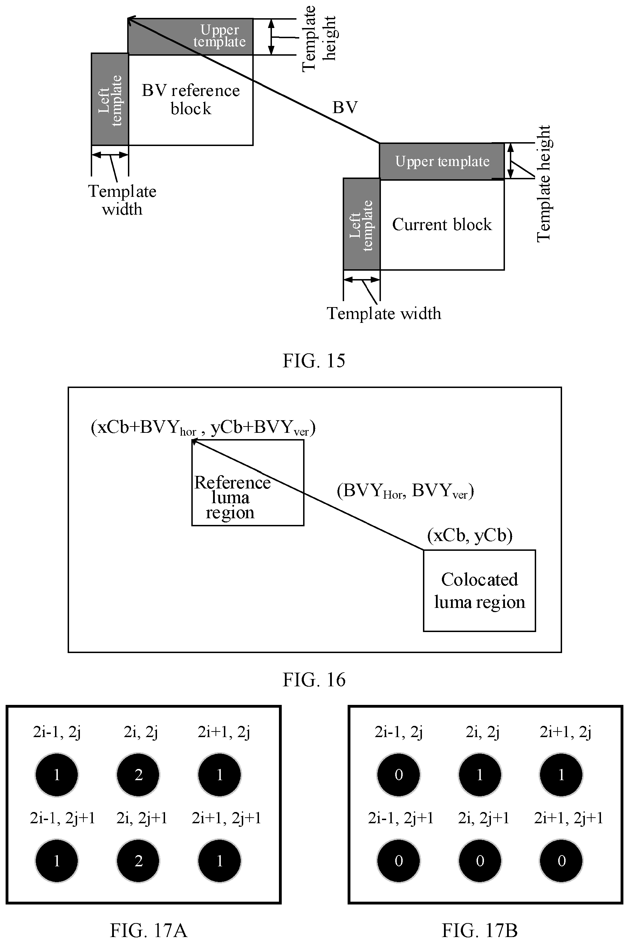

Exemplarily, in the embodiments of the present disclosure, when determining the first matching template, motion compensation is performed for the obtained multiple BVC candidates (i.e., the candidate block vector parameters satisfying the preset availability condition) by using the first template of the current block, to obtain a template at the corresponding BV (the first matching template). FIG. 15 is a schematic diagram of template motion compensation, as shown in FIG. 15, if the BV (BVC candidate) is available, motion compensation is performed by using the first template and the BV, to obtain a template at the corresponding BV, i.e., the first matching template.

It can also be understood that, in the embodiments of the present disclosure, the preset error criterion may include but is not limited to any one of: sum of absolute differences (SAD), sum of absolute transformed differences (SATD), sum of squared errors (SSE), mean absolute difference (MAD), mean absolute error (MAE), mean squared error (MSE), etc.

Exemplarily, in the embodiments of the present disclosure, when performing the cost calculation, i.e., when determining the first cost values, there are multiple selections for a cost function for calculating a cost of a template region, i.e., there may be multiple selections for the preset error criterion. For example, an evaluation criterion such as sum of absolute differences (SAD), sum of absolute transformed differences (SATD), sum of squared errors (SSE), mean absolute difference (MAD), mean absolute error (MAE), mean squared error (MSE), etc., may be selected. A certain evaluation criterion mentioned in the following content may be selected from the above criteria, and taking an evaluation criterion of SAD as an example, a calculation formula is as follows: $SAD = {\sum }_{i = 0}^{predTempSizeW - 1} {\sum }_{j = 0}^{predTempSizeH - 1} \left.\left|predTemp\left[i\right]\left[j\right]-recTempC\left[i\right]\left[j\right]\right|\right)$ (7) where *predTempSizeW* is the width of the template, *predTempSizeH* is the height of the template, *predTemp*[*i*][*j*] is a pixel point of the template at the BV, and *recTempC*[*i*][*j*] is a pixel point of the template of the current block.

Furthermore, in some embodiments, the method may further include: in response to the first template and the first matching templates not satisfying the preset existence condition, determining a first candidate vector parameter satisfying the preset availability condition in the third reference prediction parameter set as the first candidate reference prediction parameter; or, in response to the first template and the first matching templates not satisfying the preset existence condition, determining a candidate vector parameter satisfying the preset availability condition at a second position in the third reference prediction parameter set as the first reference prediction parameter.

That is, if the first template and the first matching template satisfy the preset existence condition, then a matching error between the first template of the current block and the first matching template may be calculated according to a preset error criterion, so as to select a candidate vector parameter corresponding to a minimum cost value as a first candidate reference prediction parameter; if the first template and the first matching template do not satisfy the preset existence condition, then a first candidate vector parameter satisfying the preset availability condition or a candidate vector parameter at a specified position in the third reference prediction parameter set may be determined as the first candidate reference prediction parameter.

Exemplarily, for whether the first template and the first matching template satisfy the preset existence condition, there are the following cases regarding template usage when calculating costs (i.e., cost values):
First type: both the upper template and the left template of the current block exist, and both the upper template and the left template at the corresponding BV exist, and in the case, both the upper template and the left template are available.
Second type: both the upper template and the left template of the current block exist, and only the upper template at the corresponding BV exists, and in this case, there are two methods: method 1: the left template at the corresponding BV does not exist and is directly not used, i.e., only the upper template is used for calculation. Method 2: the left template at the corresponding BV does not exist, and the leftmost template width column inside the reference block is used to replace the left template, i.e., the upper template and the left template are used for calculation.
Third type: both the upper template and the left template of the current block exist, and only the left template at the corresponding BV exists, and in this case, there are two methods: method 1: the upper template at the corresponding BV does not exist and is directly not used, i.e., only the left template is used for calculation. Method 2: the upper template at the corresponding BV does not exist, and the uppermost template height row inside the reference block is used to replace the upper template, i.e., the upper template and the left template are used for calculation.
Fourth type: only the upper template of the current block exists, and in this case, there are three methods: method 1: the upper template at the corresponding BV does not exist and is directly not used, and in this case, the finally selected BV is a first BVC or a BVC at a specified position in the BVC candidate list. Method 2: the upper template at the corresponding BV does not exist, and the uppermost template height row inside the reference block is used to replace the upper template. Method 3: the upper template at the corresponding BV exists, and is directly used.
Fifth type: only the left template of the current block exists, and in this case, there are three methods: method 1: the left template at the corresponding BV does not exist and is directly not used, and in this case, the finally selected BV is a first BVC or a BVC at a specified position in the BVC candidate list. Method 2: the left template at the corresponding BV does not exist, and the leftmost template width column inside the reference block is used to replace the left template. Method 3: the left template at the corresponding BV exists, and is directly used.
Sixth type: neither the upper template nor the left template of the current block exists, and in this case, the finally selected BV is a first BVC or a BVC at a specified position in the BVC candidate list.

Exemplarily, in the embodiments of the present disclosure, when determining the first candidate reference prediction parameter according to the respective first cost values of the multiple candidate vector parameters, for other cases except for cases where costs cannot be calculated, a cost for each candidate in the BVC candidate list is calculated and sorted, and the sort method includes but is not limited to sort methods such as bubble sort, selection sort, insertion sort, shell sort, merge sort, quick sort, radix sort, heap sort, counting sort, bucket sort, etc. Any number of BVCs with the minimum cost are selected as the finally selected BV (the first candidate reference prediction parameter), so as to perform BV-based chroma prediction. It is also to be noted that, when performing the cost value calculation for multiple candidate vector parameters, a cost may be calculated for each candidate vector parameter, and the candidate vector parameter with the minimum cost is always retained, and in this case, the list may not be needed, and even the sort may not be needed.

In this way, after obtaining one or more first candidate reference prediction parameters, the first reference prediction parameter set may be constructed.

In S603: a first color component reference sample value and a second color component reference sample value of the current block are determined according to the first reference prediction parameter set.

It is to be noted that, in the embodiments of the present disclosure, the "reference prediction parameter" here is a parameter used for deriving a reference sample value of the current block, and may specifically be a vector parameter (e.g., BV or MV). Then, a mapping relationship between the first color component and the second color component may be derived, according to these reference sample values (Samples).

It is also to be noted that, if all candidate vector parameters in the third reference prediction parameter set are unavailable, i.e., all candidate block vector parameters in the third reference prediction parameter set do not satisfy the preset availability condition, then there is no available first candidate reference prediction parameter, and thus there is no first reference prediction parameter set. In this case, the method may further include: in response to all candidate vector parameters in the third reference prediction parameter set not satisfying the preset availability condition, determining a first color component reconstructed sample and a second color component reconstructed sample at a third position of the current block; and determine a first color component reference sample value and a second color component reference sample value of the current block according to the first color component reconstructed sample and the second color component reconstructed sample at the third position.

That is, in the embodiments of the present disclosure, a luma pixel and a chroma pixel at a designated position may also be acquired, where the designated position includes but is not limited to an adjacent row and an adjacent column of the current block, so as to obtain the first color component reference sample value and the second color component reference sample value of the current block.

In some embodiments, determining the first color component reference sample value and the second color component reference sample value of the current block according to the first reference prediction parameter set, may include: determining first color component reconstructed samples and second color component reconstructed samples respectively indicated by the one or more first candidate reference prediction parameters, according to the first reference prediction parameter set; determining a first color component reconstructed sample and a second color component reconstructed sample at a third position of the current block; and determining the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

In the embodiments of the present disclosure, determining first color component reconstructed samples and second color component reconstructed samples respectively indicated by the one or more first candidate reference prediction parameters, according to the first reference prediction parameter set, may include: determining a position of the current block; scaling the position of the current block to determine a position of a collocated first color component region of the current block; and scaling the first candidate reference prediction parameter to determine a scaled reference prediction parameter of the collocated first color component region of the current block; determining a reference block of the first color component according to the position of the first color component region and the scaled reference prediction parameter, and determining a first color component reconstructed sample indicated by the first candidate reference prediction parameter according to the reference block of the first color component; and determining a reference block of the second color component according to the position of the current block and the first candidate reference prediction parameter, and determining a second color component reconstructed sample indicated by the first candidate reference prediction parameter according to the reference block of the second color component.

In the embodiments of the present disclosure, the position of the first color component region may be obtained by scaling the position of the current block according to the preset sampling format; and the scaled reference prediction parameter of the first color component region may also be obtained by scaling the first candidate reference prediction parameter according to the preset sampling format. Here, for the preset sampling format, reference may be made to the above-mentioned Table 4. It needs to be noted that the scaled reference prediction parameter may be obtained by enlarging the chroma BV; however, considering that the luma BV may have a precision loss, the luma BV obtained by enlarging the chroma BV is not necessarily equal to the original luma BV (the second candidate reference prediction parameter).

Exemplarily, the current block is a chroma block, and the collocated first color component region is a collocated luma region. For acquiring the first color component reference sample value (luma reference sample), first, the position of the current block, i.e., a position of an upper-left corner chroma sample of the current block relative to an upper-left corner chroma sample of the current picture, chromaPos = (x, y), is acquired; chromaPos is scaled according to the color sampling format shown in Table 4, to obtain a collocated luma region position lumaPos = (xCb, yCb) corresponding to the current block.

Exemplarily, a chroma BV = (BVChor, BVCver) is acquired, and the chroma BV is scaled according to the color sampling format shown in Table 4, to obtain a luma BV = (BVYhor, BVYver) of the collocated luma region corresponding to the current block. The collocated luma region position lumaPos = (xCb, yCb) corresponding to the current block is acquired, the luma BV = (BVYhor, BVYver) is acquired, and an offset position (xCb + BVYhor, yCb + BVYver) corresponding to the collocated luma region corresponding to the current block is found, as shown in FIG. 16.

In a specific implementation, after obtaining the luma sample at the offset position, it may be downsampled to obtain a luma reference sample. In some embodiments, determining the first color component reconstructed sample indicated by the first candidate reference prediction parameter according to the reference block of the first color component, may include: performing downsampling processing on the reference block of the first color component to determine the first color component reconstructed sample indicated by the first candidate reference prediction parameter, so that a resolution of the first color component reconstructed sample is same as a resolution of the second color component reconstructed sample.

It should be noted that, in the embodiments of the present disclosure, performing downsampling processing on the reference block of the first color component to determine the first color component reconstructed sample indicated by the first candidate reference prediction parameter, may include: determining a downsampling method of the current block; and performing downsampling processing on the reference block of the first color component according to the downsampling method, to determine the first color component reconstructed sample indicated by the first candidate reference prediction parameter.

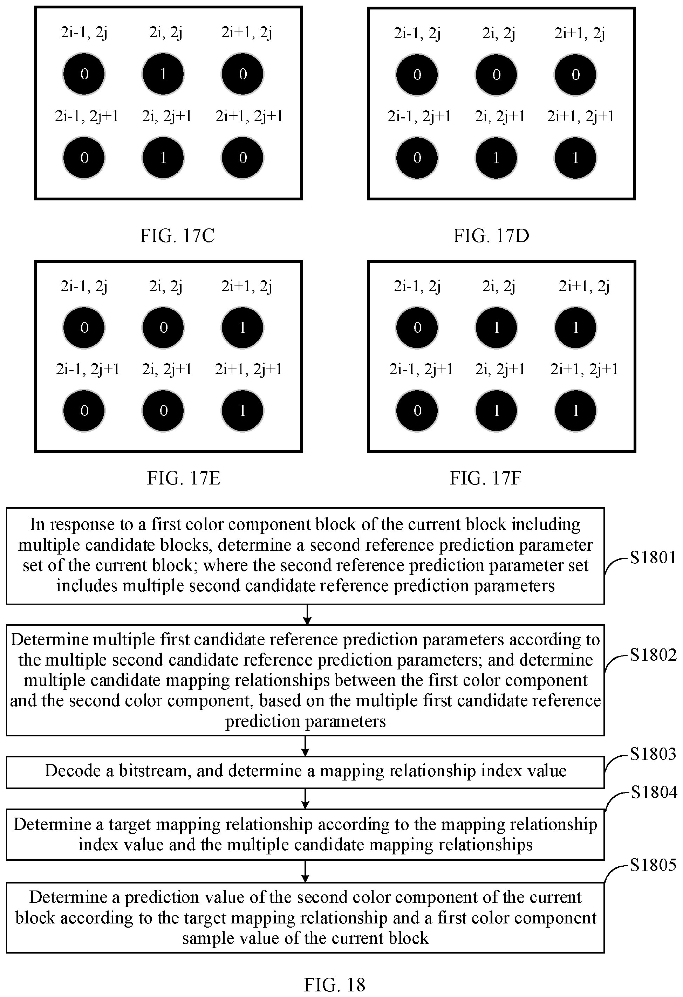

It should also be noted that, in the embodiments of the present disclosure, since resolutions of the luma sample and the chroma sample are inconsistent, downsampling processing needs to be performed on the luma sample so that a resolution of the downsampled luma sample is the same as that of the chroma sample. Here, for determining the downsampling method of the current block, the following several sampling methods may compete with each other or a certain sampling method may be used by default, but the following six sampling methods are included and not limited. Exemplarily, it is assumed that the luma sample before downsampling is recBvBefDownLuma, a width of a storage buffer is iRecRefLumaStride, and the downsampled luma sample is recBvAftDownLuma, then the downsampled luma sample at a position (i, j) is:
downsampling method 1 (as shown in FIG. 17A): $recBvAftDownLuma \left[i\right] \left[j\right] = \left(\begin{matrix}recBvBefDownLuma \left[2*i\right] * 2 \\ + recBvBefDownLuma \left[2*i+1\right] \\ + recBvBefDownLuma \left[2*i-1\right] \\ + recBvBefDownLuma \left[2*i+iRecRefLumaStride\right] * 2 \\ + recBvBefDownLuma \left[2*i+1+iRecRefLumaStride\right] \\ + recBvBefDownLuma \left[2*i-1+iRecRefLumaStride\right] + 4\end{matrix}\right) ≫ 3 ;$
downsampling method 2 (as shown in FIG. 17B): $recBvAftDownLuma \left[i\right] \left[j\right] = \left(\begin{matrix}recBvBefDownLuma \left[2*i\right] \\ + recBvBefDownLuma \left[2*i+1\right] + 1\end{matrix}\right) ≫ 1 ;$
downsampling method 3 (as shown in FIG. 17C): $recBvAftDownLuma \left[i\right] \left[j\right] = \left(\begin{matrix}recBvBefDownLuma \left[2*i\right] \\ + recBvBefDownLuma \left[2*i+iRecRefLumaStride\right] + 1\end{matrix}\right) ≫ 1 ;$
downsampling method 4 (as shown in FIG. 17D): $recBvAftDownLuma \left[i\right] \left[j\right] = \left(\begin{matrix}recBvBefDownLuma \left[2*i+iRecRefLumaStride\right] \\ + recBvBefDownLuma \left[2*i+1+iRefLumaStride\right] + 1\end{matrix}\right) ≫ 1 ;$
downsampling method 5 (as shown in FIG. 17E): $recBvAftDownLuma \left[i\right] \left[j\right] = \left(\begin{matrix}recBvBefDownLuma \left[2*i+1\right] \\ + recBvBefDownLuma \left[2*i+1+iRecRefLumaStride\right] + 1\end{matrix}\right) ≫ 1 ;$
downsampling method 6 (as shown in FIG. 17F): $recBvAftDownLuma \left[i\right] \left[j\right] = \left(\begin{matrix}recBvBefDownLuma \left[2*i\right] \\ + recBvBefDownLuma \left[2*i+1\right] \\ + recBvBefDownLuma \left[2*i+iRecRefLumaStride\right] \\ + recBvBefDownLuma \left[2*i+1+iRecRefLumaStride\right] + 2\end{matrix}\right) ≫ 2 .$

In some embodiments, determining the downsampling method of the current block, may include: decoding a bitstream, to determine a value of filter identification information; and determining the downsampling method of the current block according to the value of the filter identification information.

That is, the decoder side may determine the value of the filter identification information by decoding the bitstream, and then determine the downsampling method of the current block. Here, the filter identification information may be represented by filter_idx, and the value of the filter identification information may be 0, 1, 2, 3, 4, 5, etc. In this way, after determining the downsampling method of the current block, the downsampled luma reference sample recBvAftDownLuma at the BV corresponding to the collocated luma region corresponding to the current block may be acquired through downsampling.

Furthermore, for the chroma sample of the current block, first, the position (xCbC, yCbC) of the current block is acquired, a chroma BV=(BVChor, BVCver) is acquired, a corresponding offset position (xCbC+ BVChor, yCbC + BVCver) is found, i.e., a chroma reference sample recBvChroma at the BV corresponding to the current block is acquired.

In some embodiments, for determining the first color component reconstructed sample and the second color component reconstructed sample at the third position of the current block, the method may include: determining a first template of the current block; and determine the first color component reconstructed sample and the second color component reconstructed sample at the third position, according to the first template.

It should be noted that, in the embodiments of the present disclosure, the first template includes one or more sample values in an adjacent decoded region of the current block. Correspondingly, a type of the first template may include at least one of: an upper template, an upper-right template, a left template, a lower-left template, and an upper-left template. The upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

That is, for the first color component reference sample value and the second color component reference sample value of the current block, not only first color component reconstructed samples and second color component reconstructed samples respectively indicated by one or more first candidate reference prediction parameters are included, but also the first color component reconstructed sample and the second color component reconstructed sample at the third position (e.g., the first template region) of the current block are included. The third position represents any designated position of the current block, and the position includes but is not limited to an adjacent row and an adjacent column of the current block.

In this way, the mapping relationship between the luma and the chroma may be constructed, according to the luma reference sample recBvAftDownLuma, the chroma reference sample recBvChroma, as well as the reconstructed luma sample and the reconstructed chroma sample at the third position.

In S604: a mapping relationship between the first color component and the second color component is determined according to the first color component reference sample value and the second color component reference sample value.

It should be noted that, in a possible implementation, determining the mapping relationship between the first color component and the second color component according to the first color component reference sample value and the second color component reference sample value, may include: determining a first Look Up Table according to the first color component reference sample value and the second color component reference sample value, where the first Look Up Table is used for recording a value of the second color component that corresponds to an index key as the first color component.

It should also be noted that, in another possible implementation, determining the mapping relationship between the first color component and the second color component according to the first color component reference sample value and the second color component reference sample value, may include: determining a first discrete model according to the first color component reference sample value and the second color component reference sample value, where the first discrete model is used for indicating the mapping relationship between the first color component and the second color component.

That is, the mapping relationship here may be a Look Up Table (LUT). The index key in the Look Up Table may be the first color component, and the value of the Look Up Table may be the second color component, i.e., value = LUT[key]. Alternatively, the mapping relationship may also be a discrete model, used to represent a mapping relationship between key and value (key-value).

Exemplarily, it is assumed that the luma component is the key and the chroma component is the value, then each pair of key-value in the mapping relationship may be constructed in a manner including but not limited to: $LUT \left[recBvAftDownLuma\left[i\right]\left[j\right]\right] = recBvChroma \left[i\right] \left[j\right]$ (8)

It should also be noted that, in the embodiments of the present disclosure, the first color component parameter sample may also be limited within a preset sample range. In some embodiments, the method may further include: performing mapping processing on the first color component reference sample value to make the first color component reference sample value be within the preset sample range.

In the embodiments of the present disclosure, the preset sample range may be [0, (1<<bitdepth)-1], where bitdepth represents a bit depth. Exemplarily, the preset sample range may be a range of [0,255], [0,511], etc., but any limitation is not imposed. If there are multiple sample ranges, a rate-distortion cost method may be used to select one of them as a final preset sample range.

Exemplarily, taking a video with the bit depth greater than 8 bits as an example, it is assumed that the bit depth of the video is 10 bits, then the sample range is [0, 1023]. For the key value recBvAftDownLuma, it may be mapped to a preset sample range of [0, 255] or [0, 511].

Furthermore, in some embodiments, the method may further include: in a case where a same first reference sample value in the first color component reference sample values corresponds to different multiple second reference sample values in the second color component reference sample values, performing overwriting processing sequentially according to a sample order, and using a last second reference sample value as a value having a mapping relationship with the first reference sample value.

Furthermore, in some embodiments, the method may further include: in a case where a same first reference sample value in the first color component reference sample values corresponds to different multiple second reference sample values in the second color component reference sample values, performing an average calculation on the multiple second reference sample values, and using an obtained average value as a value having a mapping relationship with the first reference sample value.

That is, in the embodiments of the present disclosure, for different chroma values having the same key value in the mapping relationship, the entries with the same key value may be overwritten sequentially in the sample order, or an operation such as averaging may be used. Additionally, in the mapping relationship, the initialization setting of LUT[ ] is -1, i.e., an unavailable value. The "overwrite" mainly means that if there is a same key value later, the new value will be used for storage; but it is not limited thereto, all values may be stored and then an average value thereof may be obtained as the value corresponding to the key.

It can be understood that, in the embodiments of the present disclosure, other methods may also be used, for obtaining the first color component reference sample value and the second color component reference sample value used to construct the mapping relationship, which are exemplarily described below in conjunction with several implementations.

In another specific implementation, the luma sample is not downsampled, and in this case, the chroma sample may be upsampled to obtain a chroma reference sample. In some embodiments, determining the second color component reconstructed sample indicated by the first candidate reference prediction parameter according to the reference block of the second color component, may include: performing upsampling processing on the reference block of the second color component to determine the second color component reconstructed sample indicated by the first candidate reference prediction parameter, so that a resolution of the first color component reconstructed sample is same as a resolution of the second color component reconstructed sample.

That is, in the embodiments of the present disclosure, after acquiring the reconstructed luma sample recBvBefDownLuma of the collocated luma region, downsampling is not performed. In this case, after acquiring the reconstructed chroma sample recBvChroma at the BV corresponding to the current block, upsampling needs to be performed, including but not limited to linear interpolation and other methods, to obtain the reconstructed chroma sample recBvChromaUp with the same size as the reconstructed luma sample at the BV.

In this way, the reconstructed luma sample recBvBefDownLuma at the BV is used as a luma reference sample, and the obtained upsampled reconstructed chroma sample recBvChromaUp is used as a chroma reference sample; then, the mapping relationship between the luma and the chroma is constructed based on the luma reference sample and the chroma reference sample.

Correspondingly, in the embodiments of the present disclosure, downsampling processing also needs to be performed on the prediction value of the second color component of the current block. That is, if the reconstructed chroma samples of the current block are upsampled when constructing the mapping relationship, then when performing prediction from luma to chroma on the current block according to the mapping relationship, it also needs to perform a downsampling operation on the obtained chroma prediction value to obtain the final chroma prediction value of the current block. The downsampling method includes but is not limited to average downsampling, etc.

In another specific implementation, the method may further include: determining a first template of the current block; determining a first color component reference sample value and a second color component reference sample value of the current block according to the first template.

In the embodiments of the present disclosure, the first color component reference sample value and the second color component reference sample value used for constructing the mapping relationship may also include the first color component reference sample value and the second color component reference sample value determined by the first template of the current block. Specifically, a collocated first color component region template of the first template may be determined according to the first template of the current block; then, the first color component reference sample value may be determined according to a reconstructed sample in the first color component region template; and the second color component reference sample value may be determined according to a reconstructed sample in the first template. The first template includes one or more reconstructed samples in an adjacent decoded region of the current block.

Exemplarily, a chroma reference sample may be acquired according to a current chroma template of the current block; after determining a collocated luma region template of the current chroma template, a luma reference sample may be acquired according to the collocated luma region template. Then, combining the luma reference samples and the chroma reference samples obtained in the above embodiments, the mapping relationship between the luma and the chroma is constructed according to these luma reference samples and chroma reference samples.

In S605: a prediction value of the second color component of the current block is determined according to the mapping relationship and a first color component sample value of the current block.

It should be noted that, in the embodiments of the present disclosure, determining the first color component sample value of the current block, may include: determining a reconstructed pixel sample of a collocated first color component region of the current block; determining the first color component sample value of the current block based on the reconstructed pixel sample of the first color component region. The reconstructed pixel sample of the first color component region may be directly used as the first color component sample value of the current block, or filtering processing may be performed on the reconstructed pixel sample of the first color component region and the filtered reconstructed pixel sample may be used as the first color component sample value of the current block, which is not limited in any way here.

Exemplarily, in the embodiments of the present disclosure, the filtering processing is downsampling processing. Here, the reconstructed luma sample recBefDownLuma at the collocated luma region position lumaPos = (xCb, yCb) corresponding to the current block may be acquired, the luma sample is downsampled to obtain a downsampled reconstructed luma sample recAftDownLuma, and the downsampled reconstructed luma sample is used as the first color component sample value of the current block. In addition, if the mapping processing of the sample range has been performed on the luma reference sample, then it also needs to perform the same mapping processing of the sample range on the downsampled reconstructed luma sample, so as to obtain the first color component sample value of the current block.

In some embodiments, determining the prediction value of the second color component of the current block according to the mapping relationship and the first color component sample value of the current block, may include: in a case where a first color component value equal to the first color component sample value is found in the mapping relationship, determining a value of the second color component corresponding to the first color component value as the prediction value of the second color component of the current block.

Exemplarily, in the embodiments of the present disclosure, it is assumed that the predicted value of the current block is predSamples, then for predSamples [cIdx][x][y], the variable cIdx specifies a color component index of the current block, and the following prediction method may be used here:
deriving the chroma prediction value by using the mapping relationship (the discrete model) constructed in the above embodiments, with reference to the collocated luma value Yc.

In some embodiments, for determining the prediction value of the second color component of the current block, the method may further include: in a case where no first color component value equal to the first color component sample value is found in the mapping relationship, performing modification processing on the first color component sample value to determine a first color component modification value, and continuing to find in the mapping relationship for whether there is a first color component value equal to the first color component modification value.

In a specific embodiment, performing modification processing on the first color component reconstructed value to determine the first color component modification value, may include: performing an offset calculation on the first color component sample value according to one or more preset offset values to determine the first color component modification value.

In the embodiments of the present disclosure, the offset values may be +1, -1, +2, -2, +3, -3, etc., and both the number and specific values of the offset values are not limited. In addition, for the modification processing of the first color component reconstructed value, the multiple offset values may also be set in a certain order, for example, the modification processing is performed in the order of {+1, -1, +2, -2, +3, -3}.

Exemplarily, in the embodiments of the present disclosure, for the mapping relationship constructed in the above embodiments, if Yc is not found in the input luma set therein, the processing method includes but is not limited to: performing modification processing on Yc in the order of {Yc+1, Yc-1, Yc+2, Yc-2, Yc+3, Yc-3}, then performing a matching check in the input luma set according to the modified Yc, and then determining a value corresponding to the modified Yc as the chroma prediction value of the current block.

In some embodiments, for determining the prediction value of the second color component of the current block, the method further includes: in a case where no first color component value equal to the first color component modification value is found in the mapping relationship, performing an average calculation on the second color component reference sample values, and determining an obtained average value as the prediction value of the second color component of the current block.

Exemplarily, in the embodiments of the present disclosure, for the mapping relationship constructed in the above embodiments, if Yc is not found in the input luma set therein, the processing method includes but is not limited to: performing modification processing on Yc in the order of {Yc+1, Yc-1, Yc+2, Yc-2, Yc+3, Yc-3}; if all the above-mentioned modified Yc cannot be matched in the mapping relationship, then the chroma prediction value may be set to an average value of the reconstructed chroma sample recBvChroma at the corresponding BV.

In some embodiments, for determining the prediction value of the second color component of the current block, the method further includes: determining a first initial prediction value of the second color component of the current block according to the mapping relationship and the first color component sample value of the current block; and performing a modification operation on the first initial prediction value to determine the prediction value of the second color component of the current block.

It should be noted that, in the embodiments of the present disclosure, for performing the modification operation on the first initial prediction value obtained according to the mapping relationship, the modification operation here may include a clip operation, a filtering operation, a weighting operation with a prediction value obtained from another prediction mode, etc., which is not limited thereto in any way.

In a specific embodiment, performing the modification operation on the first initial prediction value to determine the prediction value of the second color component of the current block, includes: performing prediction processing on the second color component of the current block according to a first preset mode, to determine a second initial prediction value of the second color component of the current block; and performing a weighting calculation on the first initial prediction value and the second initial prediction value to determine the prediction value of the second color component of the current block. It should be noted that, in the embodiments of the present disclosure, the first preset mode at least includes one of: a PLANAR mode, a DM mode, a DC mode, and a CCLM mode. That is, performing the modification operation on the first initial prediction value obtained according to the mapping relationship, may include but is not limited to, performing weighting with the CCLM-like mode or another prediction mode, so as to obtain the chroma prediction value of the current block.

In another specific embodiment, performing the modification operation on the first initial prediction value to determine the prediction value of the second color component of the current block, may include: limiting the first initial prediction value within a preset value range, which may also be referred to as a "clip operation". It should be noted that, in the embodiments of the present disclosure, a lower limit value of the preset value range is a minimum prediction value (min), and an upper limit value of the preset value range is a maximum prediction value (max). If the first initial prediction value is within the preset value range, the first initial prediction value may be used as the chroma prediction value of the current block; if the first initial prediction value is greater than max, then max may be used as the chroma prediction value of the current block; if the first initial prediction value is less than min, then min may be used as the chroma prediction value of the current block.

In some embodiments, for determining the prediction value of the second color component of the current block, the method further includes: in response to the first reference prediction parameter set including multiple first candidate reference prediction parameters, determining multiple third initial prediction values of the second color component of the current block; and performing a weighting calculation on the multiple third initial prediction values, to determine the prediction value of the second color component of the current block.

It should be noted that, in the embodiments of the present disclosure, if multiple BVs (first candidate reference prediction parameters) are decided in the above embodiments, then multiple third initial prediction values may be obtained according to the multiple BVs; then, the multiple third initial prediction values are weighted, and the weighted prediction values are taken as the chroma prediction value of the current block; or, the weighted prediction values may continue to be further modified, including but not limited to being weighted with the CCLM-like mode or another prediction mode, so as to obtain the chroma prediction value of the current block.

In a specific embodiment, for determining the prediction value of the second color component of the current block, the method may further include: in response to the first reference prediction parameter set including multiple first candidate reference prediction parameters, determining first color component reconstructed samples and second color component reconstructed samples respectively indicated by the multiple first candidate reference prediction parameters; determining multiple mapping relationships between the first color component and the second color component, according to the first color component reconstructed samples and the second color component reconstructed samples respectively indicated by the multiple first candidate reference prediction parameters; determining multiple third initial prediction values of the second color component of the current block according to the multiple mapping relationships; and performing a weighting calculation on the multiple third initial prediction values to determine the prediction value of the second color component of the current block.

It should be noted that, in the embodiments of the present disclosure, multiple blocks of the collocated luma region are acquired, and the positions of the multiple blocks include but are not limited to the following positions, as shown in FIG. 11. The multiple blocks may correspond to multiple luma BVs, the multiple luma BVs are respectively used to construct candidate items of respective chroma BVC candidate lists, and the availability of BVs in the candidate lists is determined, so as to decide a BV or multiple BVs, or to decide multiple groups of BVs through clustering; for the multiple groups of BVs, multiple mapping tables LUTs between the luma and the chroma may be constructed, and in this way, multiple initial chroma prediction values may be obtained according to the multiple mapping tables LUTs, and the chroma prediction value of the current block may be obtained through a weighting calculation.

In some embodiments, for determining the prediction value of the second color component of the current block, as shown in FIG. 18, the method may include S1801 to S1805.

In S1801: in response to a first color component block of the current block including multiple candidate blocks, a second reference prediction parameter set of the current block is determined; where the second reference prediction parameter set includes multiple second candidate reference prediction parameters.

In S1802: multiple first candidate reference prediction parameters are determined according to the multiple second candidate reference prediction parameters; and multiple candidate mapping relationships between the first color component and the second color component are determined based on the multiple first candidate reference prediction parameters.

In S1803: a bitstream is decoded to determine a mapping relationship index value.

In S1804: a target mapping relationship is determined according to the mapping relationship index value and the multiple candidate mapping relationships.

In S1805: the prediction value of the second color component of the current block is determined according to the target mapping relationship and the first color component sample value of the current block.

It should be noted that, in the embodiments of the present disclosure, multiple mapping tables LUTs between the luma and the chroma may be constructed, and then a syntax element is used to indicate a selected target mapping table LUT. Exemplarily, multiple blocks of the collocated luma region are acquired, and positions of the multiple blocks include but are not limited to the following positions, as shown in FIG. 11. The multiple blocks may correspond to multiple luma BVs, and the multiple luma BVs are respectively used to construct candidate items of respective chroma BVC candidate lists, and the availability of the BVs in the candidate lists is determined, so as to decide a BV or multiple BVs, or to decide multiple groups of BVs through clustering; the respective available chroma BVCs of the multiple blocks can respectively construct a mapping table LUT; at the decoder side, the mapping relationship index value may be determined by decoding the corresponding syntax element; then the target mapping relationship may be determined according to the mapping relationship index value, thereby determining the chroma prediction value of the current block. It should be noted that the number of mapping relationships constructed here may be arbitrarily designated, for example, the number may be set to 4, but any limitation is not imposed.

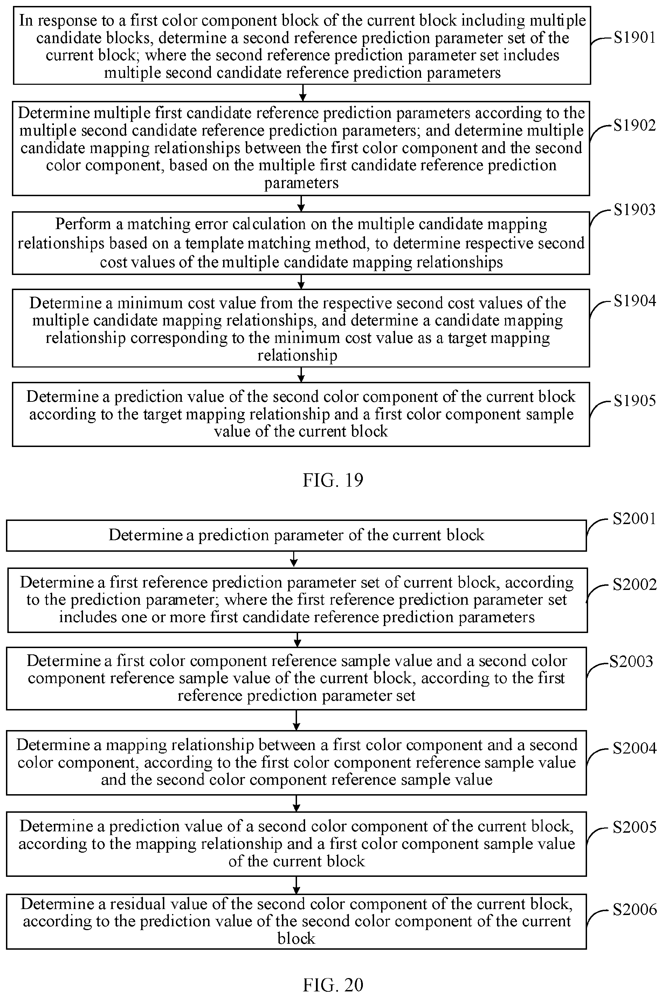

In some embodiments, for determining the prediction value of the second color component of the current block, as shown in FIG. 19, the method may include S1901 to S1905.

In S1901: in response to a first color component block of the current block including multiple candidate blocks, a second reference prediction parameter set of the current block is determined; where the second reference prediction parameter set includes multiple second candidate reference prediction parameters.

In S1902: multiple first candidate reference prediction parameters are determined according to the multiple second candidate reference prediction parameters; and multiple candidate mapping relationships between the first color component and the second color component are determined based on the multiple first candidate reference prediction parameters.

In S1903: a matching error calculation is performed on the multiple candidate mapping relationships based on a template matching method, to determine respective second cost values of the multiple candidate mapping relationships.

In S1904: a minimum cost value is determined from the respective second cost values of the multiple candidate mapping relationships, and a candidate mapping relationship corresponding to the minimum cost value is determined as a target mapping relationship.

In S1905: the prediction value of the second color component of the current block is determined according to the target mapping relationship and the first color component sample value of the current block.

In a specific embodiment, performing the matching error calculation on the multiple candidate mapping relationships based on the template matching method, to determine the respective second cost values of the multiple candidate mapping relationships, includes: determining a first template of the current block; determining a reconstructed pixel sample value of a collocated first color component region template of the first template; determining respective prediction values of the second color component of the first template under the multiple mapping relationships, according to the multiple candidate mapping relationships and the reconstructed pixel sample value of the first color component region template; and performing a cost calculation according to a reconstructed value of the second color component of the first template and the respective prediction values of the second color component of the first template under the multiple mapping relationships, to determine the respective second cost values of the multiple candidate mapping relationships.

It should be noted that, in the embodiments of the present disclosure, multiple mapping tables LUTs between the luma and the chroma may be constructed, and then a template is used to select which mapping table LUT to use. Exemplarily, multiple blocks of the collocated luma region are acquired, and positions of the multiple blocks include but are not limited to the following positions, as shown in FIG. 11. The multiple blocks may correspond to multiple luma BVs, and the multiple luma BVs are respectively used to construct candidate items of respective chroma BVC candidate lists, and the availability of the BVs in the candidate lists is determined, so as to decide a BV or multiple BVs, or to decide multiple groups of BVs through clustering; the respective available chroma BVCs of the multiple blocks can respectively construct a mapping table LUT; the template of the current block is predicted by using different mapping tables LUTs, and a difference with the reconstructed value of the template is calculated, to decide which mapping relationship to specifically use, and then the finally decided mapping relationship is used to determine the chroma prediction value of the current block. It should be noted that the number of mapping relationships constructed here may be arbitrarily designated, for example, the number may be set to 4, but any limitation is not imposed.

In a specific embodiment, a specific process of performing LUT prediction on the template of the current block is as follows:
acquiring a reconstructed luma sample recBefDownLumaR at a collocated luma region template position lumaPos = (xCbR, yCbR) corresponding to the template of the current block, performing downsampling on the luma sample to obtain a downsampled reconstructed luma sample recAftDownLumaR, and performing the mapping processing of the same sample range on the sample.

It is assumed that the prediction value of the template of the current block is predSamplesR, then for predSamplesR[cIdx][x][y], a variable cIdx specifies a color component index of the current block, and a prediction method is: deriving the prediction value by using the constructed mapping relationship, with reference to the collocated luma value Yc. If Yc is not found in the input luma set in the constructed mapping relationship, then the processing method includes but is not limited to: checking in the order of {Yc+1, Yc-1, Yc+2, Yc-2, Yc+3, Yc-3}, and if all the above-mentioned values cannot be matched in the mapping relationship, the chroma prediction value of the current block is set to an average value of the reconstructed chroma sample recBvChroma at the corresponding BV.

When the cost calculation is performed on the template of the current block and the template prediction value of each LUT, there are the following several cases of the usage of the template.

First type: both the upper template and the left template of the current block exist, and in this case, both the upper template and the left template are available.

Second type: only the upper template of the current block exists, and in this case, only the upper template is available.

Third type: only the left template of the current block exists, and in this case, only the left template is available.

Fourth type: neither the upper template nor the left template of the current block exists, and in this case, the finally selected LUT is a first LUT constructed or a LUT at a specified position.

Exemplarily, in the embodiments of the present disclosure, it is assumed that the reconstructed value of the template of the current block is recSamplesR, there are multiple selections for a cost function for calculating the template region cost, for example, the evaluation criteria such as sum of absolute differences (SAD), sum of absolute transformed differences (SATD), sum of squared errors (SSE), mean absolute difference (MAD), mean absolute error (MAE), and mean squared error (MSE) may be selected. One of the above criteria may be selected for a certain evaluation criterion mentioned in the following content, and taking the evaluation criterion of SAD as an example, a calculation formula is as follows: $SAD = {\sum }_{i = 0}^{predTempSizeW - 1} {\sum }_{j = 0}^{predTempSizeH - 1} \left|predSamplesR\left[i\right]\left[j\right]-recSamplesR\left[i\right]\left[j\right]\right|$ (9) where predTempSizeW is a width of the template, predTempSizeH is a height of the template, predSamplesR[i][j] is a prediction pixel point of the template of the current block, processed through the LUT, and recSamplesR[i][j] is a reconstructed pixel point of the template of the current block.

It should also be noted that, in the embodiments of the present disclosure, for selecting the final LUT by using the template of the current block, for other cases except for cases where costs cannot be calculated, a cost of each constructed LUT candidate is calculated and sorted; the sort method include but is not limited to sort methods such as bubble sort, selection sort, insertion sort, shell sort, merge sort, quick sort, radix sort, heap sort, counting sort, bucket sort, etc. A LUT candidate with a minimum cost is selected as a finally used LUT.

In some embodiments, after determining the prediction value of the second color component of the current block, the method may further include: decoding a bitstream to determine a residual value of the second color component of the current block; and determining a reconstructed value of the second color component of the current block according to the residual value and the prediction value.

It should be noted that, in the embodiments of the present disclosure, determining the reconstructed value of the second color component of the current block, may include: performing an addition operation on the residual value and the prediction value to obtain the reconstructed value of the second color component of the current block.

In some embodiments, the method further includes: determining a collocated first color component region of the current block; and in a case where a DM mode is used for the current block and the first color component region is predicted based on a block vector, determining that a first prediction mode is used for the current block.

It should be noted that, in the embodiments of the present disclosure, the collocated first color component region of the current block is determined; and in a case where the DM mode is used for the current block and the first color component region is predicted based on the block vector, it is determined that the first prediction mode is used for the current block.

Exemplarily, in the embodiments of the present disclosure, under dual tree partition, in the DM mode, if the corresponding luma region has BV information, the current block is predicted by using the first prediction mode (BVG-LUT mode). For example:
if CuPredMode[0][xCb+cbWidth/2][yCb+cbHeight/2] is equal to MODE_IBC, and intra_bvglut_flag is set to 1, then BVG-LUT is used for the chroma intra prediction mode IntraPredModeC[xCb][yCb];
if CuPredMode[0][xCb+cbWidth/2][yCb+cbHeight/2] is equal to MODE_INTRA, and if IntraTmpFlag[xCb+cbWidth/2][yCb+cbHeight/2] is equal to 1, and intra_bvglut_flag is set to 1, then BVG-LUT is used for the chroma intra prediction mode IntraPredModeC[xCb][yCb].

In the embodiments of the present disclosure, the first syntax element may be used to indicate whether BVG-LUT is used for the current block, and the first syntax element may be represented by intra_bvgplt_flag or bvgplt_flag. The chroma prediction mode is derived as follows:
the chroma intra prediction mode IntraPredModeC[xCb][yCb] uses cclm_mode_flag, cclm_mode_idx, intra_chroma_pred_mode, lumaIntraPredMode, and lumaTempPredMode, specified in the table below. These filling items other than the BVG-LUT mode give corresponding values exemplarily, but are not required to be filled with those values. Table 9 shows an example of chroma prediction mode derivation. As shown in Table 9, 0 represents Planar mode, 1 represents DC mode, 18 represents horizontal mode, 50 represents vertical mode, and 81 to 83 represent CCLM modes.

**Table 9**

| cclm_ mode _flag | cclm_mode _idx | intra_chro ma_pred_ mode | lumaIntraPredMode (intra_bvglut_flag == 0) | | | | | intra_bvglut _flag == 1 |
|---|---|---|---|---|---|---|---|---|
| | | | 0 | 50 | 18 | 1 | X ( 0 ≤ X ≤ 66 ) | |
| 0 | - | 0 | 66 | 0 | 0 | 0 | 0 | 0 |
| 0 | - | 1 | 50 | 66 | 50 | 50 | 50 | 50 |
| 0 | - | 2 | 18 | 18 | 66 | 18 | 18 | 18 |
| 0 | - | 3 | 1 | 1 | 1 | 66 | 1 | 1 |
| 0 | - | 4 | 0 | 50 | 18 | 1 | X | BVG-LUT |
| 1 | 0 | - | 81 | 81 | 81 | 81 | 81 | 81 |
| 1 | 1 | - | 82 | 82 | 82 | 82 | 82 | 82 |
| 1 | 2 | - | 83 | 83 | 83 | 83 | 83 | 83 |

According to Table 9, it can be seen that in the DM mode, if intra_bvglut_flag == 1, that is, the information acquired from the center position block of the collocated luma region contains a BV, then the BVG-LUT mode is used for the chroma intra prediction mode IntraPredModeC[xCb][yCb].

In some embodiments, the method further includes: determining a value of a second syntax element; and in response to the second syntax element indicating that a first prediction mode is allowed to be used for the current block, performing the determination of the prediction parameter of the current block.

It should be noted that, in the embodiments of the present disclosure, the second syntax element may be represented by BvglutEnabled. If the value of the second syntax element is a first value, the second syntax element indicates that the first prediction mode is allowed to be used for the current block; if the value of the second syntax element is a second value, the second syntax element indicates that the first prediction mode is not allowed to be used for the current block.

It should also be noted that, in the embodiments of the present disclosure, the first value is different from the second value. The first value and the second value may be in a parameter form or a numeric form. Specifically, both the first syntax element and the second syntax element may be parameters written in a profile, or may be values of a flag/identifier, which are not limited here.

Exemplarily, the first value may be set to 1 and the second value may be set to 0; or, the first value may be set to 0 and the second value may be set to 1; or, the first value may be set to true and the second value may be set to false; or, the first value may be set to false and the second value may be set to true. In the embodiments of the present disclosure, the first value may be set to 1 and the second value may be set to 0, but any limitation is not imposed thereto.

Exemplarily, in the embodiments of the present disclosure, if the syntax elements sps_ibc_enabled_flag is equal to 0 and sps_intratmp_enabled_flag is equal to 0, then BvglutEnabled is equal to 0. Otherwise, a variable ModeIncludeBv is set, and if the corresponding luma block is not encoded in the mode with BV information, then ModeIncludeBv is equal to 0; otherwise, ModeIncludeBv is equal to 1.

In a possible implementation, if the following multiple conditions are simultaneously true (including but not limited to the following conditions), then BvglutEnabled is equal to 1:
ModeIncludeBv is equal to 1;
sh_slice_type is equal to an I-frame;
CtbLog2SizeC is less than or equal to MaxChromaIbcSize; where MaxChromaIbcSize may be determined according to the chroma CTU size or a preset value.

In another possible implementation, if the following multiple conditions are simultaneously true (including but not limited to the following conditions), then BvglutEnabled is equal to 1:
ModeIncludeBv is equal to 1;
CtbLog2SizeC is less than or equal to MaxChromaIbcSize; where MaxChromaIbcSize may be determined according to the chroma CTU size or a preset value.

In another possible implementation, if the following multiple conditions are simultaneously true (including but not limited to the following conditions), then BvglutEnabled is equal to 1:
CtbLog2SizeC is less than or equal to MaxChromaIbcSize; where MaxChromaIbcSize may be determined according to the chroma CTU size or a preset value.

For each possible implementation, otherwise, BvglutEnabled is equal to 0. Here, if BvglutEnabled is equal to 0, then the value of the first syntax element may be inferred to be 0.

It should also be noted that, in the embodiments of the present disclosure, for the prediction mode of the current block, it may also be determined based on competition between the BVG-LUT mode and other modes at the encoder side. In the DM mode, competition with other modes in addition to the BVG-LUT mode may also be performed. A finally used mode is decided according to template costs. For example, for directly using the BV obtained from luma, BV copy may be directly used, or the BVG-LUT mode defined in the embodiments of the present disclosure may also be used; after both modes are applied to the template of the current block, the one with a smaller template cost is selected as the prediction mode of the current block.

The present embodiments provides a decoding method, including: determining a prediction parameter of a current block; determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; determining a mapping relationship between a first color component and a second color component according to the first color component reference sample value and the second color component reference sample value; and determining a prediction value of the second color component of the current block according to the mapping relationship and a first color component sample value of the current block. In this way, if a BVG-LUT mode is used for the current block, then a first reference prediction parameter set applied to a chroma component may be determined, and according to the first reference prediction parameter set, a luma component reference sample value and a chroma component reference sample value of the current block are determined, thereby constructing a mapping relationship between the luma component and the chroma component, and then the chroma component is predicted by utilizing the mapping relationship. That is, a correlation between a reconstructed sample and a sample of the current block in the current picture is fully utilized here, which improves a singularity of chroma prediction, thereby improving the accuracy of chroma prediction; moreover, according to the constructed mapping relationship, pixel-level prediction may also be effectively performed, thereby further saving bit rate, improving encoding and decoding efficiency, and then improving encoding and decoding performance.

In another embodiment of the present disclosure, FIG. 20 is flow schematic diagram 1 of an encoding method provided in the embodiments of the present disclosure. As shown in FIG. 20, the method may include S2001 to S2006.

In S2001, a prediction parameter of a current block is determined.

It should be noted that the encoding method of the embodiments of the present disclosure is applied to an encoder. In addition, the encoding method may specifically refer to an intra prediction method, and more specifically, it is a chroma prediction method based on a block vector. A video picture may be partitioned into multiple coding blocks, each coding block may include a first color component, a second color component, and a third color component, and the current block in the embodiments of the present disclosure refers to a coding block on which chroma prediction is to be performed currently, in the video picture.

Here, if prediction of the first color component is performed on the current block, and the first color component is a luma component, then the current block may also be referred to as a luma block; or, if prediction of the second color component is performed on the current block, and the second color component is a chroma component, then the current block may also be referred to as a chroma block.

It should also be noted that, in the embodiments of the present disclosure, for a prediction parameter, the prediction parameter may be used to indicate whether a first prediction mode is used for the current block. In some embodiments, the method may include: determining a first cost value for using the first prediction mode for the current block, and determining a second cost value for not using the first prediction mode for the current block; and determining the prediction parameter according to the first cost value and the second cost value.

In a specific embodiment, determining the prediction parameter according to the first cost value and the second cost value, may include: in response to the first cost value being less than the second cost value, determining that the prediction parameter indicates that the first prediction mode is used for the current block; in response to the first cost value being greater than the second cost value, determining that the prediction parameter indicates that the first prediction mode is not used for the current block.

In some embodiments, the method may also include: determining a value of a first syntax element according to the prediction parameter; performing encoding processing on the value of the first syntax element, and writing obtained encoded bits into a bitstream.

It should be noted that, in the embodiments of the present disclosure, determining the value of the first syntax element according to the prediction parameter, may include: in response to the prediction parameter indicating that the first prediction mode is used for the current block, determining that the value of the first syntax element is a first value; in response to the prediction parameter indicating that the first prediction mode is not used for the current block, determining that the value of the first syntax element is a second value.

It should also be noted that, in the embodiments of the present disclosure, if the first prediction mode is used for the current block, then it is determined that the value of the prediction parameter is a first value; if the first prediction mode is not used for the current block, then it is determined that the value of the prediction parameter is a second value. Here, the method may also include: setting the value of the prediction parameter to be equal to the value of the first syntax element.

It should also be noted that, in the embodiments of the present disclosure, the first syntax element may be represented by intra_bvglut_flag, or may also be represented by bvglut_flag. The first syntax element may be used to indicate whether the first prediction mode is used for the current block. Here, if the value of the first syntax element is a first value, it is determined that the first prediction mode is used for the current block; if the value of the first syntax element is a second value, it is determined that the first prediction mode is not used for the current block.

It can be understood that, in the embodiments of the present disclosure, the first value is different from the second value. The first value may be set to 1 and the second value may be set to 0; or, the first value may be set to 0 and the second value may be set to 1; or, the first value may be set to true and the second value may be set to false; or, the first value may be set to false and the second value may be set to true.

In a specific embodiment, the first value is set to 1, and the second value is set to 0. Exemplarily, if the value of the first syntax element is 1, it indicates that the prediction parameter indicates that the first prediction mode is used for the current block, and in this case, the encoding method of the embodiments of the present disclosure continues to be performed; otherwise, if the value of the first syntax element is 0, it indicates that the prediction parameter indicates that the first prediction mode is not used for the current block, and in this case, other prediction modes in the related art (e.g., PLANAR mode, CCLM mode, angular prediction mode, etc.) may be used for the encoding process.

In S2002: a first reference prediction parameter set of the current block is determined according to the prediction parameter; where the first reference prediction parameter set includes one or more first candidate reference prediction parameters.

It should be noted that, in the embodiments of the present disclosure, when the prediction parameter indicates that the first prediction mode is used for the current block, the first reference prediction parameter set of the current block is determined. The first prediction mode may be a BVG-LUT mode. That is, for the current block, if the BVG-LUT mode is used for the current block, then the first reference prediction parameter set of the current block may be determined.

In some embodiments, for determining the first reference prediction parameter set of the current block, the method may include: determining a first color component block of the current block; determining a second reference prediction parameter set of the current block according to the first color component block; and determining the first reference prediction parameter set of the current block according to the second reference prediction parameter set.

It should be noted that, in the embodiments of the present disclosure, the first reference prediction parameter set may include one or more first candidate reference prediction parameters. The first candidate reference prediction parameter may be a vector parameter based on the second color component.

It should also be noted that, in the embodiments of the present disclosure, the second reference prediction parameter set may include one or more second candidate reference prediction parameters. The second candidate reference prediction parameter may be a vector parameter based on the first color component.

Exemplarily, the first color component may be a luma component, and the second color component may be a chroma component; then the first candidate reference prediction parameter may be a vector parameter based on the chroma component, and the second candidate reference prediction parameter may be a vector parameter based on the luma component.

In some embodiments, the vector parameter includes one of: a block vector parameter, a motion vector parameter. That is, whether it is the first reference prediction parameter set or the second reference prediction parameter set, it may be a parameter list applied to a BV, or a parameter list applied to an MV.

In a specific embodiment, taking the BV as an example, the "first reference prediction parameter" here may be a block vector parameter based on the chroma component, and then the first reference prediction parameter set may be referred to as a chroma BVC candidate list; the "second reference prediction parameter" here may be a block vector parameter based on the luma component, and then the second reference prediction parameter set may be referred to as a luma BVL candidate list.

In some embodiments, for determining the first color component block of the current block, the method may include: determining a collocated first color component region of the current block; and determining the first color component block of the current block based on multiple partitioned blocks of the first color component region.

It should be noted that, in the embodiments of the present disclosure, if the first color component is the luma component, the first color component region may also be referred to as a "collocated luma region". For example, if the current block is a chroma block, the collocated luma region may refer to a collocated luma region corresponding to the current block. For the current block, block partition may be performed on the collocated first color component region, for example, block partition using a binary tree structure, a ternary tree structure, a quad tree structure, etc., to obtain multiple blocks, each of the blocks may be considered as a CU, a sub-block, or a transform block; then the first color component block of the current block is determined from the multiple partitioned blocks.

Exemplarily, taking FIG. 3 as an example, the region filled with slanted lines represents a collocated luma region corresponding to the chroma component. In the collocated luma region, it may be partitioned into multiple blocks; a block at a center position may be selected from these blocks as a corresponding luma block of the current block, for example, the block filled with black in FIG. 3 is the corresponding luma block (the first color component block) of the current block.

In a specific embodiment, for determining the first color component block of the current block, the method may include: determining a first candidate block at a first position from multiple partitioned blocks; and determining the first color component block of the current block according to the first candidate block at the first position.

In the embodiments of the present disclosure, the first position may refer to any position in the first color component region. Exemplarily, the first position may be a center position, an upper-left corner position, a lower-right corner position, a specific position, etc., in the first color component region.

In the embodiments of the present disclosure, the first candidate block may refer to a block at the first position. In a specific embodiment, a block at the center position in the first color component region is selected as the first candidate block; and/or a block at an upper-left corner position in the first color component region is selected as the first candidate block; and/or a block at a lower-right corner position in the first color component region is selected as the first candidate block, etc., and any limitation is not imposed here.

Furthermore, in some embodiments, for determining the first color component block of the current block according to the first candidate block at the first position, the method may include: performing a position offset search in a preset search region at the first position to determine multiple second candidate blocks; and determining the first color component block of the current block according to the first candidate block and/or the multiple second candidate blocks.

In the embodiments of the present disclosure, performing the position offset search in the preset search region at the first position, may be searching multiple positions toward directions such as upper-left, upper, left, etc., on the basis of the first position, for example, an upper-left coordinate offset (xOffset, yOffset)=(-2,-2), an upper coordinate offset (xOffset, yOffset)=(0,-2), a left coordinate offset (xOffset, yOffset)=(-2,0), etc., of the first position may be acquired, and any limitation is not imposed here.

In some embodiments, determining the first color component block of the current block, may include: determining position information of the current block; performing scaling processing on the position information of the current block according to a preset sampling format, to obtain collocated region position information corresponding to the current block; determining target position information according to the collocated region position information, and using a candidate block containing the target position information as the first color component block of the current block.

In some embodiments, determining the target position information according to the collocated region position information, may include: performing a center position calculation according to the collocated region position information, and using obtained center position information as the target position information; or, performing an upper-left corner position calculation according to the collocated region position information, and using obtained upper-left position information as the target position information; or, performing a lower-right corner position calculation according to the collocated region position information, and using obtained lower-left position information as the target position information.

In the embodiments of the present disclosure, the preset sampling format may be a chroma sampling format (or referred to as a color sampling format). Exemplarily, a mapping relationship between the position (x, y) of the current block and the collocated region position (xCb, yCb) is shown in Table 4.

In a possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

Here, it is assumed that a position of a collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 3) corresponding to the current block is cbWidth, and a height thereof is cbHeight; then a block at the center position (a center position block in the luma region) is a luma block containing the center coordinate (xCb+cbWidth>>1, yCb+cbHeight>>1), i.e., the block filled with black in FIG. 3. In FIG. 3, a white small block indicates a position of the center coordinate, which may be used to locate a position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an upper coordinate offset (xOffset, yOffset) = (0, -2), and a left coordinate offset (xOffset, yOffset) = (-2, 0) of the center position of the collocated luma region. The luma block used for the luma region is a luma block containing the position coordinate (xCb+cbWidth>>1 + xOffset, yCb+cbHeight>>1 + yOffset).

In another possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

Here, it is assumed that a position of the collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 9) corresponding to the current block is cbWidth, and a height thereof is cbHeight; then a block at the upper-left corner position (an upper-left corner block in the luma region) is a luma block containing the upper-left corner coordinate (xCb, yCb), i.e., the block filled with black in FIG. 9. In FIG. 9, a white small block indicates the position of the upper-left corner coordinate, which may be used to locate the position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an upper coordinate offset (xOffset, yOffset) = (0, -2), and a left coordinate offset (xOffset, yOffset) = (-2, 0) of the upper-left corner position of the collocated luma region. The luma block used for the luma region is a luma block containing the position coordinate (xCb+ xOffset, yCb + yOffset).

In yet another possible implementation, the position of the current block, i.e., a position of an upper-left corner chroma sample of the current block relative to an upper-left corner chroma sample of the current picture, chromaPos=(x, y), is acquired; scaling is performed on chromaPos according to the chroma sampling format shown in Table 4, to obtain a collocated luma region position lumaPos=(xCb, yCb) corresponding to the current block.

Here, it is assumed that a position of the collocated luma pixel corresponding to the upper-left corner of the current block relative to an upper-left corner luma pixel of the picture is (xCb, yCb), and a width of the collocated luma region (i.e., the entire region filled with slanted lines of the luma component in FIG. 10) corresponding to the current block is cbWidth, and a height thereof is cbHeight; then a block at the lower-right corner position (a lower-right corner block in the luma region) is a luma block containing the lower-right corner coordinate (xCb + cbWidth-1, yCb + cbHeight-1), i.e., the block filled with black in FIG. 10. In FIG. 10, a white small block indicates the position of the lower-right corner coordinate, which may be used to locate the position of the luma block.

Here, for the multiple second candidate blocks, multiple positions may be searched toward the upper-left, upper, and left at the luma block position, including but not limited to the following exemplary search positions: acquiring an upper-left coordinate offset (xOffset, yOffset) = (-2, -2), an uppper coordinate offset (xOffset, yOffset) = (0, -2), and a left coordinate offset (xOffset, yOffset) = (-2, 0) of the lower-right corner position of the collocated luma region. The luma block used for the luma region is a luma block containing the position coordinate (xCb + cbWidth - 1 + xOffset, yCb + cbHeight - 1 + yOffset).

That is, in the embodiments of the present disclosure, for the first candidate block used as the first color component block, it may be a block at any position among the multiple blocks shown in FIG. 3. For example, it is the block (the block filled with black) at the center position in the collocated luma region as shown in FIG. 3, the block (the block filled with black) at the upper-left corner position in the collocated luma region as shown in FIG. 9, the block (the block filled with black) at the lower-right corner position in the collocated luma region as shown in FIG. 10, or even a block at the upper-right corner position or a block at the lower-left corner position in the collocated luma region, or even a block at the center position of the upper-left region, etc., which is not limited in any way here. Furthermore, on the basis of the first candidate block, multiple positions may be searched toward the upper-left, upper, and left, etc., to obtain multiple second candidate blocks. Then, according to the first candidate block and/or the multiple second candidate blocks, the first color component block of the current block can be determined.

In some embodiments, the method may further include: determining at least one candidate block at a preset position from multiple partitioned blocks of the first color component region; and determining the first color component block of the current block according to the at least one candidate block.

In the embodiments of the present disclosure, the at least one candidate block may be used as the first color component block of the current block. That is, for the first color component block, it may be at least one candidate block acquired sequentially. For example, as shown in FIG. 11, CUs at five luma pixel positions are included here, specifically: C, TL, TR, BL, and BR. However, the embodiments of the present disclosure are not limited to five positions, and may be multiple different positions; moreover, they are not limited to the five positions shown in FIG. 11, and any limitation is not imposed thereto.

In yet another possible implementation, taking blocks including five luma pixel positions shown in FIG. 11 as an example, acquisition may be performed sequentially in a preset order, where the preset order includes but is not limited to the following order: C -> TL -> TR -> BL -> BR.

For the detailed position derivation process of C, TL, TR, BL, BR: the position of the current block, that is, the position of the upper-left corner chroma sample of the current block relative to the upper-left corner chroma sample of the current picture, chromaPos = (x, y), is acquired; and the chromaPos is scaled according to the chroma sampling format shown in Table 4, to obtain the collocated luma region position lumaPos = (xCb, yCb) corresponding to the current block.

Here, it is assumed that the position of the collocated luma pixel corresponding to the upper-left corner of the current block relative to the upper-left corner luma pixel of the picture (i.e., the position of the luma pixel TL) is (xCb, yCb), and the width of the collocated luma region corresponding to the current chroma coding block (i.e., the entire region filled with slanted lines of the luma component in FIG. 11) is cbWidth, and the height thereof is cbHeight.

The coordinate of the position of the luma pixel C is (xCb + cbWidth / 2, yCb + cbHeight / 2).

The coordinate of the position of the luma pixel TL is (xCb, yCb).

The coordinate of the position of the luma pixel TR is (xCb + cbWidth - 1, yCb).

The coordinate of the position of the luma pixel BL is (xCb, yCb + cbHeight - 1).

The coordinate of the position of the luma pixel BR is (xCb + cbWidth - 1, yCb + cbHeight - 1).

Here, when searching each position, multiple positions may also be searched toward the upper-left, upper, left at the position, including but not limited to the following exemplary search positions: acquiring the upper-left coordinate offset (xOffset, yOffset) = (-2, -2), the upper coordinate offset (xOffset, yOffset) = (0, -2), and the left coordinate offset (xOffset, yOffset) = (-2, 0) of the position. The luma block used for the luma region is a luma block containing a position coordinate resulting from adding the above coordinate offset to the coordinate of the position.

In this way, for the current block, a corresponding first color component block needs to be determined first. Exemplarily, when the first color component is the luma component, a corresponding luma block of the current block needs to be determined here. Specifically, one or more corresponding luma blocks may be determined by using the above several possible implementations.

It can be understood that after the first color component block is determined, a second reference prediction parameter set of the current block may be constructed. In some embodiments, the method may include: determining one or more candidate vector parameters based on the first color component according to the first color component block; determining the second reference prediction parameter set of the current block according to the one or more candidate vector parameters based on the first color component.

It should be noted that, in the embodiments of the present disclosure, determining the second reference prediction parameter set of the current block according to the one or more candidate vector parameters based on the first color component, may include: adjusting the candidate vector parameter based on the first color component, to determine a candidate vector parameter based on the second color component; when the candidate vector parameter based on the second color component satisfies a preset availability condition, using the candidate vector parameter based on the first color component as a second candidate reference prediction parameter to add to the second reference prediction parameter set.

Here, taking the block vector parameter BV as an example, it is assumed that the current block is a chroma block and the first color component block is a luma block, then the candidate vector parameter based on the first color component may be a BV of the luma block, i.e., BVL; the candidate vector parameter based on the second color component may be a BV of the chroma block, i.e., BVC.

It should also be noted that, in the embodiments of the present disclosure, it is assumed that the candidate vector parameter based on the first color component is a luma BV = (BVLhor, BVLver) and the candidate vector parameter based on the second color component is a chroma BV = (BVChor, BVCver), then the corresponding chroma BV may be determined by adjusting the BVL (luma BV).

In a specific embodiment, adjusting the candidate vector parameter based on the first color component to determine the candidate vector parameter based on the second color component, may include: determining a preset sampling format of the current block; scaling the candidate vector parameter based on the first color component according to the preset sampling format, to determine the candidate vector parameter based on the second color component.

It should be noted that, in the embodiments of the present disclosure, the above adjustment may include scaling processing according to the preset sampling format. The preset sampling format may be a mapping relationship between a luma BV and a scaled chroma BV as shown in Table 8. Here, the preset sampling format may refer to a color sampling format, for example, monochrome, 4:2:0, 4:2:2, 4:4:4, etc. The syntax element sps_chroma_format_idc is used to indicate a type of the color sampling format, where the color sampling format is specifically a chroma sampling format. Here, types of color sampling formats are different, then their corresponding scaling operations are different.

Exemplarily, if the value of sps_chroma_format_idc is 0, it is determined that the color sampling format is monochrome, i.e., there is no chroma BV parameter (BVCₕₒᵣ, BVCₕₒᵣ); if the value of sps_chroma_format_idc is 1, it is determined that the color sampling format is 4:2:0, and in this case, the mapping relationship between the luma BV and the chroma BV is: BVCₕₒᵣ = BVLₕₒᵣ>>1, BVCₕₒᵣ= BVLᵥₑᵣ>>1; if the value of sps_chroma_format_idc is 2, it is determined that the color sampling format is 4:2:2, and in this case, the mapping relationship between the luma BV and the chroma BV is: BVCₕₒᵣ = BVLₕₒᵣ>>1, BVCₕₒᵣ= BVLᵥₑᵣ; if the value of sps_chroma_format_idc is 3, it is indicated that the color sampling format is 4:4:4, and in this case, the mapping relationship between the luma BV and the chroma BV is: BVCₕₒᵣ = BVLₕₒᵣ, BVCₕₒᵣ= BVLᵥₑᵣ.

In this way, based on Table 8, it may be selected to scale the candidate BVL according to the color sampling format to obtain a scaled BVC; then it is determined whether the scaled BVC satisfies the preset availability condition. The scaled BVC satisfies the preset availability condition, including but not limited to:
an offset position indicated by the scaled BVC does not exceed a picture boundary;
an offset position indicated by the scaled BVC does not exceed a slice boundary;
an offset position indicated by the scaled BVC does not cover the current block;
an offset position indicated by the scaled BVC does not exceed a preset available region;
an offset position indicated by the scaled BVC has been reconstructed.

It should also be noted that, in the embodiments of the present disclosure, the obtained one or more candidate vector parameters based on the first color component (i.e., one or more candidate BVLs) are scaled, according to the first color component block. If a certain candidate BVL is scaled based on the color sampling format shown in Table 8 and the scaled BVC satisfies the preset availability condition, then this candidate BVL may be used as a second candidate reference prediction parameter to add to the second reference prediction parameter set, thereby constructing the second reference prediction parameter set. The second reference prediction parameter set may include one or more second candidate reference prediction parameters.

It can also be understood that after the second reference prediction parameter set is constructed, the first reference prediction parameter set of the current block may be further determined. In some embodiments, the method may include: adjusting one or more second candidate reference prediction parameters in the second reference prediction parameter set to determine first candidate reference prediction parameters respectively corresponding to the one or more second candidate reference prediction parameters; determining the first reference prediction parameter set of the current block according to the first candidate reference prediction parameters respectively corresponding to the one or more second candidate reference prediction parameters.

It should be noted that, in the embodiments of the present disclosure, the number of first candidate reference prediction parameters is the same as that of second candidate reference prediction parameters. That is, for each second candidate reference prediction parameter, it may be adjusted to obtain one or more first candidate reference prediction parameters, and then an available first candidate reference prediction parameter is decided from them. However, it should be noted that the number of first candidate reference prediction parameters may also be different from that of second candidate reference prediction parameters; in this case, more than one available first candidate reference prediction parameter may be decided from each second candidate reference prediction parameter, and any limitation is not imposed here.

In some embodiments, for adjusting the one or more second candidate reference prediction parameters in the second reference prediction parameter set to determine first candidate reference prediction parameters respectively corresponding to the one or more second candidate reference prediction parameters, taking one of the second candidate reference prediction parameters as an example here, the method may include: adjusting the second candidate reference prediction parameter to determine a third reference prediction parameter set based on the second color component; and determining a first candidate reference prediction parameter corresponding to the second candidate reference prediction parameter based on the third reference prediction parameter set.

In the embodiments of the present disclosure, for each second candidate reference prediction parameter, this method may be used to determine its corresponding first candidate reference prediction parameter, to obtain the first reference prediction parameter set.

Exemplarily, it is assumed that the current block is a chroma block and the first color component block is a luma block, then the first candidate reference prediction parameter may be a candidate BV of the chroma block, i.e., a candidate BVC; the second candidate reference prediction parameter may be a candidate BV of the luma block, i.e., a candidate BVL. One or more candidate vector parameters based on the second color component (i.e., one or more candidate BVCs) may be determined by adjusting the second candidate reference prediction parameter, and these candidate BVCs can construct the third reference prediction parameter set.

It can be understood that, in the embodiments of the present disclosure, it is assumed that the second candidate reference prediction parameter is a luma BV=(BVLhor, BVLver), and the candidate vector parameter based on the second color component is a chroma BV=(BVChor, BVCver), then it may be selected to construct a chroma BVC candidate list including one or more candidate block vector parameters by adjusting the BVL (luma BV) or the BVC (chroma BV).

In a possible implementation, adjusting the second candidate reference prediction parameter to determine the third reference prediction parameter set based on the second color component, may include: scaling the second candidate reference prediction parameter according to a preset sampling format of the current block to determine a candidate vector parameter based on the second color component, and adding the candidate vector parameter based on the second color component to the third reference prediction parameter set.

It should be noted that, in the embodiments of the present disclosure, the above adjustment may include scaling processing according to the preset sampling format. The preset sampling format may be a mapping relationship between a luma BV and a scaled chroma BV as shown in Table 8. Here, the preset sampling format may refer to a color sampling format, for example, monochrome, 4:2:0, 4:2:2, 4:4:4, etc. Thus, it may be selected to perform scaling according to the color sampling format shown in Table 8, and add the scaled BVC is used as a candidate vector parameter to add to the third reference prediction parameter set.

In another possible implementation, adjusting the second candidate reference prediction parameter to determine the third reference prediction parameter set based on the second color component, may include: scaling the second candidate reference prediction parameter according to a preset sampling format of the current block, to determine a first initial vector parameter based on the second color component; and performing an offset calculation on the first initial vector parameter based on the second color component according to one or more offset values, to determine one or more candidate vector parameters based on the second color component, and adding the one or more candidate vector parameters based on the second color component to the third reference prediction parameter set.

In yet another possible implementation, adjusting the second candidate reference prediction parameter to determine the third reference prediction parameter set based on the second color component, may include: performing an offset calculation on the second candidate reference prediction parameter according to one or more offset values, to determine one or more second initial vector parameters based on the first color component; and scaling the one or more second initial vector parameters based on the first color component according to a preset sampling format of the current block, to determine one or more candidate vector parameters based on the second color component, and adding the one or more candidate vector parameters based on the second color component to the third reference prediction parameter set.

It should be noted that, in the embodiments of the present disclosure, the above-mentioned one or more offset values may be any number of any values, for example, -1, +1, -2, +2, -3, +3, etc., and any limitation is not imposed here.

That is, in the embodiments of the present disclosure, after acquiring the BV of the corresponding luma block, it may be denoted as BVL, and the chroma BV, which may be denoted as BVC, is acquired through the BVL; then, the BVL or the BVC may be adjusted to construct chroma BVC candidate items including one or more candidates. A construction method of the candidate items includes but is not limited to the following cases.

In a possible construction method, the BVL may be adjusted to form four cases, thereby implementing the adjustment of the BVC. When the BVL is odd, four cases are taken, such as: BVL=(BVLhor, BVLver), BVL=(BVLhor+1, BVLver), BVL=(BVLhor, BVLver+1), BVL=(BVLhor+1, BVLver+1). When the BVL is even, BVL = (BVLhor, BVLver) is taken

Alternatively, when the BVL is even, four cases are taken, such as: BVL = (BVLₕₒᵣ, BVLᵥₑᵣ), BVL = (BVLₕₒᵣ + 1, BVLᵥₑᵣ), BVL = (BVLₕₒᵣ, BVLᵥₑᵣ + 1), BVL = (BVLₕₒᵣ + 1, BVLᵥₑᵣ + 1).

Here, BVC[0] = BVL[0] * 2 / SubWidthC, BVC[1] = BVL[1] * 2 / SubHeightC. SubWidthC and SubHeightC may be determined according to the mapping relationship between sps_chroma_format_idc and the color sampling format in Table 1.

The BVL is scaled according to the above formulas to obtain the BVC; in this way, when the BVL is odd or even, four BVC candidates are formed, and these candidates are added to the chroma BVC candidate list (i.e., the third reference prediction parameter set).

In another possible construction method, the BVL may be adjusted to form four cases, thereby implementing the adjustment of the BVC. When the BVL is odd, four cases are taken, such as: BVL=(BVLhor, BVLver), BVL=(BVLhor+1, BVLver), BVL=(BVLhor, BVLver+1), BVL=(BVLhor+1, BVLver+1). When the BVL is even, four cases are taken, such as: BVL = (BVLhor, BVLver), BVL = (BVLhor-1, BVLver), BVL = (BVLhor, BVLver-1), BVL = (BVLhor-1, BVLver-1). Next, the BVL is scaled according to the color sampling format in Table 8 to obtain the BVC, in this way, when the BVL is odd or even, four BVC candidates are formed, and these candidates are added to the chroma BVC candidate list (i.e., the third reference prediction parameter set).

It should be noted that, in this construction method, operations in different cases of odd and even may also be unified by the following calculation: four cases are taken, such as: BVL=(BVLhor-1, BVLver-1), BVL=(BVLhor+1, BVLver-1), BVL=(BVLhor-1, BVLver+1), BVL=(BVLhor+1, BVLver+1).

In yet another possible construction method, the BVL may be adjusted to form multiple cases, thereby implementing the adjustment of the BVC. When the BVL is odd, multiple cases are taken, such as: BVL=(BVLhor, BVLver), BVL=(BVLhor+1, BVLver), BVL=(BVLhor, BVLver+1), BVL=(BVLhor+1, BVLver+1), BVL=(BVLhor+3, BVLver), BVL=(BVLhor, BVLver+3), BVL=(BVLhor+3, BVLver+3), BVL=(BVLhor-2, BVLver), BVL=(BVLhor, BVLver-2), and a list is constructed for these candidates in order. When the BVL is even, multiple cases are taken, such as: BVL = (BVLhor, BVLver), BVL = (BVLhor-1, BVLver), BVL = (BVLhor, BVLver-1), BVL = (BVLhor-1, BVLver-1), BVL = (BVLhor-3, BVLver), BVL = (BVLhor, BVLver-3), BVL = (BVLhor-3, BVLver-3), BVL = (BVLhor+2, BVLver), BVL = (BVLhor, BVLver+2). Next, the BVL is scaled according to the color sampling format in Table 8 to obtain the BVC, in this way, when BVL is odd or even, multiple BVC candidates are formed, and these candidates are added to the chroma BVC candidate list (i.e., the third reference prediction parameter set).

It should be noted that, in this construction method, operations in different cases of odd and even may also be unified by the following calculation: cases are taken, such as: BVL=(BVLhor-1, BVLver-1), BVL=(BVLhor+1, BVLver-1), BVL=(BVLhor-1, BVLver+1), BVL=(BVLhor+1, BVLver+1), BVL=(BVLhor+3, BVLver-1), BVL=(BVLhor-1, BVLver+3), BVL=(BVLhor+3, BVLver+3), BVL=(BVLhor-3, BVLver-1), BVL=(BVLhor-1, BVLver-3), etc.

In yet another possible construction method, the obtained BVC may also be adjusted to obtain nine candidates: i.e., cases are set as: BVC=(BVChor, BVCver), BVC=(BVChor-1, BVCver), BVC=(BVChor, BVCver-1), BVC=(BVChor-1, BVCver-1), BVC=(BVChor+1, BVCver), BVC=(BVChor, BVCver+1), BVC=(BVChor+1, BVCver+1), BVC=(BVChor-1, BVCver+1), BVC=(BVChor+1, BVCver-1), thereby forming nine BVC candidates, and these candidates are added to the chroma BVC candidate list (i.e., the third reference prediction parameter set).

In yet another possible construction method, the obtained BVC may also be adjusted to obtain multiple candidates: i.e., cases are set as: BVC=(BVChor, BVCver), BVC=(BVChor-1, BVCver), BVC=(BVChor, BVCver-1), BVC=(BVChor-1, BVCver-1), BVC=(BVChor+1, BVCver), BVC=(BVChor, BVCver+1), BVC=(BVChor+1, BVCver+1), BVC=(BVChor-1, BVCver+1), BVC=(BVChor+1, BVCver-1), BVC=(BVChor-2, BVCver), BVC=(BVChor, BVCver-2), BVC=(BVChor-2, BVCver-2), BVC=(BVChor+2, BVCver), BVC=(BVChor, BVCver+2), BVC=(BVChor+2, BVCver+2), BVC=(BVChor-2, BVCver+2), BVC=(BVChor+2, BVCver-2), etc., thereby forming multiple BVC candidates, and these candidates are added to the chroma BVC candidate list (i.e., the third reference prediction parameter set).

It should also be noted that, in the embodiments of the present disclosure, for the case where BVL is odd or even, since BVL is a two-dimensional vector, here it specifically refers to that a certain component thereof is odd or even. In addition, the "+1", "-1", "+2", "-2", "+3", "-3" here all refer to integer pixel precision.

It can be understood that, in the embodiments of the present disclosure, when determining the first candidate reference prediction parameter according to the third reference prediction parameter set, it also needs to determine whether a candidate vector parameter in the third reference prediction parameter set is available, that is, one or more available candidate vector parameters need to be selected from the third reference prediction parameter set. Therefore, in some embodiments, determining the first candidate reference prediction parameter corresponding to the second candidate reference prediction parameter according to the third reference prediction parameter set, may include: determining whether one or more candidate vector parameters satisfying a preset availability condition exist in the third reference prediction parameter set; when one or more candidate vector parameters satisfying the preset availability condition exist in the third reference prediction parameter set, determining the first candidate reference prediction parameter according to the one or more candidate vector parameters.

Specifically, in the embodiments of the present disclosure, only when a candidate vector parameter satisfies the preset availability condition, it is possible to determine the candidate vector parameter as the first candidate reference prediction parameter.

In some embodiments, one or more candidate vector parameters satisfying the preset availability condition, includes but not limited to:
an offset position indicated by the one or more candidate vector parameters does not exceed a picture boundary;
an offset position indicated by the one or more candidate vector parameters does not exceed a slice boundary;
an offset position indicated by the one or more candidate vector parameters does not cover the current block;
an offset position indicated by the one or more candidate vector parameters does not exceed a preset available region;
an offset position indicated by the one or more candidate vector parameters has been reconstructed.

It should be noted that, in the embodiments of the present disclosure, assuming the position (xCb, yCb) of the current block, for a candidate vector parameter, BVC=(BVChor, BVCver), then a corresponding offset position (xCb+BVChor, yCb+BVCver) is found. Here, that the offset position does not exceed the picture boundary, may also be specifically described by using data such as coordinate position information and a size parameter of the current block. For example, xCb + width + BVChor <= xCb, or yCb + height + BVCver <= yCb.

It should also be noted that, in the embodiments of the present disclosure, for the preset availability condition here, whether to exceed a slice boundary may also be considered. For example, an offset position indicated by one or more candidate vector parameters does not exceed a slice boundary, or an offset position indicated by one or more candidate vector parameters does not exceed a tile boundary.

In the embodiments of the present disclosure, only when all of the above conditions are satisfied, it can be determined that the candidate vector parameter satisfies the preset availability condition, i.e., the candidate vector parameter is available. In a specific embodiment, taking one of the candidate vector parameters as an example, the candidate vector parameter satisfies the preset availability condition, at least including: an offset position indicated by the candidate vector parameter does not exceed the picture boundary; and an offset position indicated by the candidate vector parameter does not exceed the slice boundary; and an offset position indicated by the candidate vector parameter does not cover the current block; and an offset position indicated by the candidate vector parameter does not exceed the preset available region; and an offset position indicated by the candidate vector parameter has been reconstructed.

Exemplarily, FIG. 12 shows a structural schematic diagram of whether an offset position does not cover a current block provided in the embodiments of the present disclosure. As shown in FIG. 12, a block filled with black represents the current block, a region filled with slanted lines represents an available region, and an unfilled region represents an unavailable region. For the current block, if an offset position indicated by the candidate block vector parameter is in the unavailable region, then a case occurs that the offset position covers the current block.

Exemplarily, FIG. 13 shows a structural schematic diagram of whether an offset position exceeds a preset available region provided in the embodiments of the present disclosure. As shown in FIG. 13, a block filled with black represents a current block, a region filled with slanted lines represents an available region, and reference blocks within the available region have all been reconstructed. In the embodiments of the present disclosure, considering the storage capacity of Buffer, generally, these reference blocks adjacent to the current block (m, n), specifically: reference block (m-2, n-2), reference block (m-1, n-2), reference block (m, n-2), reference block (m+1, n-2), reference block (m-2, n-1), reference block (m-1, n-1), reference block (m, n-1), reference block (m+1, n-1), reference block (m-2, n), reference block (m-1, n), etc., may be used as the preset available region.

That is, when determining whether to be available, the position (xCb, yCb) of the current block may be acquired, a chroma BVC = (BVChor, BVCver) may be acquired, a corresponding offset position (xCb + BVChor, yCb + BVCver) may be found, and the following conditions, including but not limited to the following conditions (i.e., the preset availability condition), may be determined; if all conditions are satisfied, the chroma BV is available:
whether the obtained offset position does not exceed the picture boundary;
whether the obtained offset position does not cover the current block, specifically referring to FIG. 12; $xCb + width + BVChor < = xCb , or yCb + height + BVCver < = yCb ;$
whether the obtained offset position does not exceed the preset available region, specifically referring to FIG. 13;
whether the obtained offset position has been reconstructed.

It can also be understood that, in the embodiments of the present disclosure, the construction method of the third reference prediction parameter set includes but is not limited to the multiple cases described above, one of which may be used to construct a candidate list, or multiple methods may be used simultaneously to construct the list, that is, four BVC candidates are determined for each BVL to construct the third reference prediction parameter set. Then, for the four BVC candidates corresponding to each BVL, an available BVC, i.e., the first candidate reference prediction parameter corresponding to the BVL, is decided.

In some embodiments, determining the first candidate reference prediction parameter according to one or more candidate vector parameters, includes: in a case where a candidate vector parameter satisfying the preset availability condition exists in the third reference prediction parameter set, determining the candidate vector parameter satisfying the preset availability condition as the first candidate reference prediction parameter; in a case where multiple candidate vector parameters satisfying the preset availability condition exist in the third reference prediction parameter set, performing a decision on the multiple candidate vector parameters satisfying the preset availability condition to determine the first candidate reference prediction parameter.

It should be noted that, in the embodiments of the present disclosure, if there are one or more candidate vector parameters satisfying the preset availability condition, then when determining the first candidate reference prediction parameter according to the one or more candidate vector parameters, a certain candidate vector parameter satisfying the preset availability condition may be directly determined as the first candidate reference prediction parameter. That is, if there is only one BVC candidate satisfying the preset availability condition in the constructed available BVC candidate list, then the finally selected first candidate reference prediction parameter is this BVC.

It also should be noted that, in the embodiments of the present disclosure, if there are multiple candidate vector parameters satisfying the preset availability condition, then a decision may be performed on the multiple candidate vector parameters satisfying the preset availability condition. Specifically, it may be: determining a first template of the current block; determining respective first matching templates of the multiple candidate vector parameters according to the first template and the multiple candidate vector parameters; in response to the first template and the first matching templates satisfying a preset existence condition, calculating matching errors between the first template of the current block and the first matching templates according to a preset error criterion, to determine respective first cost values of the multiple candidate vector parameters; and determining a minimum cost value from the respective first cost values of the multiple candidate vector parameters, and determining a candidate vector parameter corresponding to the minimum cost value as the first candidate reference prediction parameter.

That is, in the embodiments of the present disclosure, for multiple candidate vector parameters satisfying the preset availability condition, after determining the first cost values corresponding to the multiple candidate vector parameters, one or more candidate vector parameters may be determined from the multiple candidate vector parameters according to the first cost values. Exemplarily, if there are multiple available BVC candidates in the constructed available BVC candidate list, then the decision needs to be performed on these available BVCs to obtain a final BV, the method of the decision includes but is not limited to a method of performing the decision by using a template.

It should be noted that, in the embodiments of the present disclosure, the first template includes one or more sample values in an adjacent decoded region of the current block. Correspondingly, a type of the first template may include at least one of: an upper template, an upper-right template, a left template, a lower-left template, and an upper-left template. The upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

It also should be noted that, in the embodiments of the present disclosure, when selecting the template (the first template of the current block), according to pixel availability of the adjacent region of the current block, it is determined whether a pixel at a template position is available, including reconstructed chroma information. FIG. 14 is a schematic diagram of template types, as shown in FIG. 14, according to a relative position relationship between a template and the current block, the templates may be classified into template types such as an upper template, a left template, an upper-right template, a lower-left template, and an upper-left template. Template sizes of different types of different coding blocks may be fixedly the same or may be different.

For example, for a template size, a same template size may be selected for the current block of any size; the following formulas illustrate a setting condition of a template size, where nTbW and nTbH are a width and a height of the current block respectively, and iTempW and iTempH are a width and a height of the used template respectively: $upper template : \left\{\begin{matrix}iTempW = nTbW \\ iTempH = 1\end{matrix}\right.$ (10) $left template : \left\{\begin{matrix}iTempW = 1 \\ iTempH = nTbH\end{matrix}\right.$ (11)

For example, different template sizes may be selected according to different sizes of the current block, and the following formulas describe a size setting condition of a template, where nTbW and nTbH are the width and height of the current block respectively, and iTempW and iTempH are the width and height of the used template respectively: $upper template : \left\{\begin{matrix}\left\{\begin{matrix}iTempW = nTbW \\ iTempH = 2\end{matrix}, min\left(nTbW, nTbH\right)\leq 4\right. \\ \left\{\begin{matrix}iTempW = nTbW \\ iTempH = 4\end{matrix}, min\left(nTbW, nTbH\right)>4\right.\end{matrix}\right.$ (12) $left template : \left\{\begin{matrix}\left\{\begin{matrix}iTempW = 2 \\ iTempH = nTbH\end{matrix}, min\left(nTbW\times nTbH\right)\leq 4\right. \\ \left\{\begin{matrix}iTempW = 4 \\ iTempH = nTbH\end{matrix}, min\left(nTbW\times nTbH\right)>4\right.\end{matrix}\right.$ (13) where$Min \left(x, y\right) = \left\{\begin{matrix}x , & x \leq y \\ y , & x > y\end{matrix}\right. .$

For example, different template sizes may also be selected according to a number of pixels in the current block, and the following formulas illustrate a size setting condition of a template, where nTbW and nTbH are a width and a height of the current block respectively, nTbW×nTbH is the number of pixels of the current block, and iTempW and iTempH are a width and a height of the used template respectively: $upper template : \left\{\begin{matrix}\left\{\begin{matrix}iTempW = nTbW \\ iTempH = 2\end{matrix}, nTbW\times nTbH\leq 16\right. \\ \left\{\begin{matrix}iTempW = nTbW \\ iTempH = 4\end{matrix}, nTbW\times nTbH>16\right.\end{matrix}\right.$ (14) $left template : \left\{\begin{matrix}\left\{\begin{matrix}iTempW = 2 \\ iTempH = nTbH\end{matrix},\right. & nTbW \times nTbH \leq 16 \\ \left\{\begin{matrix}iTempW = 4 \\ iTempH = nTbH\end{matrix},\right. & nTbW \times nTbH > 16\end{matrix}\right.$ (15)

In some embodiments, when determining a first matching template according to multiple candidate vector parameters, taking the position of the current point as a starting point, a region that is indicated by the multiple candidate vector parameters, has a same shape as the first template and contains a same number of sample values, is determined as the first matching template.

Exemplarily, in the embodiments of the present disclosure, when determining the first matching template, motion compensation is performed for the obtained multiple BVC candidates (i.e., the candidate block vector parameters satisfying the preset availability condition) by using the first template of the current block, to obtain a template at the corresponding BV (the first matching template). FIG. 15 is a schematic diagram of template motion compensation, as shown in FIG. 15, if the BV (BVC candidate) is available, motion compensation is performed by using the first template and the BV, to obtain a template at the corresponding BV, i.e., the first matching template.

It can also be understood that, in the embodiments of the present disclosure, the preset error criterion may include but is not limited to any one of: sum of absolute differences (SAD), sum of absolute transformed differences (SATD), sum of squared errors (SSE), mean absolute difference (MAD), mean absolute error (MAE), mean squared error (MSE), etc.

Exemplarily, in the embodiments of the present disclosure, when performing the cost calculation, i.e., when determining the first cost values, there are multiple selections for a cost function for calculating a cost of a template region, i.e., there may be multiple selections for the preset error criterion. For example, an evaluation criterion such as sum of absolute differences (SAD), sum of absolute transformed differences (SATD), sum of squared errors (SSE), mean absolute difference (MAD), mean absolute error (MAE), mean squared error (MSE), etc., may be selected. A certain evaluation criterion mentioned in the following content may be selected from the above criteria, and taking an evaluation criterion of SAD as an example, a calculation formula is as follows: $SAD = {\sum }_{i = 0}^{predTempSizeW - 1} {\sum }_{j = 0}^{predTempSizeH - 1} \left.\left|predTemp\left[i\right]\left[j\right]-recTempC\left[i\right]\left[j\right]\right|\right)$ (16) where *predTempSizeW* is the width of the template, *predTempSizeH* is the height of the template, *predTemp*[*i*][*j*] is a pixel point of the template at the BV, and *recTempC*[*i*][*j*] is a pixel point of the template of the current block.

Furthermore, in some embodiments, the method may further include: in response to the first template and the first matching templates not satisfying the preset existence condition, determining a first candidate vector parameter satisfying the preset availability condition in the third reference prediction parameter set as the first candidate reference prediction parameter; or, in response to the first template and the first matching templates not satisfying the preset existence condition, determining a candidate vector parameter satisfying the preset availability condition at a second position in the third reference prediction parameter set as the first reference prediction parameter.

That is, if the first template and the first matching template satisfy the preset existence condition, then a matching error between the first template of the current block and the first matching template may be calculated according to a preset error criterion, so as to select a candidate vector parameter corresponding to a minimum cost value as a first candidate reference prediction parameter; if the first template and the first matching template do not satisfy the preset existence condition, then a first candidate vector parameter satisfying the preset availability condition or a candidate vector parameter at a specified position in the third reference prediction parameter set may be determined as the first candidate reference prediction parameter.

Exemplarily, for whether the first template and the first matching template satisfy the preset existence condition, there are the following cases regarding template usage when calculating costs (i.e., cost values):
First type: both the upper template and the left template of the current block exist, and both the upper template and the left template at the corresponding BV exist, and in the case, both the upper template and the left template are available.
Second type: both the upper template and the left template of the current block exist, and only the upper template at the corresponding BV exists, and in this case, there are two methods: method 1: the left template at the corresponding BV does not exist and is directly not used, i.e., only the upper template is used for calculation. Method 2: the left template at the corresponding BV does not exist, and the leftmost template width column inside the reference block is used to replace the left template, i.e., the upper template and the left template are used for calculation.
Third type: both the upper template and the left template of the current block exist, and only the left template at the corresponding BV exists, and in this case, there are two methods: method 1: the upper template at the corresponding BV does not exist and is directly not used, i.e., only the left template is used for calculation. Method 2: the upper template at the corresponding BV does not exist, and the uppermost template height row inside the reference block is used to replace the upper template, i.e., the upper template and the left template are used for calculation.
Fourth type: only the upper template of the current block exists, and in this case, there are three methods: method 1: the upper template at the corresponding BV does not exist and is directly not used, and in this case, the finally selected BV is a first BVC or a BVC at a specified position in the BVC candidate list. Method 2: the upper template at the corresponding BV does not exist, and the uppermost template height row inside the reference block is used to replace the upper template. Method 3: the upper template at the corresponding BV exists, and is directly used.
Fifth type: only the left template of the current block exists, and in this case, there are three methods: method 1: the left template at the corresponding BV does not exist and is directly not used, and in this case, the finally selected BV is a first BVC or a BVC at a specified position in the BVC candidate list. Method 2: the left template at the corresponding BV does not exist, and the leftmost template width column inside the reference block is used to replace the left template. Method 3: the left template at the corresponding BV exists, and is directly used.
Sixth type: neither the upper template nor the left template of the current block exists, and in this case, the finally selected BV is a first BVC or a BVC at a specified position in the BVC candidate list.

Exemplarily, in the embodiments of the present disclosure, when determining the first candidate reference prediction parameter according to the respective first cost values of the multiple candidate vector parameters, for other cases except for cases where costs cannot be calculated, a cost for each candidate in the BVC candidate list is calculated and sorted, and the sort method includes but is not limited to sort methods such as bubble sort, selection sort, insertion sort, shell sort, merge sort, quick sort, radix sort, heap sort, counting sort, bucket sort, etc. Any number of BVCs with the minimum cost are selected as the finally selected BV (the first candidate reference prediction parameter), so as to perform BV-based chroma prediction. It is also to be noted that, when performing the cost value calculation for multiple candidate vector parameters, a cost may be calculated for each candidate vector parameter, and the candidate vector parameter with the minimum cost is always retained, and in this case, the list may not be needed, and even the sort may not be needed.

In this way, after obtaining one or more first candidate reference prediction parameters, the first reference prediction parameter set may be constructed.

In S2003: a first color component reference sample value and a second color component reference sample value of the current block are determined according to the first reference prediction parameter set.

It is to be noted that, in the embodiments of the present disclosure, the "reference prediction parameter" here is a parameter used for deriving a reference sample value of the current block, and may specifically be a vector parameter (e.g., BV or MV). Then, a mapping relationship between the first color component and the second color component may be derived, according to these reference sample values (Samples).

It is also to be noted that, if all candidate vector parameters in the third reference prediction parameter set are unavailable, i.e., all candidate block vector parameters in the third reference prediction parameter set do not satisfy the preset availability condition, then there is no available first candidate reference prediction parameter, and thus there is no first reference prediction parameter set. In this case, the method may further include: in response to all candidate vector parameters in the third reference prediction parameter set not satisfying the preset availability condition, determining a first color component reconstructed sample and a second color component reconstructed sample at a third position of the current block; and determine a first color component reference sample value and a second color component reference sample value of the current block according to the first color component reconstructed sample and the second color component reconstructed sample at the third position.

That is, in the embodiments of the present disclosure, a luma pixel and a chroma pixel at a designated position may also be acquired, where the designated position includes but is not limited to an adjacent row and an adjacent column of the current block, so as to obtain the first color component reference sample value and the second color component reference sample value of the current block.

In some embodiments, determining the first color component reference sample value and the second color component reference sample value of the current block according to the first reference prediction parameter set, may include: determining first color component reconstructed samples and second color component reconstructed samples respectively indicated by the one or more first candidate reference prediction parameters, according to the first reference prediction parameter set; determining a first color component reconstructed sample and a second color component reconstructed sample at a third position of the current block; and determining the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

In the embodiments of the present disclosure, determining first color component reconstructed samples and second color component reconstructed samples respectively indicated by the one or more first candidate reference prediction parameters, according to the first reference prediction parameter set, may include: determining a position of the current block; scaling the position of the current block to determine a position of a collocated first color component region of the current block; and scaling the first candidate reference prediction parameter to determine a scaled reference prediction parameter of the collocated first color component region of the current block; determining a reference block of the first color component according to the position of the first color component region and the scaled reference prediction parameter, and determining a first color component reconstructed sample indicated by the first candidate reference prediction parameter according to the reference block of the first color component; and determining a reference block of the second color component according to the position of the current block and the first candidate reference prediction parameter, and determining a second color component reconstructed sample indicated by the first candidate reference prediction parameter according to the reference block of the second color component.

In the embodiments of the present disclosure, the position of the first color component region may be obtained by scaling the position of the current block according to the preset sampling format; and the scaled reference prediction parameter of the first color component region may also be obtained by scaling the first candidate reference prediction parameter according to the preset sampling format. Here, for the preset sampling format, reference may be made to the above-mentioned Table 4. It needs to be noted that the scaled reference prediction parameter may be obtained by enlarging the chroma BV; however, considering that the luma BV may have a precision loss, the luma BV obtained by enlarging the chroma BV is not necessarily equal to the original luma BV (the second candidate reference prediction parameter).

Exemplarily, the current block is a chroma block, and the collocated first color component region is a collocated luma region. For acquiring the first color component reference sample value (luma reference sample), first, the position of the current block, i.e., a position of an upper-left corner chroma sample of the current block relative to an upper-left corner chroma sample of the current picture, chromaPos = (x, y), is acquired; chromaPos is scaled according to the color sampling format shown in Table 4, to obtain a collocated luma region position lumaPos = (xCb, yCb) corresponding to the current block.

Exemplarily, a chroma BV = (BVChor, BVCver) is acquired, and the chroma BV is scaled according to the color sampling format shown in Table 4, to obtain a luma BV = (BVYhor, BVYver) of the collocated luma region corresponding to the current block. The collocated luma region position lumaPos = (xCb, yCb) corresponding to the current block is acquired, the luma BV = (BVYhor, BVYver) is acquired, and an offset position (xCb + BVYhor, yCb + BVYver) corresponding to the collocated luma region corresponding to the current block is found, as shown in FIG. 16.

In a specific implementation, after obtaining the luma sample at the offset position, it may be downsampled to obtain a luma reference sample. In some embodiments, determining the first color component reconstructed sample indicated by the first candidate reference prediction parameter according to the reference block of the first color component, may include: performing downsampling processing on the reference block of the first color component to determine the first color component reconstructed sample indicated by the first candidate reference prediction parameter, so that a resolution of the first color component reconstructed sample is same as a resolution of the second color component reconstructed sample.

It should be noted that, in the embodiments of the present disclosure, performing downsampling processing on the reference block of the first color component to determine the first color component reconstructed sample indicated by the first candidate reference prediction parameter, may include: determining a downsampling method of the current block; and performing downsampling processing on the reference block of the first color component according to the downsampling method, to determine the first color component reconstructed sample indicated by the first candidate reference prediction parameter.

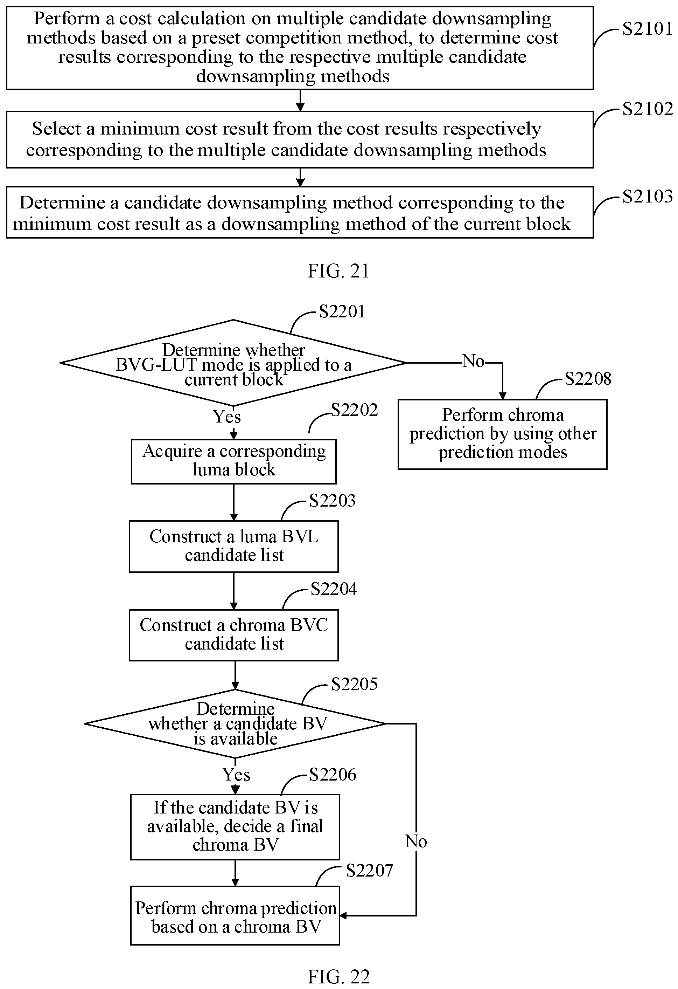

In some embodiments, for determining the downsampling method of the current block, as shown in FIG. 21, the method may include S2101 to S2103.

In S2101: a cost calculation is performed on multiple candidate downsampling methods based on a preset competition method to determine cost results respectively corresponding to the multiple candidate downsampling methods.

In S2102: a minimum cost result is selected from the cost results respectively corresponding to the multiple candidate downsampling methods.

In S2103: a candidate downsampling method corresponding to the minimum cost result is determined as the downsampling method of the current block.

It should be noted that, in the embodiments of the present disclosure, the preset competition method may be a rate-distortion optimization (RDO) method, for example, a full RDO competition method, a competition method with only one RDO selection, a competition method with a variable number of RDO selections, a competition method with a set number of RDOs, etc., and these methods are described in detail below.

Exemplarily, for performing downsampling on the luma reconstructed sample of the current block to obtain the downsampled luma sample, the preset competition method at the encoder side includes but is not limited to the following methods.

① The full RDO competition method is used.

Different sampling methods correspond to different luma downsampled reconstructed values; for each sampling method, prediction, transform, quantization, and reconstruction are performed to calculate the distortion and bits, and then the optimum is updated.

② One RDO selection is performed.

Different sampling methods correspond to different luma downsampled reconstructed values; for each sampling mode, prediction is performed, a distortion between the prediction value and the original value, including but not limited to SAD, SATD, etc., is calculated, a downsampling method with a minimum distortion is selected, and prediction, transform, quantization, and reconstruction are performed on this downsampling method to calculate the distortion and bits.

③ A variable number of RDO selections is performed.

By default, prediction, transform, quantization, and reconstruction are performed in downsampling method 1 to calculate the distortion and bits. In each of downsampling method 1 to downsampling method 6, a distortion between the prediction value and the original value, including but not limited to SAD, SATD, etc., is calculated, the distortions of downsampling method 2 to downsampling method 6 are compared with the distortion of downsampling method 1 sequentially, and if scale * distortion (downsampling method 2 to downsampling method 6) < distortion (downsampling method 1), where the value of scale includes but is not limited to 1, 1.5, 1.15, 1.3, etc., then the corresponding number of RDOs is increased.

④ A set number of RDO selections is performed.

One RDO is performed by using method ②, and the prediction value obtained by the this method is weighted with an intra prediction mode at a position pointed by BVL (including but not limited to being obtained from the center luma block), to obtain a prediction value for RDO; or the prediction value obtained by this method is weighted with a chroma prediction value at a position pointed by BVC (including but not limited to being obtained from the center luma block), to obtain a prediction value for RDO. It should be noted that, if the weighting calculation is added, a syntax element of weight_flag (indicating whether weighting is performed) or weight_idx (indicating a sequence number in weight value options, e.g., 0, 1/4, 1/2, 3/4, 1, etc.) should be correspondingly added in the bitstream.

It should also be noted that, in the embodiments of the present disclosure, since resolutions of the luma sample and the chroma sample are inconsistent, downsampling processing needs to be performed on the luma sample so that a resolution of the downsampled luma sample is the same as that of the chroma sample. Here, for determining the downsampling method of the current block, the following several candidate sampling methods may compete with each other or a certain sampling method may be used by default, but the following six sampling methods are included and not limited. Exemplarily, it is assumed that the luma sample before downsampling is recBvBefDownLuma, a width of a storage buffer is iRecRefLumaStride, and the downsampled luma sample is recBvAftDownLuma, then the downsampled luma sample at a position (i, j) is:
downsampling method 1 (as shown in FIG. 17A): $recBvAftDownLuma \left[i\right] \left[j\right] = \left(\begin{matrix}recBvBefDownLuma \left[2*i\right] * 2 \\ + recBvBefDownLuma \left[2*i+1\right] \\ + recBvBefDownLuma \left[2*i-1\right] \\ + recBvBefDownLuma \left[2*i+iRecRefLumaStride\right] * 2 \\ + recBvBefDownLuma \left[2*i+1+iRecRefLumaStride\right] \\ + recBvBefDownLuma \left[2*i-1+iRecRefLumaStride\right] + 4\end{matrix}\right) ≫ 3 ;$
downsampling method 2 (as shown in FIG. 17B): $recBvAftDownLuma \left[i\right] \left[j\right] = \left(\begin{matrix}recBvBefDownLuma \left[2*i\right] \\ + recBvBefDownLuma \left[2*i+1\right] + 1\end{matrix}\right) ≫ 1 ;$
downsampling method 3 (as shown in FIG. 17C): $recBvAftDownLuma \left[i\right] \left[j\right] = \left(\begin{matrix}recBvBefDownLuma \left[2*i\right] \\ + recBvBefDownLuma \left[2*i+iRecRefLumaStride\right] + 1\end{matrix}\right) ≫ 1 ;$
downsampling method 4 (as shown in FIG. 17D): $recBvAftDownLuma \left[i\right] \left[j\right] = \left(\begin{matrix}recBvBefDownLuma \left[2*i+iRecRefLumaStride\right] \\ + recBvBefDownLuma \left[2*i+1+iRefLumaStride\right] + 1\end{matrix}\right) ≫ 1 ;$
downsampling method 5 (as shown in FIG. 17E): $recBvAftDownLuma \left[i\right] \left[j\right] = \left(\begin{matrix}recBvBefDownLuma \left[2*i+1\right] \\ + recBvBefDownLuma \left[2*i+1+iRecRefLumaStride\right] + 1\end{matrix}\right) ≫ 1 ;$
downsampling method 6 (as shown in FIG. 17F): $recBvAftDownLuma \left[i\right] \left[j\right] = \left(\begin{matrix}recBvBefDownLuma \left[2*i\right] \\ + recBvBefDownLuma \left[2*i+1\right] \\ + recBvBefDownLuma \left[2*i+iRecRefLumaStride\right] \\ + recBvBefDownLuma \left[2*i+1+iRecRefLumaStride\right] + 2\end{matrix}\right) ≫ 2 .$

In some embodiments, the method may further include: determining a value of filter identification information; and performing encoding processing on the value of the filter identification information, and writing obtained encoded bits into a bitstream.

That is, in the embodiments of the present disclosure, the filter identification information is used to indicate an index number of the downsampling method of the current block in the multiple candidate downsampling methods. Thus, after the decoder side determines the value of the filter identification information by decoding the bitstream, the downsampling method of the current block may be directly determined. Here, the filter identification information may be represented by filter_idx, and the value of the filter identification information may be 0, 1, 2, 3, 4, 5, etc. In this way, after determining the downsampling method of the current block, the downsampled luma reference sample recBvAftDownLuma at the BV corresponding to the collocated luma region corresponding to the current block may be acquired through downsampling.

Furthermore, for the chroma sample of the current block, first, the position (xCbC, yCbC) of the current block is acquired, a chroma BV=(BVChor, BVCver) is acquired, a corresponding offset position (xCbC+ BVChor, yCbC + BVCver) is found, i.e., a chroma reference sample recBvChroma at the BV corresponding to the current block is acquired.

In some embodiments, for determining the first color component reconstructed sample and the second color component reconstructed sample at the third position of the current block, the method may include: determining a first template of the current block; and determine the first color component reconstructed sample and the second color component reconstructed sample at the third position, according to the first template.

It should be noted that, in the embodiments of the present disclosure, the first template includes one or more sample values in an adjacent decoded region of the current block. Correspondingly, a type of the first template may include at least one of: an upper template, an upper-right template, a left template, a lower-left template, and an upper-left template. The upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

That is, for the first color component reference sample value and the second color component reference sample value of the current block, not only first color component reconstructed samples and second color component reconstructed samples respectively indicated by one or more first candidate reference prediction parameters are included, but also the first color component reconstructed sample and the second color component reconstructed sample at the third position (e.g., the first template region) of the current block are included. The third position represents any designated position of the current block, and the position includes but is not limited to an adjacent row and an adjacent column of the current block.

In this way, the mapping relationship between the luma and the chroma may be constructed, according to the luma reference sample recBvAftDownLuma, the chroma reference sample recBvChroma, as well as the reconstructed luma sample and the reconstructed chroma sample at the third position.

In S2004: a mapping relationship between the first color component and the second color component is determined according to the first color component reference sample value and the second color component reference sample value.

It should be noted that, in a possible implementation, determining the mapping relationship between the first color component and the second color component according to the first color component reference sample value and the second color component reference sample value, may include: determining a first Look Up Table according to the first color component reference sample value and the second color component reference sample value, where the first Look Up Table is used for recording a value of the second color component that corresponds to an index key as the first color component.

It should also be noted that, in another possible implementation, determining the mapping relationship between the first color component and the second color component according to the first color component reference sample value and the second color component reference sample value, may include: determining a first discrete model according to the first color component reference sample value and the second color component reference sample value, where the first discrete model is used for indicating the mapping relationship between the first color component and the second color component.

That is, the mapping relationship here may be a Look Up Table (LUT). The index key in the Look Up Table may be the first color component, and the value of the Look Up Table may be the second color component, i.e., value = LUT[key]. Alternatively, the mapping relationship may also be a discrete model, used to represent a mapping relationship between key and value (key-value).

Exemplarily, it is assumed that the luma component is the key and the chroma component is the value, then each pair of key-value in the mapping relationship may be constructed in a manner including but not limited to: $LUT \left[recBvAftDownLuma\left[i\right]\left[j\right]\right] = recBvChroma \left[i\right] \left[j\right]$ (17)

It should also be noted that, in the embodiments of the present disclosure, the first color component parameter sample may also be limited within a preset sample range. In some embodiments, the method may further include: performing mapping processing on the first color component reference sample value to make the first color component reference sample value be within the preset sample range.

In the embodiments of the present disclosure, the preset sample range may be [0, (1<<bitdepth)-1], where bitdepth represents a bit depth. Exemplarily, the preset sample range may be a range of [0,255], [0,511], etc., but any limitation is not imposed. If there are multiple sample ranges, a rate-distortion cost method may be used to select one of them as a final preset sample range.

Exemplarily, taking a video with the bit depth greater than 8 bits as an example, it is assumed that the bit depth of the video is 10 bits, then the sample range is [0, 1023]. For the key value recBvAftDownLuma, it may be mapped to a preset sample range of [0, 255] or [0, 511].

Furthermore, in some embodiments, the method may further include: in a case where a same first reference sample value in the first color component reference sample values corresponds to different multiple second reference sample values in the second color component reference sample values, performing overwriting processing sequentially according to a sample order, and using a last second reference sample value as a value having a mapping relationship with the first reference sample value.

Furthermore, in some embodiments, the method may further include: in a case where a same first reference sample value in the first color component reference sample values corresponds to different multiple second reference sample values in the second color component reference sample values, performing an average calculation on the multiple second reference sample values, and using an obtained average value as a value having a mapping relationship with the first reference sample value.

That is, in the embodiments of the present disclosure, for different chroma values having the same key value in the mapping relationship, the entries with the same key value may be overwritten sequentially in the sample order, or an operation such as averaging may be used. Additionally, in the mapping relationship, the initialization setting of LUT[ ] is -1, i.e., an unavailable value. The "overwrite" mainly means that if there is a same key value later, the new value will be used for storage; but it is not limited thereto, all values may be stored and then an average value thereof may be obtained as the value corresponding to the key.

It can be understood that, in the embodiments of the present disclosure, other methods may also be used, for obtaining the first color component reference sample value and the second color component reference sample value used to construct the mapping relationship, which are exemplarily described below in conjunction with several implementations.

In another specific implementation, the luma sample is not downsampled, and in this case, the chroma sample may be upsampled to obtain a chroma reference sample. In some embodiments, determining the second color component reconstructed sample indicated by the first candidate reference prediction parameter according to the reference block of the second color component, may include: performing upsampling processing on the reference block of the second color component to determine the second color component reconstructed sample indicated by the first candidate reference prediction parameter, so that a resolution of the first color component reconstructed sample is same as a resolution of the second color component reconstructed sample.

That is, in the embodiments of the present disclosure, after acquiring the reconstructed luma sample recBvBefDownLuma of the collocated luma region, downsampling is not performed. In this case, after acquiring the reconstructed chroma sample recBvChroma at the BV corresponding to the current block, upsampling needs to be performed, including but not limited to linear interpolation and other methods, to obtain the reconstructed chroma sample recBvChromaUp with the same size as the reconstructed luma sample at the BV.

In this way, the reconstructed luma sample recBvBefDownLuma at the BV is used as a luma reference sample, and the obtained upsampled reconstructed chroma sample recBvChromaUp is used as a chroma reference sample; then, the mapping relationship between the luma and the chroma is constructed based on the luma reference sample and the chroma reference sample.

Correspondingly, in the embodiments of the present disclosure, downsampling processing also needs to be performed on the prediction value of the second color component of the current block. That is, if the reconstructed chroma samples of the current block are upsampled when constructing the mapping relationship, then when performing prediction from luma to chroma on the current block according to the mapping relationship, it also needs to perform a downsampling operation on the obtained chroma prediction value to obtain the final chroma prediction value of the current block. The downsampling method includes but is not limited to average downsampling, etc.

In another specific implementation, the method may further include: determining a first template of the current block; determining a first color component reference sample value and a second color component reference sample value of the current block according to the first template.

In the embodiments of the present disclosure, the first color component reference sample value and the second color component reference sample value used for constructing the mapping relationship may also include the first color component reference sample value and the second color component reference sample value determined by the first template of the current block. Specifically, a collocated first color component region template of the first template may be determined according to the first template of the current block; then, the first color component reference sample value may be determined according to a reconstructed sample in the first color component region template; and the second color component reference sample value may be determined according to a reconstructed sample in the first template. The first template includes one or more reconstructed samples in an adjacent decoded region of the current block.

Exemplarily, a chroma reference sample may be acquired according to a current chroma template of the current block; after determining a collocated luma region template of the current chroma template, a luma reference sample may be acquired according to the collocated luma region template. Then, combining the luma reference samples and the chroma reference samples obtained in the above embodiments, the mapping relationship between the luma and the chroma is constructed according to these luma reference samples and chroma reference samples.

In S2005: a prediction value of the second color component of the current block is determined according to the mapping relationship and a first color component sample value of the current block.

It should be noted that, in the embodiments of the present disclosure, determining the first color component sample value of the current block, may include: determining a reconstructed pixel sample of a collocated first color component region of the current block; determining the first color component sample value of the current block based on the reconstructed pixel sample of the first color component region. The reconstructed pixel sample of the first color component region may be directly used as the first color component sample value of the current block, or filtering processing may be performed on the reconstructed pixel sample of the first color component region and the filtered reconstructed pixel sample may be used as the first color component sample value of the current block, which is not limited in any way here.

Exemplarily, in the embodiments of the present disclosure, the filtering processing is downsampling processing. Here, the reconstructed luma sample recBefDownLuma at the collocated luma region position lumaPos = (xCb, yCb) corresponding to the current block may be acquired, the luma sample is downsampled to obtain a downsampled reconstructed luma sample recAftDownLuma, and the downsampled reconstructed luma sample is used as the first color component sample value of the current block. In addition, if the mapping processing of the sample range has been performed on the luma reference sample, then it also needs to perform the same mapping processing of the sample range on the downsampled reconstructed luma sample, so as to obtain the first color component sample value of the current block.

In some embodiments, determining the prediction value of the second color component of the current block according to the mapping relationship and the first color component sample value of the current block, may include: in a case where a first color component value equal to the first color component sample value is found in the mapping relationship, determining a value of the second color component corresponding to the first color component value as the prediction value of the second color component of the current block.

Exemplarily, in the embodiments of the present disclosure, it is assumed that the predicted value of the current block is predSamples, then for predSamples [cIdx][x][y], the variable cIdx specifies a color component index of the current block, and the following prediction method may be used here:
deriving the chroma prediction value by using the mapping relationship (the discrete model) constructed in the above embodiments, with reference to the collocated luma value Yc.

In some embodiments, for determining the prediction value of the second color component of the current block, the method may further include: in a case where no first color component value equal to the first color component sample value is found in the mapping relationship, performing modification processing on the first color component sample value to determine a first color component modification value, and continuing to find in the mapping relationship for whether there is a first color component value equal to the first color component modification value.

In a specific embodiment, performing modification processing on the first color component reconstructed value to determine the first color component modification value, may include: performing an offset calculation on the first color component sample value according to one or more preset offset values to determine the first color component modification value.

In the embodiments of the present disclosure, the offset values may be +1, -1, +2, -2, +3, -3, etc., and both the number and specific values of the offset values are not limited. In addition, for the modification processing of the first color component reconstructed value, the multiple offset values may also be set in a certain order, for example, the modification processing is performed in the order of {+1, -1, +2, -2, +3, -3}.

Exemplarily, in the embodiments of the present disclosure, for the mapping relationship constructed in the above embodiments, if Yc is not found in the input luma set therein, the processing method includes but is not limited to: performing modification processing on Yc in the order of {Yc+1, Yc-1, Yc+2, Yc-2, Yc+3, Yc-3}, then performing a matching check in the input luma set according to the modified Yc, and then determining a value corresponding to the modified Yc as the chroma prediction value of the current block.

In some embodiments, for determining the prediction value of the second color component of the current block, the method further includes: in a case where no first color component value equal to the first color component modification value is found in the mapping relationship, performing an average calculation on the second color component reference sample values, and determining an obtained average value as the prediction value of the second color component of the current block.

Exemplarily, in the embodiments of the present disclosure, for the mapping relationship constructed in the above embodiments, if Yc is not found in the input luma set therein, the processing method includes but is not limited to: performing modification processing on Yc in the order of {Yc+1, Yc-1, Yc+2, Yc-2, Yc+3, Yc-3}; if all the above-mentioned modified Yc cannot be matched in the mapping relationship, then the chroma prediction value may be set to an average value of the reconstructed chroma sample recBvChroma at the corresponding BV.

In some embodiments, for determining the prediction value of the second color component of the current block, the method further includes: determining a first initial prediction value of the second color component of the current block according to the mapping relationship and the first color component sample value of the current block; and performing a modification operation on the first initial prediction value to determine the prediction value of the second color component of the current block.

It should be noted that, in the embodiments of the present disclosure, for performing the modification operation on the first initial prediction value obtained according to the mapping relationship, the modification operation here may include a clip operation, a filtering operation, a weighting operation with a prediction value obtained from another prediction mode, etc., which is not limited thereto.

In a specific embodiment, performing the modification operation on the first initial prediction value to determine the prediction value of the second color component of the current block, includes: performing prediction processing on the second color component of the current block according to a first preset mode, to determine a second initial prediction value of the second color component of the current block; and performing a weighting calculation on the first initial prediction value and the second initial prediction value to determine the prediction value of the second color component of the current block. It should be noted that, in the embodiments of the present disclosure, the first preset mode at least includes one of: a PLANAR mode, a DM mode, a DC mode, and a CCLM mode. That is, performing the modification operation on the first initial prediction value obtained according to the mapping relationship, may include but is not limited to, performing weighting with the CCLM-like mode or another prediction mode, so as to obtain the chroma prediction value of the current block.

In another specific embodiment, performing the modification operation on the first initial prediction value to determine the prediction value of the second color component of the current block, may include: limiting the first initial prediction value within a preset value range, which may also be referred to as a "clip operation". It should be noted that, in the embodiments of the present disclosure, a lower limit value of the preset value range is a minimum prediction value (min), and an upper limit value of the preset value range is a maximum prediction value (max). If the first initial prediction value is within the preset value range, the first initial prediction value may be used as the chroma prediction value of the current block; if the first initial prediction value is greater than max, then max may be used as the chroma prediction value of the current block; if the first initial prediction value is less than min, then min may be used as the chroma prediction value of the current block.

In some embodiments, for determining the prediction value of the second color component of the current block, the method further includes: in response to the first reference prediction parameter set including multiple first candidate reference prediction parameters, determining multiple third initial prediction values of the second color component of the current block; and performing a weighting calculation on the multiple third initial prediction values, to determine the prediction value of the second color component of the current block.

It should be noted that, in the embodiments of the present disclosure, if multiple BVs (first candidate reference prediction parameters) are determined in the above embodiments, then multiple third initial prediction values may be obtained according to the multiple BVs; then, the multiple third initial prediction values are weighted, and the weighted prediction values are taken as the chroma prediction value of the current block; or, the weighted prediction values may continue to be further modified, including but not limited to being weighted with the CCLM-like mode or another prediction mode, so as to obtain the chroma prediction value of the current block.

In a specific embodiment, for determining the prediction value of the second color component of the current block, the method may further include: in response to the first reference prediction parameter set including multiple first candidate reference prediction parameters, determining first color component reconstructed samples and second color component reconstructed samples respectively indicated by the multiple first candidate reference prediction parameters; determining multiple mapping relationships between the first color component and the second color component, according to the first color component reconstructed samples and the second color component reconstructed samples respectively indicated by the multiple first candidate reference prediction parameters; determining multiple third initial prediction values of the second color component of the current block according to the multiple mapping relationships; and performing a weighting calculation on the multiple third initial prediction values to determine the prediction value of the second color component of the current block.

It should be noted that, in the embodiments of the present disclosure, multiple blocks of the collocated luma region are acquired, and the positions of the multiple blocks include but are not limited to the following positions, as shown in FIG. 11. The multiple blocks may correspond to multiple luma BVs, the multiple luma BVs are respectively used to construct candidate items of respective chroma BVC candidate lists, and the availability of BVs in the candidate lists is determined, so as to decide a BV or multiple BVs, or to decide multiple groups of BVs through clustering; for the multiple groups of BVs, multiple mapping tables LUTs between the luma and the chroma may be constructed, and in this way, multiple initial chroma prediction values may be obtained according to the multiple mapping tables LUTs, and the chroma prediction value of the current block may be obtained through a weighting calculation.

In some embodiments, for determining the prediction value of the second color component of the current block, the method may include: in response to a first color component block of the current block including multiple candidate blocks, determining a second reference prediction parameter set of the current block, where the second reference prediction parameter set includes multiple second candidate reference prediction parameters; determining multiple first candidate reference prediction parameters according to the multiple second candidate reference prediction parameters; and determining multiple candidate mapping relationships between the first color component and the second color component based on the multiple first candidate reference prediction parameters; determining a target mapping relationship from the multiple candidate mapping relationships; and determining the prediction value of the second color component of the current block according to the target mapping relationship and the first color component sample value of the current block.

In a specific embodiment, determining the target mapping relationship from the multiple candidate mapping relationships, may include: performing a cost calculation on the multiple candidate mapping relationships respectively, to determine cost results respectively corresponding to the multiple candidate mapping relationships; and determining a minimum cost result from the cost results respectively corresponding to the multiple candidate mapping relationships, and determining a candidate mapping relationship corresponding to the minimum cost result as the target mapping relationship.

It should be noted that, in the embodiments of the present disclosure, the method of the distortion value may be used to determine the cost result, and specifically a rate-distortion cost method may be used to determine the cost result; however, it may also be a size of SAD, a size of MSE, a size of SSE, or other criteria for determining the cost, which is not specifically limited here.

Furthermore, in some embodiments, the method further includes: determining a mapping relationship index value, where the mapping relationship index value is used to indicate an index number of the target mapping relationship in the multiple candidate mapping relationships; and performing encoding processing on the mapping relationship index value, and writing obtained encoded bits into a bitstream.

It should also be noted that, in the embodiments of the present disclosure, the mapping relationship index value may also be determined according to an index number of a candidate mapping relationship corresponding to the minimum cost result among the multiple candidate mapping relationships, and written into the bitstream, so that the decoder side can determine the corresponding target mapping relationship according to the mapping relationship index value obtained through decoding.

That is, in the embodiments of the present disclosure, multiple mapping tables LUTs between the luma and the chroma may be constructed, and then a syntax element is used to indicate a selected target mapping table LUT. Exemplarily, multiple blocks of the collocated luma region are acquired, and positions of the multiple blocks include but are not limited to the following positions, as shown in FIG. 11. The multiple blocks may correspond to multiple luma BVs, and the multiple luma BVs are respectively used to construct candidate items of respective chroma BVC candidate lists, and the availability of the BVs in the candidate lists is determined, so as to decide a BV or multiple BVs, or to decide multiple groups of BVs through clustering; the respective available chroma BVCs of the multiple blocks can respectively construct a mapping table LUT; at the decoder side, the mapping relationship index value may be determined by decoding the corresponding syntax element; then the target mapping relationship may be determined according to the mapping relationship index value, thereby determining the chroma prediction value of the current block. It should be noted that the number of mapping relationships constructed here may be arbitrarily designated, for example, the number may be set to 4, but any limitation is not imposed.

In some embodiments, for determining the prediction value of the second color component of the current block, the method may include: in response to a first color component block of the current block including multiple candidate blocks, determining a second reference prediction parameter set of the current block; where the second reference prediction parameter set includes multiple second candidate reference prediction parameters; determining multiple first candidate reference prediction parameters according to the multiple second candidate reference prediction parameters; determining multiple candidate mapping relationships between the first color component and the second color component based on the multiple first candidate reference prediction parameters; performing a matching error calculation on the multiple candidate mapping relationships based on a template matching method, to determine respective second cost values of the multiple candidate mapping relationships; determining a minimum cost value from the respective second cost values of the multiple candidate mapping relationships, and determining a candidate mapping relationship corresponding to the minimum cost value as a target mapping relationship; and determining the prediction value of the second color component of the current block according to the target mapping relationship and the first color component sample value of the current block.

In a specific embodiment, performing the matching error calculation on the multiple candidate mapping relationships based on the template matching method, to determine the respective second cost values of the multiple candidate mapping relationships, includes: determining a first template of the current block; determining a reconstructed pixel sample value of a collocated first color component region template of the first template; determining respective prediction values of the second color component of the first template under the multiple mapping relationships, according to the multiple candidate mapping relationships and the reconstructed pixel sample value of the first color component region template; and performing a cost calculation according to a reconstructed value of the second color component of the first template and the respective prediction values of the second color component of the first template under the multiple mapping relationships, to determine the respective second cost values of the multiple candidate mapping relationships.

It should be noted that, in the embodiments of the present disclosure, multiple mapping tables LUTs between the luma and the chroma may be constructed, and then a template is used to select which mapping table LUT to use. Exemplarily, multiple blocks of the collocated luma region are acquired, and positions of the multiple blocks include but are not limited to the following positions, as shown in FIG. 11. The multiple blocks may correspond to multiple luma BVs, and the multiple luma BVs are respectively used to construct candidate items of respective chroma BVC candidate lists, and the availability of the BVs in the candidate lists is determined, so as to decide a BV or multiple BVs, or to decide multiple groups of BVs through clustering; the respective available chroma BVCs of the multiple blocks can respectively construct a mapping table LUT; the template of the current block is predicted by using different mapping tables LUTs, and a difference with the reconstructed value of the template is calculated, to decide which mapping relationship to specifically use, and then the finally decided mapping relationship is used to determine the chroma prediction value of the current block. It should be noted that the number of mapping relationships constructed here may be arbitrarily designated, for example, the number may be set to 4, but any limitation is not imposed.

In a specific embodiment, a specific process of performing LUT prediction on the template of the current block is as follows:
acquiring a reconstructed luma sample recBefDownLumaR at a collocated luma region template position lumaPos = (xCbR, yCbR) corresponding to the template of the current block, performing downsampling on the luma sample to obtain a downsampled reconstructed luma sample recAftDownLumaR, and performing the mapping processing of the same sample range on the sample.

It is assumed that the prediction value of the template of the current block is predSamplesR, then for predSamplesR[cIdx][x][y], a variable cIdx specifies a color component index of the current block, and a prediction method is: deriving the prediction value by using the constructed mapping relationship, with reference to the collocated luma value Yc. If Yc is not found in the input luma set in the constructed mapping relationship, then the processing method includes but is not limited to: checking in the order of {Yc+1, Yc-1, Yc+2, Yc-2, Yc+3, Yc-3}, and if all the above-mentioned values cannot be matched in the mapping relationship, the chroma prediction value of the current block is set to an average value of the reconstructed chroma sample recBvChroma at the corresponding BV.

When the cost calculation is performed on the template of the current block and the template prediction value of each LUT, there are the following several cases of the usage of the template.

First type: both the upper template and the left template of the current block exist, and in this case, both the upper template and the left template are available.

Second type: only the upper template of the current block exists, and in this case, only the upper template is available.

Third type: only the left template of the current block exists, and in this case, only the left template is available.

Fourth type: neither the upper template nor the left template of the current block exists, and in this case, the finally selected LUT is a first LUT constructed or a LUT at a specified position.

Exemplarily, in the embodiments of the present disclosure, it is assumed that the reconstructed value of the template of the current block is recSamplesR, there are multiple selections for a cost function for calculating template region costs, for example, the evaluation criteria such as sum of absolute differences (SAD), sum of absolute transformed differences (SATD), sum of squared errors (SSE), mean absolute difference (MAD), mean absolute error (MAE), and mean squared error (MSE) may be selected. One of the above criterias may be selected for a certain evaluation criterion mentioned in the following content, and taking the evaluation criterion of SAD as an example, a calculation formula is as follows: $SAD = {\sum }_{i = 0}^{predTempSizeW - 1} {\sum }_{j = 0}^{predTempSizeH - 1} \left.\left|predSamplesR\left[i\right]\left[j\right]-recSamplesR\left[i\right]\left[j\right]\right|\right)$ (18) where predTempSizeW is a width of the template , predTempSizeH is a height of the template, predSamplesR[i][j] is a prediction pixel point of the template of the current block, processed through the LUT, and recSamplesR[i][j] is a reconstructed pixel point of the template of the current block.

It should also be noted that, in the embodiments of the present disclosure, for selecting the final LUT by using the template of the current block, for other cases except for cases where costs cannot be calculated, a cost of each constructed LUT candidate is calculated and sorted; the sort method include but is not limited to sort methods such as bubble sort, selection sort, insertion sort, shell sort, merge sort, quick sort, radix sort, heap sort, counting sort, bucket sort, etc. A LUT candidate with a minimum cost is selected as a finally used LUT.

In S2006: a residual value of the second color component of the current block is determined according to the prediction value of the second color component of the current block.

It should be noted that, in the embodiments of the present disclosure, an initial value of the second color component of the current block is determined, and a residual value of the second color component of the current block is determined according to the initial value and the prediction value. Specifically, a subtraction operation may be performed on the initial value and the prediction value to obtain the residual value of the second color component of the current block.

In some embodiments, the method further includes: performing encoding processing on the residual value of the second color component of the current block, and writing obtained encoded bits into a bitstream. Thus, the decoder side then can restore a reconstructed value of the second color component of the current block according to the residual value and the prediction value.

In some embodiments, determining the prediction parameter of the current block, may include: determining a prediction mode of the current block; and determining the prediction parameter of the current block according to the prediction mode of the current block.

It should be noted that, in the embodiments of the present disclosure, determining the prediction mode of the current block, may include: determining multiple candidate modes of the current block; where the multiple candidate modes include a first prediction mode and other prediction modes other than the first prediction mode; performing a cost calculation on the multiple candidate modes based on a preset cost method, to determine cost results respectively corresponding to the multiple candidate modes; and determining a minimum cost result from the cost results respectively corresponding to the multiple candidate modes, and determining a candidate mode corresponding to the minimum cost result as the prediction mode of the current block; where the preset cost method at least includes one of: a rate-distortion cost method and a template matching method.

It should also be noted that, in the embodiments of the present disclosure, for the prediction mode of the current block, the BVG-LUT mode and other modes may be used simultaneously at the encoder side. In the DM mode, competition with other modes in addition to the BVG-LUT mode may also be performed. A finally used mode is decided according to template costs. For example, for directly using the BV obtained from luma, BV copy may be directly used, or the BVG-LUT mode defined in the embodiments of the present disclosure may also be used; after both modes are applied to the template of the current block, the one with a smaller template cost is selected as the prediction mode of the current block.

In some embodiments, the method further includes: determining a collocated first color component region of the current block; and in a case where a DM mode is used for the current block and the first color component region is predicted based on a block vector, determining that a first prediction mode is used for the current block.

It should be noted that, in the embodiments of the present disclosure, the collocated first color component region of the current block is determined; and in a case where the DM mode is used for the current block and the first color component region is predicted based on the block vector, it is determined that the first prediction mode is used for the current block.

Exemplarily, in the embodiments of the present disclosure, under dual tree partition, in the DM mode, if the corresponding luma region has BV information, the current block is predicted by using the first prediction mode (BVG-LUT mode). For example:
if CuPredMode[0][xCb+cbWidth/2][yCb+cbHeight/2] is equal to MODE_IBC, and intra_bvglut_flag is set to 1, then BVG-LUT is used for the chroma intra prediction mode IntraPredModeC[xCb][yCb];
if CuPredMode[0][xCb+cbWidth/2][yCb+cbHeight/2] is equal to MODE_INTRA, and if IntraTmpFlag[xCb+cbWidth/2][yCb+cbHeight/2] is equal to 1, and intra_bvglut_flag is set to 1, then BVG-LUT is used for the chroma intra prediction mode IntraPredModeC[xCb][yCb].

In the embodiments of the present disclosure, the first syntax element may be used to indicate whether BVG-LUT is used for the current block, and the first syntax element may be represented by intra_bvgplt_flag or bvgplt_flag. The chroma prediction mode is derived as follows:
the chroma intra prediction mode IntraPredModeC[xCb][yCb] uses cclm_mode_flag, cclm_mode_idx, intra_chroma_pred_mode, lumaIntraPredMode, and lumaTempPredMode, specified in the table below. These filling items other than the BVG-LUT mode give corresponding values exemplarily, but are not required to be filled with those values. Table 9 shows an example of chroma prediction mode derivation. As shown in Table 9, 0 represents Planar mode, 1 represents DC mode, 18 represents horizontal mode, 50 represents vertical mode, and 81 to 83 represent CCLM modes.

According to Table 9, it can be seen that in the DM mode, if intra_bvglut_flag == 1, that is, the information acquired from the center position block of the collocated luma region contains a BV, then the BVG-LUT mode is used for the chroma intra prediction mode IntraPredModeC[xCb][yCb].

In some embodiments, the method further includes: determining a value of a second syntax element; and in response to the second syntax element indicating that a first prediction mode is allowed to be used for the current block, performing the determination of the prediction parameter of the current block.

In some embodiments, the method further includes: determining a value of a second syntax element; where the second syntax element is used to indicate whether a first prediction mode is allowed to be used for the current block; and performing encoding processing on the value of the second syntax element, and writing obtained encoded bits into a bitstream.

It should be noted that, in the embodiments of the present disclosure, the second syntax element may be represented by BvglutEnabled. If the value of the second syntax element is a first value, the second syntax element indicates that the first prediction mode is allowed to be used for the current block; if the value of the second syntax element is a second value, the second syntax element indicates that the first prediction mode is not allowed to be used for the current block.

It should also be noted that, in the embodiments of the present disclosure, the first value is different from the second value. The first value and the second value may be in a parameter form or a numeric form. Specifically, both the first syntax element and the second syntax element may be parameters written in a profile, or may be values of a flag/identifier, which are not limited here.

Exemplarily, the first value may be set to 1 and the second value may be set to 0; or, the first value may be set to 0 and the second value may be set to 1; or, the first value may be set to true and the second value may be set to false; or, the first value may be set to false and the second value may be set to true. In the embodiments of the present disclosure, the first value may be set to 1 and the second value may be set to 0, but any limitation is not imposed thereto.

Exemplarily, in the embodiments of the present disclosure, if the syntax elements sps_ibc_enabled_flag is equal to 0 and sps_intratmp_enabled_flag is equal to 0, then BvglutEnabled is equal to 0. Otherwise, a variable ModeIncludeBv is set, and if the corresponding luma block is not encoded in the mode with BV information, then ModeIncludeBv is equal to 0; otherwise, ModeIncludeBv is equal to 1.

In a possible implementation, if the following multiple conditions are simultaneously true (including but not limited to the following conditions), then BvglutEnabled is equal to 1:
ModeIncludeBv is equal to 1;
sh_slice_type is equal to an I-frame;
CtbLog2SizeC is less than or equal to MaxChromaIbcSize; where MaxChromaIbcSize may be determined according to the chroma CTU size or a preset value.

In another possible implementation, if the following multiple conditions are simultaneously true (including but not limited to the following conditions), then BvglutEnabled is equal to 1:
ModeIncludeBv is equal to 1;
CtbLog2SizeC is less than or equal to MaxChromaIbcSize; where MaxChromaIbcSize may be determined according to the chroma CTU size or a preset value.

In another possible implementation, if the following multiple conditions are simultaneously true (including but not limited to the following conditions), then BvglutEnabled is equal to 1:
CtbLog2SizeC is less than or equal to MaxChromaIbcSize; where MaxChromaIbcSize may be determined according to the chroma CTU size or a preset value.

For each possible implementation, otherwise, BvglutEnabled is equal to 0. Here, if BvglutEnabled is equal to 0, then the value of the first syntax element may be inferred to be 0.

Furthermore, the embodiments of the present disclosure also provide a bitstream, where the bitstream is generated by performing bit encoding according to to-be-encoded information; where the to-be-encoded information includes at least one of: a residual value of a second color component of a current block, a value of filter identification information, a mapping relationship index value, a value of a first syntax element, and a value of a second syntax element.

In the embodiments of the present disclosure, the filter identification information is used to indicate a downsampling method of the current block, the first syntax element is used to indicate whether a first prediction mode is used for the current block, and the second syntax element is used to indicate whether the first prediction mode is allowed to be used for the current block.

The present embodiments provide an encoding method, including: determining a prediction parameter of a current block; determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; determining a mapping relationship between a first color component and a second color component according to the first color component reference sample value and the second color component reference sample value; and determining a prediction value of the second color component of the current block according to the mapping relationship and a first color component sample value of the current block. In this way, if a BVG-LUT mode is used for the current block, then a first reference prediction parameter set applied to a chroma component may be determined, and according to the first reference prediction parameter set, a luma component reference sample value and a chroma component reference sample value of the current block are determined, thereby constructing a mapping relationship between the luma component and the chroma component, and then the chroma component is predicted by utilizing the mapping relationship. That is, a correlation between a reconstructed sample and a sample of the current block in the current picture is fully utilized here, which improves a singularity of chroma prediction, thereby improving the accuracy of chroma prediction; moreover, according to the constructed mapping relationship, pixel-level prediction may also be effectively performed, thereby further saving bit rate, improving encoding and decoding efficiency, and then improving encoding and decoding performance.

In yet another embodiment of the present disclosure, based on the encoding and decoding methods described in the above embodiments, the embodiments of the present disclosure add a new prediction mode, i.e., the BVG-LUT mode (i.e., solution 1). In the flow of solution 1, from the decoding side, a bitstream is decoded to determine a prediction parameter of a current block, and when the prediction parameter indicates that the BVG LUT mode is used for the current block, a BV of a corresponding luma block is acquired, thea luma BV (BVL) is adjusted and applied to chroma, to construct a candidate list of chroma BVs (BVCs). Then, it is determined whether a BVC candidate item in the candidate list of chroma BVCs is available: if available, a decision stage is entered; if unavailable, the BVC may be adjusted to be available and then the decision stage is entered, or the BVC may be discarded and then a mapping relationship between the luma component and the chroma component is constructed directly by using a reconstructed luma sample and a reconstructed chroma sample at a designated position of the current block, to perform the BV-based chroma prediction.

Exemplarily, referring to FIG. 22, it is a detailed flow schematic diagram of an encoding method provided in the embodiments of the present disclosure. As shown in FIG. 22, the detailed flow may include S2201 to S2208.

In S2201: whether the BVG-LUT mode is applied to the current block, is determined.

In S2202: a corresponding luma block is acquired.

In S2203: a luma BVL candidate list is constructed.

In S2204: a chroma BVC candidate list is constructed.

In S2205: whether a candidate BV is available, is determined.

In S2206: if the candidate BV is available, a final chroma BV is decided.

In S2207: chroma prediction is performed based on the chroma BV.

In S2208: chroma prediction is performed by using other prediction modes.

It should be noted that, in the embodiments of the present disclosure, for the step S2201, if the determination result is No, i.e., the BVG-LUT mode is not applied to the current block, then the step S2208 is performed; if the determination result is Yes, i.e., the BVG-LUT mode is applied to the current block, then the steps S2202 to S2207 are performed. In addition, for the step S2205, if the determination result is No, then it is directly discarded, and then the step S2207 is performed; if the determination result is Yes, then the step S2206 is performed to perform the BV decision, and then the step S2207 is performed.

In a specific embodiment, for the encoding method of the embodiments of the present disclosure, specifically, it may include:

S1: a corresponding luma block is acquired (specifically, a reference luma block corresponding to the chroma component of the current block is acquired).

The acquisition method includes but is not limited to the following methods.

(Method 1) A center position block of a collocated luma region is acquired, as shown in FIG. 3:
a position of a current chroma block, i.e., a position of an upper-left corner chroma sample of the current chroma block relative to an upper-left corner chroma sample of the current picture, chromaPos = (x, y), is acquired, and chromaPos is scaled according to the chroma sampling format shown in Table 4, to obtain a collocated luma region position lumaPos = (xCb, yCb) corresponding to the current chroma block.

It is assumed that a position of a collocated luma pixel corresponding to an upper-left corner of the current chroma coding block relative to an upper-left corner luma pixel of the picture is (xCb, yCb), and a width of the collocated luma region corresponding to the current chroma coding block is cbWidth, and a height thereof is cbHeight.

The center position block of the luma region is a luma block containing a position coordinate (xCb+cbWidth>>1, yCb+cbHeight>>1); at this luma block position, multiple positions may be searched toward an upper-left, upper, and left, including but not limited to the following exemplary search positions:
an upper-left coordinate offset (xOffset, yOffset)=(-2,-2), an upper coordinate offset (xOffset, yOffset)=(0,-2), and a left coordinate offset (xOffset, yOffset)=(-2,0) of the center position block of the collocated luma region are acquired. The luma block used in the luma region is a luma block containing the position coordinate (xCb+cbWidth>>1 + xOffset , yCb+cbHeight>>1 + yOffset).

(Method 2) An upper-left corner block of the collocated luma region is acquired, as shown in FIG. 9:
a position of a current chroma block, i.e., a position of an upper-left corner chroma sample of the current chroma block relative to an upper-left corner chroma sample of the current picture, chromaPos = (x, y), is acquired, and chromaPos is scaled according to the chroma sampling format shown in Table 4, to obtain a collocated luma region position lumaPos = (xCb, yCb) corresponding to the current chroma block.

It is assumed that a position of a collocated luma pixel corresponding to an upper-left corner of the current chroma coding block relative to an upper-left corner luma pixel of the picture is (xCb, yCb), and a width of the collocated luma region corresponding to the current chroma coding block is cbWidth, and a height thereof is cbHeight.

The upper-left corner block of the luma region is a luma block containing a position coordinate (xCb, yCb); at this luma block position, multiple positions may be searched toward an upper-left, upper, and left, including but not limited to the following exemplary search positions:
an upper-left coordinate offset (xOffset, yOffset)=(-2,-2), an upper coordinate offset (xOffset, yOffset)=(0,-2), and a left coordinate offset (xOffset, yOffset)=(-2,0) of the upper-left corner block of the collocated luma region are acquired. The luma block used in the luma region is a luma block containing the position coordinate (xCb+xOffset, yCb+yOffset).

(Method 3) An lower-right corner block of the collocated luma region is acquired, as shown in FIG. 10:
a position of a current chroma block, i.e., a position of an upper-left corner chroma sample of the current chroma block relative to an upper-left corner chroma sample of the current picture, chromaPos = (x, y), is acquired, and chromaPos is scaled according to the chroma sampling format shown in Table 4, to obtain a collocated luma region position lumaPos = (xCb, yCb) corresponding to the current chroma block.

It is assumed that a position of a collocated luma pixel corresponding to an upper-left corner of the current chroma coding block relative to an upper-left corner luma pixel of the picture is (xCb, yCb), and a width of the collocated luma region corresponding to the current chroma coding block is cbWidth, and a height thereof is cbHeight.

The upper-left corner block of the luma region is a luma block containing a position coordinate (xCb+cbWidth-1, yCb+cbHeight-1); at this luma block position, multiple positions may be searched toward an upper-left, upper, and left, including but not limited to the following exemplary search positions:
an upper-left coordinate offset (xOffset, yOffset)=(-2,-2), an upper coordinate offset (xOffset, yOffset)=(0,-2), and a left coordinate offset (xOffset, yOffset)=(-2,0) of the lower-right corner block of the collocated luma region are acquired. The luma block used in the luma region is a luma block containing the position coordinate (xCb+cbWidth-1+xOffset, yCb+cbHeight-1+yOffset).

(Method 4) blocks including five luma pixel positions (including but not limited to five positions, which may be multiple different positions) shown in FIG. 11 are acquired sequentially, where the order for acquiring sequentially includes but is not limited to the following order: C -> TL -> TR -> BL -> BR.

For a detailed position derivation process of C, TL, TR, BL, and BR:
a position of a current chroma block, i.e., a position of an upper-left corner chroma sample of the current chroma block relative to an upper-left corner chroma sample of the current picture, chromaPos = (x, y), is acquired, and chromaPos is scaled according to the chroma sampling format shown in Table 4, to obtain a collocated luma region position lumaPos = (xCb, yCb) corresponding to the current chroma block.

A position of a collocated luma pixel corresponding to an upper-left corner of the current chroma coding block relative to an upper-left corner luma pixel of the picture (i.e., a position of the luma pixel TL) is (xCb, yCb), and a width of the collocated luma region corresponding to the current chroma coding block is cbWidth, and a height thereof is cbHeight.

The coordinate of the position of the luma pixel C is (xCb + cbWidth / 2, yCb + cbHeight / 2).

The coordinate of the position of the luma pixel TL is (xCb, yCb).

The coordinate of the position of the luma pixel TR is (xCb + cbWidth - 1, yCb).

The coordinate of the position of the luma pixel BL is (xCb, yCb + cbHeight - 1).

The coordinate of the position of the luma pixel BR is (xCb + cbWidth - 1, yCb + cbHeight - 1).

When searching each position, multiple positions may be searched at this position toward upper-left, upper, and left, including but not limited to the following example search positions: an upper-left coordinate offset (xOffset, yOffset)=(-2,-2), an upper coordinate offset (xOffset, yOffset)=(0,-2), and a left coordinate offset (xOffset, yOffset)=(-2,0) of this position are acquired. The luma block used for the luma region is a luma block containing a position coordinate resulting from adding the above coordinate offset to the coordinate of the position.

S2: a luma BVL candidate list is constructed.

Based on the luma block obtained in S1, the obtained BVL information that is encoded in the mode with BV information is scaled, i.e., the chroma BV information BVC is obtained by using method 1 of S3, and then the availability determination in step S4 is performed; if available, the BVL information is added to the BVL list.

S3: a chroma BVC candidate list is constructed.

For the BVL candidate list obtained in S2, assuming the luma BV in the list is (BVLₕₒᵣ, BVLᵥₑᵣ) and the chroma BV is (BVCₕₒᵣ, BVCᵥₑᵣ), a chroma BVC candidate list including one or more candidates is constructed by adjusting the BVL or the BVC. A construction method is as described below. One of the methods may be used to construct the candidate list, or multiple methods may be used simultaneously to construct the list.

Method 1: it is scaled according to the chroma sampling format shown in Table 8, and the scaled BVC is added to the chroma BVC candidate list.

Method 2: after acquiring a BV of the corresponding luma block, it is denoted as a BVL, and a chroma BV obtained through the BVL is denoted as a BVC, and chroma BVC candidate items including one or more candidates are constructed by adjusting the BVL or the BVC.

The construction method of candidate items includes but is not limited to the following cases.

Construction method 1: the BVL is adjusted to form four cases, thereby implementing the adjustment to the BVC.

When the BVL is odd, four cases are taken, such as: BVL = (BVLₕₒᵣ, BVLᵥₑᵣ ), BVL = (BVLₕₒᵣ +1, BVLᵥₑᵣ ), BVL = (BVLₕₒᵣ, BVLᵥₑᵣ +1), BVL = (BVLₕₒᵣ +1, BVLᵥₑᵣ +1).

When the BVL is even, BVL = (BVLₕₒᵣ, BVLᵥₑᵣ) is taken.

Or:
When the BVL is even, four cases are taken, such as: BVL = (BVLₕₒᵣ, BVLᵥₑᵣ ), BVL = (BVLₕₒᵣ +1, BVLᵥₑᵣ ), BVL = (BVLₕₒᵣ, BVLᵥₑᵣ +1), BVL = (BVLₕₒᵣ +1, BVLᵥₑᵣ +1 ).

Here, BVC[0] = BVL[0] * 2 / SubWidthC; BVC[1] = BVL[1] * 2 / SubHeightC. Here, SubWidthC and SubHeightC are determined according to the corresponding relationship between sps_chroma_format_idc and a chroma format sampling structure in Table 1.

The BVL is scaled according to the above formula to obtain the BVC, so that when the BVL is odd or even, four BVC candidates are formed, and these candidates are added to the chroma BVC candidate list. Then, method 1 of S5 is used to decide a BVC from four BVCs for each BVL.

Construction method 2: the BVL is adjusted to form four cases, thereby implementing the adjustment to the BVC.

When the BVL is odd, four cases are taken, such as: BVL = (BVLₕₒᵣ, BVLᵥₑᵣ ), BVL = (BVLₕₒᵣ +1, BVLᵥₑᵣ ), BVL = (BVLₕₒᵣ, BVLᵥₑᵣ +1), BVL = (BVLₕₒᵣ +1, BVLᵥₑᵣ +1 ).

When the BVL is even, four cases are taken, such as: BVL = (BVLₕₒᵣ, BVLᵥₑᵣ ), BVL = (BVLₕₒᵣ -1, BVLᵥₑᵣ ), BVL = (BVLₕₒᵣ, BVLᵥₑᵣ -1), BVL = (BVLₕₒᵣ -1, BVLᵥₑᵣ -1 ).

The BVL is scaled according to the chroma sampling format in method 1 to obtain the BVC, so that when the BVL is odd or even, four BVC candidates are formed, and these candidates are added to the chroma BVC candidate list. This method may also unify operations in different cases of odd and even through the following calculation: four cases are taken, such as: BVL = (BVLₕₒᵣ-1, BVLᵥₑᵣ-1 ), BVL = (BVLₕₒᵣ +1, _{,} BVLᵥₑᵣ -1), BVL = (BVLₕₒᵣ-1, BVLᵥₑᵣ +1), BVL = (BVLₕₒᵣ +1, BVLᵥₑᵣ +1 ).

Construction method 3: the BVL is adjusted to form multiple cases, thereby implementing the adjustment to the BVC.

When the BVL is odd, multiple cases are taken, such as: BVL = (BVLₕₒᵣ, BVLᵥₑᵣ), BVL = (BVLₕₒᵣ+1, BVLᵥₑᵣ), BVL = (BVLₕₒᵣ, BVLᵥₑᵣ+1), BVL = (BVLₕₒᵣ+1, BVLᵥₑᵣ+1), BVL = (BVLₕₒᵣ+3, BVLᵥₑᵣ), BVL = (BVLₕₒᵣ, BVLᵥₑᵣ+3), BVL = (BVLₕₒᵣ+3, BVLᵥₑᵣ+3), BVL = (BVLₕₒᵣ-2, BVLᵥₑᵣ), BVL = (BVLₕₒᵣ, BVLᵥₑᵣ-2), etc., and a list is constructed sequentially, for these candidates.

When the BVL is even, multiple cases are taken, such as: BVL = (BVLₕₒᵣ, BVLᵥₑᵣ), BVL = (BVLₕₒᵣ -1, BVLᵥₑᵣ), BVL = (BVLₕₒᵣ, BVLᵥₑᵣ -1), BVL = (BVLₕₒᵣ -1, BVLᵥₑᵣ -1) , BVL = (BVLₕₒᵣ -3, BVLᵥₑᵣ), BVL = (BVLₕₒᵣ, BVLᵥₑᵣ -3), BVL = (BVLₕₒᵣ -3, BVLᵥₑᵣ -3), BVL = (BVLₕₒᵣ +2, BVLᵥₑᵣ), BVL = (BVLₕₒᵣ, BVLᵥₑᵣ +2), etc.

The BVL is scaled according to the chroma sampling format in method 1 to obtain the BVC, so that when the BVL is odd or even, multiple BVC candidates are formed, and these candidates are added to the chroma BVC candidate list.

Similar to method 2, it may also be uniformly expressed as: BVL = (BVLhor-1, BVLver-1), BVL = (BVLhor +1, BVLver-1), BVL = (BVLhor-1, BVLver +1), BVL = (BVLhor +1, BVLver +1), BVL = (BVLhor +3, BVLver-1), BVL = (BVLhor-1, BVLver +3), BVL = (BVLhor+3, BVLver +3), BVL = (BVLhor-3, BVLver -1), BVL = (BVLhor-1, BVLver -3), etc., are taken.

Construction method 4: the BVC obtained in method 1 is adjusted to obtain nine candidates.

BVC = (BVCₕₒᵣ, BVCᵥₑᵣ), BVC = (BVCₕₒᵣ -1, BVCᵥₑᵣ), BVC = (BVCₕₒᵣ, BVCᵥₑᵣ -1), BVC = (BVCₕₒᵣ -1, BVCᵥₑᵣ -1), BVC = (BVCₕₒᵣ+1, BVCᵥₑᵣ), BVC = (BVCₕₒᵣ, BVCᵥₑᵣ+1), BVC = (BVCₕₒᵣ+1, BVCᵥₑᵣ +1), BVC = (BVCₕₒᵣ-1, BVCᵥₑᵣ +1), BVC = (BVCₕₒᵣ+1, BVCᵥₑᵣ -1), are set, thus, nine BVC candidates are formed, and these candidates are added to the chroma BVC candidate list.

Construction method 5: the BVC obtained in method 1 is adjusted to obtain multiple candidates.

BVC = (BVCₕₒᵣ, BVCᵥₑᵣ), BVC = (BVCₕₒᵣ -1, BVCᵥₑᵣ), BVC = (BVCₕₒᵣ, BVCᵥₑᵣ -1), BVC = (BVCₕₒᵣ -1, BVCᵥₑᵣ -1), BVC= (BVCₕₒᵣ+1, BVCᵥₑᵣ), BVC= (BVCₕₒᵣ, BVCᵥₑᵣ+1), BVC = (BVCₕₒᵣ+1, BVCᵥₑᵣ +1), BVC = (BVCₕₒᵣ-1, BVCᵥₑᵣ +1), BVC = (BVCₕₒᵣ+1, BVCᵥₑᵣ -1), BVC= (BVCₕₒᵣ -2, BVCᵥₑᵣ), BVC = (BVCₕₒᵣ, BVCᵥₑᵣ -2), BVC = (BVCₕₒᵣ -2, BVCᵥₑᵣ -2), BVC = (BVCₕₒᵣ+2, BVCᵥₑᵣ), BVC= (BVCₕₒᵣ, BVCᵥₑᵣ+2), BVC = (BVCₕₒᵣ+2, BVCᵥₑᵣ +2), BVC = (BVCₕₒᵣ-2, BVCᵥₑᵣ +2), BVC = (BVCₕₒᵣ+2, BVCᵥₑᵣ -2), etc., are set, thus, multiple BVC candidates are formed, and these candidates are added to the chroma BVC candidate list.

In S4: whether the BV is available, is determined.

The position (xCb, yCb) of the current chroma block is acquired, and all BVC candidates obtained from S3 are acquired, for a BVC candidate, BVC = (BVCₕₒᵣ, BVCᵥₑᵣ), find the corresponding offset position (xCb + BVCₕₒᵣ, yCb + BVCᵥₑᵣ), and the following conditions including but not limited to the following conditions, are determined, if all conditions are satisfied, the candidate chroma BV is available, thereby constructing an available BVC candidate list:
whether the obtained offset position does not exceed the picture boundary;
whether the obtained offset position does not cover the current block, as shown in FIG. 12; $xCb + width + {BVC}_{hor} < = xCb or yCb + height + {BVC}_{ver} < = yCb ;$
whether the obtained offset position does not exceed the available region, as shown in FIG. 13;
whether the obtained offset position has been reconstructed.

If there is at least one BVC candidate available, then S5 is performed for the BV decision. If none is available, the luma and chroma pixels at a designated position are acquired, where the position includes but is not limited to an adjacent row and column of the current block, and S6 is proceeded to construct a LUT using template pixels.

In S5: the BV is decided.

It should be noted that if the available BVC candidate list obtained in S4 has only one BVC candidate, then the finally selected BV is the BVC.

It should also be noted that if the available BVC candidate list obtained in S4 has multiple BVC candidates, then a decision needs to be made on these BVCs to obtain the final BV, and the method of the decision includes but is not limited to the following methods:
all available BVCs in the BVC candidate list are used;
or:
using a template for the decision:
(a) template selection:
   According to the pixel availability of the adjacent region of the current coding block, it is determined whether the pixel at the template position is available, including the reconstructed chroma information. It includes but is not limited to: according to the relative position relationship between the template and the current coding block, the template may be classified into template types such as upper template, left template, upper-right template, lower-left template, upper-left template, as shown in FIG. 14.

The template sizes of different types for different coding blocks may be fixedly the same or may be different.

For example, for a template size, a same template size may be selected for the current block of any size, and the following formula illustrates a setting condition for a template size, where nTbW and nTbH are a width and a height of the current block respectively, and iTempW and iTempH are a width and a height of the used template respectively: $upper template : \left\{\begin{matrix}iTempW = nTbW \\ iTempH = 1\end{matrix}\right.$ (19) $left template : \left\{\begin{matrix}iTempW = 1 \\ iTempH = nTbH\end{matrix}\right.$ (20)

For example, different template sizes may be selected according to different sizes of the current block, and the following formulas describe a size setting condition of a template, where nTbW and nTbH are the width and height of the current block respectively, and iTempW and iTempH are the width and height of the used template respectively: $upper template : \left\{\begin{matrix}\left\{\begin{matrix}iTempW = nTbW \\ iTempH = 2\end{matrix}, min\left(nTbW, nTbH\right)\leq 4\right. \\ \left\{\begin{matrix}iTempW = nTbW \\ iTempH = 4\end{matrix}, min\left(nTbW, nTbH\right)>4\right.\end{matrix}\right.$ (21) $left template : \left\{\begin{matrix}\left\{\begin{matrix}iTempW = 2 \\ iTempH = nTbH\end{matrix}, min\left(nTbW, nTbH\right)\leq 4\right. \\ \left\{\begin{matrix}iTempW = 4 \\ iTempH = nTbH\end{matrix}, min\left(nTbW, nTbH\right)>4\right.\end{matrix}\right.$ (22) where $Min \left(x, y\right) = \left\{\begin{matrix}x , & x \leq y \\ y , & x > y\end{matrix}\right.$*.*

For example, different template sizes may also be selected according to a number of pixels in the current block, and the following formulas illustrate a size setting condition of a template, where nTbW and nTbH are a width and a height of the current block respectively, nTbW×nTbH is the number of pixels of the current block, and iTempW and iTempH are a width and a height of the used template respectively: $upper template : \left\{\begin{matrix}\left\{\begin{matrix}iTempW = nTbW \\ iTempH = 2\end{matrix}, nTbW\times nTbH\leq 16\right. \\ \left\{\begin{matrix}iTempW = nTbW \\ iTempH = 4\end{matrix}, nTbW\times nTbH>16\right.\end{matrix}\right.$ (23) $left template : \left\{\begin{matrix}\left\{\begin{matrix}iTempW = 2 \\ iTempH = nTbH\end{matrix}, nTbW\times nTbH\leq 16\right. \\ \left\{\begin{matrix}iTempW = 4 \\ iTempH = nTbH\end{matrix}, nTbW\times nTbH>16\right.\end{matrix}\right.$ (24)

### (b) BV prediction of the template:

For the obtained multiple BVC candidates, motion compensation is performed by using the template of the current block, to obtain a template at the corresponding BV, as shown in FIG. 15. There are the following cases for the usage of the template, when calculating the cost.

First type: both the upper template and the left template of the current block exist, and both the upper template and the left template at the corresponding BV exist, and in the case, both the upper template and the left template are available.

Second type: both the upper template and the left template of the current block exist, and only the upper template at the corresponding BV exists, and in this case, there are two methods: method 1: the left template at the corresponding BV does not exist and is directly not used, i.e., only the upper template is used for calculation. Method 2: the left template at the corresponding BV does not exist, and the leftmost template width column inside the reference block is used to replace the left template, i.e., the upper template and the left template are used for calculation.

Third type: both the upper template and the left template of the current block exist, and only the left template at the corresponding BV exists, and in this case, there are two methods: method 1: the upper template at the corresponding BV does not exist and is directly not used, i.e., only the left template is used for calculation. Method 2: the upper template at the corresponding BV does not exist, and the uppermost template height row inside the reference block is used to replace the upper template, i.e., the upper template and the left template are used for calculation.

Fourth type: only the upper template of the current block exists, and in this case, there are three methods: method 1: the upper template at the corresponding BV does not exist and is directly not used, and in this case, the finally selected BV is a first BVC or a BVC at a specified position in the BVC candidate list. Method 2: the upper template at the corresponding BV does not exist, and the uppermost template height row inside the reference block is used to replace the upper template. Method 3: the upper template at the corresponding BV exists, and is directly used.

Fifth type: only the left template of the current block exists, and in this case, there are three methods: method 1: the left template at the corresponding BV does not exist and is directly not used, and in this case, the finally selected BV is a first BVC or a BVC at a specified position in the BVC candidate list. Method 2: the left template at the corresponding BV does not exist, and the leftmost template width column inside the reference block is used to replace the left template. Method 3: the left template at the corresponding BV exists, and is directly used.

Sixth type: neither the upper template nor the left template of the current block exists, and in this case, the finally selected BV is a first BVC or a BVC at a specified position in the BVC candidate list.

### (c) Cost calculation:

For the cost function for calculating the cost of the template region, there are multiple selections for a cost function for calculating the template region cost, for example, the evaluation criteria such as sum of absolute differences (SAD), sum of absolute transformed differences (SATD), sum of squared errors (SSE), mean absolute difference (MAD), mean absolute error (MAE), mean squared error (MSE), rate-distortion function (RDO), etc., may be selected. One of the above criteria may be selected for a certain evaluation criterion mentioned in the following content, and taking the evaluation criterion of SAD as an example, a calculation formula is as follows: $SAD = {\sum }_{i = 0}^{predTempSizeW - 1} {\sum }_{j = 0}^{predTempSizeH - 1} \left.\left|predTemp\left[i\right]\left[j\right]-recTempC\left[i\right]\left[j\right]\right|\right)$ (25)

The *predTempSizeW* is the width of the template, *predTempSizeH* is the height of the template, *predTemp*[*i*][*j*] is a pixel point of the template at the BV, and *recTempC*[*i*][*j*] is a pixel point of the template of the current block.

### (d) Selection of the final BV:

For other cases except for the cases where the cost cannot be calculated in (b), a cost for each candidate in the BVC candidate list is calculated and sorted, and the sort method includes but is not limited to using sort methods such as bubble sort, selection sort, insertion sort, shell sort, merge sort, quick sort, radix sort, heap sort, counting sort, bucket sort, etc. The BVC with the minimum cost is selected as the final BV, so as to perform BV-based chroma prediction.

In S6: BV-based chroma prediction.

For chroma prediction, it includes but is not limited to the following methods.

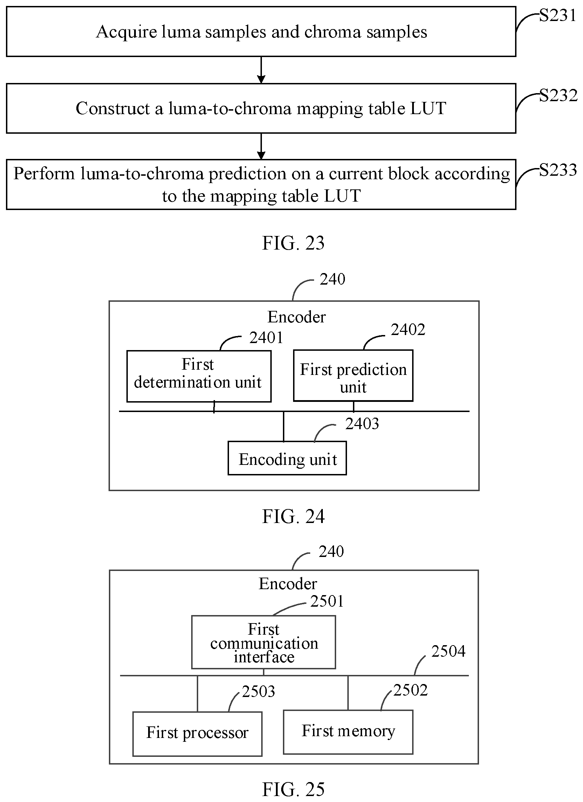

In method 1, FIG. 23 is a flow schematic diagram of BV-based chroma prediction provided in the embodiments of the present disclosure. As shown in FIG. 23, the flow may include S231 to S233.
in S231: a luma sample and a chroma sample are acquired.

### (1) a luma sample is acquired:

A position of a current chroma block, i.e., a position of an upper-left corner chroma sample of the current chroma block relative to an upper-left corner chroma sample of the current picture, chromaPos = (x, y), is acquired, and chromaPos is scaled according to the chroma sampling format shown in Table 4, to obtain a collocated luma region position lumaPos = (xCb, yCb) corresponding to the current chroma block

A chroma BV = (BVChor, BVCver) is acquired, the chroma BV is adjusted according to the chroma sampling format, to obtain a luma BV = (BVYhor, BVYver) of the collocated luma region corresponding to the current chroma block.

The collocated luma region position lumaPos = (xCb, yCb) corresponding to the current chroma block is acquired, and the luma BV = (BVYhor, BVYver) is acquired, and an offset position (xCb + BVYhor, yCb + BVYver) corresponding to the collocated luma region corresponding to the current chroma block is found, as shown in FIG. 16.

Meanwhile, the reconstructed luma sample corresponding to a designated position of the current chroma block is acquired, including but not limited to a row and a column of samples adjacent to the collocated luma region corresponding to the current chroma block, which may also be different combinations of a row, multiple rows, a column, and multiple columns, and which is not limited in any way here.

Downsampling is performed on the luma at the above-mentioned position to obtain the downsampled luma sample, and the following sampling methods compete with each other, or a sampling method is used by default, and the competition method at the encoder side includes but is not limited to the following methods.

① The full RDO competition method is used.

Different sampling methods correspond to different luma downsampled reconstructed values; for each sampling method, prediction, transform, quantization, and reconstruction are performed to calculate the distortion and bits, and then the optimum is updated.

② One RDO selection is performed.

Different sampling methods correspond to different luma downsampled reconstructed values; for each sampling mode, prediction is performed, a distortion between the prediction value and the original value, including but not limited to SAD, SATD, etc., is calculated, a downsampling method with a minimum distortion is selected, and prediction, transform, quantization, and reconstruction are performed on this downsampling method to calculate the distortion and bits.

③ A variable number of RDO selections is performed.

By default, prediction, transform, quantization, and reconstruction are performed in downsampling method 1 to calculate the distortion and bits. In each of downsampling method 1 to downsampling method 6, a distortion between the prediction value and the original value, including but not limited to SAD, SATD, etc., is calculated, the distortions of downsampling method 2 to downsampling method 6 are compared with the distortion of downsampling method 1 sequentially, and if scale * distortion (downsampling method 2 to downsampling method 6) < distortion (downsampling method 1), where the value of scale includes but is not limited to 1, 1.5, 1.15, 1.3, etc., then the corresponding number of RDOs is increased.

④ A set number of RDO selections is performed.

One RDO is performed by using method ②, and the prediction value obtained by the this method is weighted with an intra prediction mode at a position pointed by BVL (including but not limited to being obtained from the center luma block), to obtain a prediction value for RDO; or the prediction value obtained by this method is weighted with a chroma prediction value at a position pointed by BVC (including but not limited to being obtained from the center luma block), to obtain a prediction value for RDO. It should be noted that, if the weighting calculation is added, a syntax element of weight_flag (indicating whether weighting is performed) or weight_idx (indicating a sequence number in weight value options, e.g., 0, 1/4, 1/2, 3/4, 1, etc.) should be correspondingly added in the bitstream.

The following six downsampling methods are included, but not limited thereto.

It is assumed that the luma sample before downsampling is recBvBefDownLuma, a width of the storage buffer is iRecRefLumaStride, and the downsampled luma sample is recBvAftDownLuma, then the downsampled sample at a position (i, j) is:
downsampling method 1 (as shown in FIG. 17A): $recBvAftDownLuma \left[i\right] \left[j\right] = \left(\begin{matrix}recBvBefDownLuma \left[2*i\right] * 2 \\ + recBvBefDownLuma \left[2*i+1\right] \\ + recBvBefDownLuma \left[2*i-1\right] \\ + recBvBefDownLuma \left[2*i+iRecRefLumaStride\right] * 2 \\ + recBvBefDownLuma \left[2*i+1+iRecRefLumaStride\right] \\ + recBvBefDownLuma \left[2*i-1+iRecRefLumaStride\right] + 4\end{matrix}\right) ≫ 3 ;$
downsampling method 2 (as shown in FIG. 17B): $recBvAftDownLuma \left[i\right] \left[j\right] = \left(\begin{matrix}recBvBefDownLuma \left[2*i\right] \\ + recBvBefDownLuma \left[2*i+1\right] + 1\end{matrix}\right) ≫ 1 ;$
downsampling method 3 (as shown in FIG. 17C): $recBvAftDownLuma \left[i\right] \left[j\right] = \left(\begin{matrix}recBvBefDownLuma \left[2*i\right] \\ + recBvBefDownLuma \left[2*i+iRecRefLumaStride\right] + 1\end{matrix}\right) ≫ 1 ;$
downsampling method 4 (as shown in FIG. 17D): $recBvAftDownLuma \left[i\right] \left[j\right] = \left(\begin{matrix}recBvBefDownLuma \left[2*i+iRecRefLumaStride\right] \\ + recBvBefDownLuma \left[2*i+1+iRecRefLumaStride\right] + 1\end{matrix}\right) ≫ 1 ;$
downsampling method 5 (as shown in FIG. 17E): $recBvAftDownLuma \left[i\right] \left[j\right] = \left(\begin{matrix}recBvBefDownLuma \left[2*i+1\right] \\ + recBvBefDownLuma \left[2*i+1+iRecRefLumaStride\right] + 1\end{matrix}\right) ≫ 1 ;$
downsampling method 6 (as shown in FIG. 17F): $recBvAftDownLuma \left[i\right] \left[j\right] = \left(\begin{matrix}recBvBefDownLuma \left[2*i\right] \\ + recBvBefDownLuma \left[2*i+1\right] \\ + recBvBefDownLuma \left[2*i+iRecRefLumaStride\right] \\ + recBvBefDownLuma \left[2*i+1+iRecRefLumaStride\right] + 2\end{matrix}\right) ≫ 2 .$

After downsampling, the downsampled reconstructed luma sample recBvAftDownLuma at the BV corresponding to the collocated luma region corresponding to the current chroma block is acquired.

### (2) A chroma sample is acquired:

A position (xCbC, yCbC) of the current chroma block is acquired, and a chroma BV = (BVChor, BVCver) is acquired, and a corresponding offset position (xCbC + BVChor, yCbC + BVCver) is found, i.e., a reconstructed chroma sample recBvChroma at the BV corresponding to the current chroma block is acquired.

Meanwhile, the reconstructed chroma sample at the designated position of the current chroma block, including but not limited to a row and a column of samples adjacent to the current chroma block, including but not limited to only a left template and an upper template, is acquired.

In S232: a luma-to-chroma mapping table LUT is constructed.

Constructing the luma-to-chroma mapping table (LUT) for the reconstructed luma sample recBvAftDownLuma and the reconstructed chroma sample recBvChroma acquired in S231, as well as the reconstructed luma and chroma samples at the designated position, includes but is not limited to the following method.

The luma is a key, and the chroma is a value.

For a video with a bit depth greater than 8 bits, the sample range is [0, 1023]; for a key value recBvAftDownLuma, it may be mapped to a range such as [0, 255], [0, 511], etc., and any limitation is not imposed.

For each pair of key-value in the LUT table, it is constructed including but not limited to the following method: $LUT \left[recBvAftDownLuma\left[i\right]\left[j\right]\right] = recBvChroma \left[i\right] \left[j\right]$ (26)

Additionally, for different chroma values for the same key value, entries with the same key value may be overwritten sequentially in the sample order, or an averaging operation may be used.

In S233: luma-to-chroma prediction is performed on the current block according to the mapping table LUT.

The reconstructed luma sample recBefDownLuma at the collocated luma region position lumaPos = (xCb, yCb) corresponding to the current chroma block is acquired, and the same downsampling method is performed on the luma sample by using the method of S231, to obtain the downsampled reconstructed luma sample recAftDownLuma, and the same mapping processing of the sample range as the S232 is performed on the sample.

In a possible implementation, it is assumed that the prediction value of the current chroma block is predSamples, then the following prediction method is used for predSamples[cIdx][x][y], where the variable cIdx specifies a color component index of the current block:

The prediction value is derived by the discrete mapping model constructed in S232, with reference to the collocated luma value Yc.

If Yc is not found in the input luma set in the discrete mapping model constructed in S232, then the following processing method is included but not limited to: checking in the order of {Yc+1, Yc-1, Yc+2, Yc-2, Yc+3, Yc-3}; if the model cannot match all the above values, then the prediction value is set to an average value of reconstructed chroma samples recBvChroma at the corresponding BV.

If the mapping table LUT is null, then the following prediction method is included but not limited to: padding to 512, using any angular prediction, etc.

In another possible implementation, modifying the prediction value in the above implementations to obtain a final prediction value, includes but is not limited to: weighting with the CCLM-like mode or other modes.

In yet another possible implementation, in step S5, multiple BVs are decided, and BV-based prediction is performed to obtain multiple prediction values, and then these multiple prediction values are weighted to obtain weighted prediction values; It may also continue to modify the prediction value, including but not limited to weighting with the CCLM-like mode or other modes.

In another embodiment, the improvement of the DM mode is modified (i.e., Solution 2). Under dual tree partition, in the DM mode, if the corresponding luma region has BV information, then the current chroma block is predicted by using the BVG-LUT mode. For example:
if CuPredMode[0][xCb+cbWidth/2][yCb+cbHeight/2] is equal to MODE_IBC, and intra_bvglut_flag is set to 1, then BVG-LUT is used for the chroma intra prediction mode IntraPredModeC[xCb][yCb];
if CuPredMode[0][xCb+cbWidth/2][yCb+cbHeight/2] is equal to MODE_INTRA, and if IntraTmpFlag[xCb+cbWidth/2][yCb+cbHeight/2] is equal to 1, and intra_bvglut_flag is set to 1, then BVG-LUT is used for the chroma intra prediction mode IntraPredModeC[xCb][yCb].

Here, the derivation for the chroma prediction mode is detailed in Table 9. The chroma intra prediction mode IntraPredModeC[xCb][yCb] uses cclm_mode_flag, cclm_mode_idx, intra_chroma_pred_mode, lumaIntraPredMode, and lumaTempPredMode specified in Table 9. 0 represents the Planar mode, 1 represents the DC mode, 18 represents the horizontal mode, 50 represents the vertical mode, and 81 to 83 represent the CCLM modes. These filling items other than the BVG-LUT mode are exemplarily given corresponding values, but not necessarily filled as those values.

In the DM mode, if intra_bvglut_flag == 1, i.e., the information obtained by the center position block of the collocated luma region contains a BV, then BVG-LUT is used for the chroma intra prediction mode IntraPredModeC[xCb][yCb].

Additionally, the prediction is performed by using the flow of the BVG-LUT mode in Solution 1, and the specific steps are the same as S1, S2, S3, S4, S5, and S6 of Solution 1. In step S1: a center block and extended position of the collocated luma region are acquired.

Based on the encoding and decoding methods described in the above embodiments, the embodiments of the present disclosure further provide a bitstream organization method. Here, it may include but be not limited to the following methods.

Method 1: it is encoded inside MODE_INTRA. Here, only one bitstream parsing position is listed, which is used for an exemplary illustration.

It is added before intra_chroma_pred_mode, taking the use of multiple downsampling methods as an example.

**Table 10**

| | |
|---|---|
| if( !cu_act_enabled_flag ) { | |
| if( cbWidth / SubWidthC <= MaxTsSize && cbHeight / SubHeightC <= MaxTsSize && sps_bdpcm_enabled_flag ) | |
| **intra_bdpcm_chroma_flag** | ae(v) |
| if( intra_bdpcm_chroma_flag ) | |
| **intra_bdpcm_chroma_dir_flag** | ae(v) |
| else { | |
| if( CclmEnabled ) | |
| **cclm_mode_flag** | ae(v) |
| if( cclm_mode_flag ) | |
| **cclm_mode_idx** | ae(v) |
| else{ | |
| if(BvglutEnabled ) | |
| **bvglut_flag** | ae(v) |
| if (bvglut_flag) | |
| **filter_idx** | ae(v) |
| if( !bvglut_flag) | |
| **intra_chroma_pred_mode** | ae(v) |
| } | |
| } | |
| } | |

Here, if sps_ibc_enabled_flag is equal to 0 and sps_intratmp_enabled_flag is equal to 0, then BvglutEnabled is equal to 0. Otherwise, the variable ModeIncludeBv is set, and if the corresponding luma block is not encoded in the mode with BV information, then ModeIncludeBv is equal to 0; otherwise, ModeIncludeBv is equal to 1.

If the following multiple conditions are simultaneously true (including but not limited to the following conditions), then BvglutEnabled is equal to 1:
ModeIncludeBv is equal to 1;
sh_slice_type is equal to I frame;
CtbLog2SizeC is less than or equal to MaxChromaIbcSize. MaxChromaIbcSize may be determined according to a chroma CTU size or a preset value.

Otherwise, BvglutEnabled is equal to 0.

It should be noted that, among these conditions, conditions that ModeIncludeBv is equal to 1 and/or sh_slice_type is equal to I frame, may also be omitted, which is not limited in any way here.

If BvglutEnabled is equal to 0, then bvglut_flag is inferred to be 0.

The bvglut_flag being 1 indicates that the current chroma prediction mode is BVG-LUT, including but not limited to the following binarization method, and encoding may be performed by using the context or bypass. Exemplarily, it is shown in Table 11, Table 12, Table 13, or Table 14. Here, FL indicates a fixed length.

**Table 11**

| | | |
|---|---|---|
| bvglut_flag | FL | cMax = 1 |

**Table 12**

| **Value of intra_chroma_pred_mode** | **Bin string** |
|---|---|
| 0 | 100 |
| 1 | 101 |
| 2 | 110 |
| 3 | 111 |
| 4 | 0 |

**Table 13**

| Syntax element | binIdx | | | | | |
|---|---|---|---|---|---|---|
| | 0 | 1 | 2 | 3 | 4 | >= 5 |
| cclm_mode_flag | 0 | na | na | na | na | na |
| cclm_mode_idx | 0 | bypass | na | na | na | na |
| bvglut_flag | 0 | na | na | na | na | na |
| intra_chroma_pred_ mode | 0 | bypass | bypass | na | na | na |

Or:

**Table 14**

| Syntax element | binIdx | | | | | |
|---|---|---|---|---|---|---|
| | 0 | 1 | 2 | 3 | 4 | >= 5 |
| cclm_mode_flag | 0 | na | na | na | na | na |
| cclm_mode_idx | 0 | bypass | na | na | na | na |
| bvglut_flag | bypass | na | na | na | na | na |
| intra_chroma_pred_ mode | 0 | bypass | bypass | na | na | na |

Additionally, filter_idx includes but is not limited to the following binarization methods, and includes but is not limited to being encoded by using the context or bypass. Exemplarily, it is shown in Table 15, Table 16, and Table 17.

**Table 15**

| **Value of filter_idx** | **Bin string** |
|---|---|
| 0 | 00 |
| 1 | 01 |
| 2 | 100 |
| 3 | 101 |
| 4 | 110 |
| 5 | 111 |

When filter_idx = 0 or 1, it is shown in Table 16. When filter_idx = 2, 3, 4, or 5, it is shown in Table 17.

**Table 16**

| Syntax element | binIdx | | | | | |
|---|---|---|---|---|---|---|
| | 0 | 1 | 2 | 3 | 4 | >= 5 |
| filter_idx | 0 | 1 | na | na | na | na |

**Table 17**

| Syntax element | binIdx | | | | | |
|---|---|---|---|---|---|---|
| | 0 | 1 | 2 | 3 | 4 | >= 5 |
| filter_idx | 0 | bypass | bypass | na | na | na |

Method 2: it is encoded in MODE_IBC, and the specific description of syntax elements is shown in Table 18.

**Table 18**

| | |
|---|---|
| if( sh_slice_type != I \| \| sps_ibc_enabled_flag ) { | |
| if( treeType != DUAL_TREE_CHROMA && | |
| ( ( !(cbWidth == 4 && cbHeight == 4) && | |
| modeType != MODE_TYPE_INTRA ) \| \| | |
| ( sps_ibc_enabled_flag && cbWidth <= 64 && cbHeight <= 64 ) ) ) | |
| **cu_skip_flag**[ x0 ][ y0 ] | ae(v) |
| if( cu_skip_flag[ x0 ][ y0 ] = = 0 && sh_slice_type != I && | |
| !( cbWidth == 4 && cbHeight == 4 ) && modeType == MODE_TYPE_ALL ) | |
| **pred_mode_flag** | ae(v) |
| if( ((sh_slice_type == I && cu_skip_flag[x0][y0] ==0) \|\| | |
| ( sh_slice_type != I && ( CuPredMode[ chType ][ x0 ][ y0 ] != MODE_INTRA ∥(((cbWidth == 4 && cbHeight == 4) \|\| modeType = =MODE_TYPE_INTRA ) | |
| && cu_skip_flag[x0][y0] == 0)))) && cbWidth <= 64 && cbHeight <= 64 && modeType != MODE_TYPE_INTER && sps_ibc_enabled_flag ) | |
| if(treeType != DUAL_TREE_CHROMA \|\| | |
| (treeType == DUAL_TREE_CHROMA &&BvglutEnabled) ){ | |
| **pred_mode_ibc_flag** | ae(v) |
| if (**pred_mode_ibc_flag**) | |
| filter_idx | ae(v) |
| } | |
| } | |

Here, if sps_ibc_enabled_flag is equal to 0 and sps_intratmp_enabled_flag is equal to 0, then BvglutEnabled is equal to 0. Otherwise, the variable ModeIncludeBv is set; and if the corresponding luma block is not encoded in the mode with BV information, then ModeIncludeBv is equal to 0; otherwise, ModeIncludeBv is equal to 1.

If the following multiple conditions are simultaneously true (including but not limited to the following conditions), then BvglutEnabled is equal to 1:
ModeIncludeBv is equal to 1;
sh_slice_type is equal to I frame;
CtbLog2SizeC is less than or equal to MaxChromaIbcSize. MaxChromaIbcSize may be determined according to the chroma CTU size or a preset value.

Otherwise, BvglutEnabled is equal to 0.

It should be noted that, among these conditions, conditions that ModeIncludeBv is equal to 1 and/or sh_slice_type is equal to I frame may also be omitted, which is not limited in any way here.

Under treeType == DUAL_TREE_CHROMA, if BvglutEnabled is equal to 0, then pred_mode_ibc_flag is inferred to be 0. Under treeType == DUAL_TREE_CHROMA, pred_mode_ibc_flag being 1 indicates that the current chroma prediction mode is BVG-LUT. For the syntax element pred_mode_ibc_flag, the syntax description in encoding is shown in Table 19 and Table 20. Here, FL indicates a fixed length.

**Table 19**

| | | |
|---|---|---|
| pred_mode_ibc_flag | FL | cMax = 1 |

**Table 20**

| Initialization variable | ctxIdx of pred_mode_ibc_flag | | | | | | | | |
|---|---|---|---|---|---|---|---|---|---|
| | 0 | 1 | 2 | 3 | 4 | 5 | 6 | 7 | 8 |
| initValue | 17 | 42 | 36 | 0 | 57 | 44 | 0 | 43 | 45 |
| shiftIdx | 1 | 5 | 8 | 1 | 5 | 8 | 1 | 5 | 8 |

It should be noted that the above method 1 and method 2 both correspond to the case of Solution 1 in the above embodiments.

Solution 2: taking an example of using multiple downsampling methods, in an implementation, the specific description of the syntax elements is shown in Table 21.

**Table 21**

| | |
|---|---|
| if( !cu_act_enabled_flag ) { | |
| if( cbWidth / SubWidthC <= MaxTsSize && cbHeight / SubHeightC <= MaxTsSize && sps_bdpcm_enabled_flag ) | |
| **intra_bdpcm_chroma_flag** | ae(v) |
| if( intra_bdpcm_chroma_flag ) | |
| **intra_bdpcm_chroma_dir_flag** | ae(v) |
| else { | |
| if( CclmEnabled ) | |
| **cclm_mode_flag** | ae(v) |
| if( cclm_mode_flag ) | |
| **cclm_mode_idx** | ae(v) |
| else | |
| **intra_chroma_pred_mode** | ae(v) |
| } | |
| } | |

In addition, for different syntax elements (e.g., cclm_mode_flag, cclm_mode_idx, and intra_chroma_pred_mode, etc.), the encoding method used for each encoding bit is specifically shown in Table 22; for the value of the syntax element intra_chroma_pred_mode, its corresponding bin string is shown in Table 23.

**Table 22**

| Syntax element | binIdx | | | | | |
|---|---|---|---|---|---|---|
| | 0 | 1 | 2 | 3 | 4 | >= 5 |
| cclm_mode_flag | 0 | na | na | na | na | na |
| cclm_mode_idx | 0 | bypass | na | na | na | na |
| intra_chroma_pred_mode | 0 | bypass | bypass | na | na | na |

**Table 23**

| Value of intra_chroma_pred_mode | Bin string |
|---|---|
| 0 | 100 |
| 1 | 101 |
| 2 | 110 |
| 3 | 111 |
| 4 | 0 |

For the 0th bin of intra_chroma_pred_mode, it represents the DM mode, and the encoding method is the same as that of VVC. The derivation process of the syntax element BvglutEnabled is as follows:
if sps_ibc_enabled_flag is equal to 0 and sps_intratmp_enabled_flag is equal to 0, then BvglutEnabled is equal to 0;
otherwise, if the following multiple conditions are simultaneously true (including but not limited to the following conditions), BvglutEnabled is equal to 1:
   sh_slice_type is equal to I slice;
   CtbLog2SizeC is less than or equal to MaxChromaIbcSize. MaxChromaIbcSize may be determined according the chroma CTU size or a preset value.

If BvglutEnabled is equal to 1:
when intra_chroma_pred_mode is equal to the four chroma prediction modes 0, 1, 2, or 3, the four chroma prediction modes refer to Table 4; when intra_chroma_pred_mode is equal to 4, Solution 2 is performed.

Otherwise, reference is made to the chroma prediction process in the H.266 standard.

If it is the DM mode, the binarization method of filter_idx is the same as above.

It should be noted that, in the embodiments of the present disclosure, multiple LUTs may be constructed, and a syntax element may be used to indicate a solution for the selected LUT. Specifically, multiple blocks of a collocated luma region are acquired, and positions of the multiple blocks include but are not limited to the following positions, as shown in FIG. 25. In S2, a BVL candidate list of luma BVs of available blocks among the multiple blocks is constructed; in S3, candidate items of respective chroma BVC candidate lists are constructed, according to the luma BVs in S2; the multiple blocks are respectively processed in S4 to determine the availability of the BVs in the candidate list; the multiple blocks are respectively processed in S5 to decide a BV or multiple BVs or to decide multiple groups of BVs through clustering; the respective available chroma BVCs of the multiple blocks are respectively processed in S231 and S232 of S6 to respectively construct a mapping table LUT; in this case, the LUT table of the current block may be updated according to a global LUT maintained by the LUT of the reconstructed block; in S233 of S6, the encoder side uses RDO to decide to use which mapping table, and transmits it to the decoder side by using a syntax element identifier; and in S233 of S6, the final prediction value is obtained according to the finally decided mapping table. The number of constructed mapping tables may be arbitrarily designated, and here, the number is set to 4 for the illustration of the bitstream identifier.

Exemplarily, only one bitstream parsing position is listed here for illustration, and the specific syntax description is shown in Table 24.

**Table 24**

| | |
|---|---|
| if( !cu_act_enabled_flag ) { | |
| if( cbWidth / SubWidthC <= MaxTsSize && cbHeight / SubHeightC <= MaxTsSize && sps_bdpcm_enabled_flag ) | |
| **intra_bdpcm_chroma_flag** | ae(v) |
| if( intra_bdpcm_chroma_flag ) | |
| **intra_bdpcm_chroma_dir_flag** | ae(v) |
| else { | |
| if( CclmEnabled ) | |
| **cclm_mode_flag** | ae(v) |
| if( cclm_mode_flag ) | |
| **cclm_mode_idx** | ae(v) |
| else | |
| if(BvglutEnabled ) | |
| **bvglut_flag** | ae(v) |
| if(bvglut_flag) | |
| **lut_idx** | ae(v) |
| if( !bvglut_flag) | |
| **intra_chroma_pred_mode** | ae(v) |
| } | |
| } | |

The bvglut_flag being true indicates that the current chroma prediction mode is BVG-LUT, and the lut_idx of the mapping table used for further encoding includes but is not limited to the following binarization methods, and encoding may be performed by using the context model or bypass model. Exemplarily, it is shown in Table 25, Table 26, or Table 27. Here, FL indicates a fixed length.

**Table 25**

| | | |
|---|---|---|
| lut_idx | FL | cMax = 2 |

**Table 26**

| Syntax element | binIdx | | | | | |
|---|---|---|---|---|---|---|
| | 0 | 1 | 2 | 3 | 4 | >= 5 |
| lut_idx | 0 | 0 | na | na | na | na |

Or:

**Table 27**

| Syntax element | binIdx | | | | | |
|---|---|---|---|---|---|---|
| | 0 | 1 | 2 | 3 | 4 | >= 5 |
| lut_idx | bypass | bypass | na | na | na | na |

It should also be noted that, in the embodiments of the present disclosure, multiple LUTs may be constructed, and the use of the solution of which LUT is selected by using a template. Specifically, multiple blocks of a collocated luma region are acquired, and positions of the multiple blocks include but are not limited to the following positions, as shown in FIG. 25. In S2, a BVL candidate list of luma BVs of available blocks among the multiple blocks is constructed; in S3, candidate items of respective chroma BVC candidate lists are constructed, according to the luma BVs in S2; the multiple blocks are respectively processed in S4 to determine the availability of the BVs in the candidate list; the multiple blocks are respectively processed in S5 to decide a BV or multiple BVs or to decide multiple groups of BVs through clustering; the respective available chroma BVCs of the multiple blocks are respectively processed in S61 and S62 of S6 to respectively construct a mapping table LUT; the template of the current block is predicted by using different mapping table LUTs, and a difference with the template reconstructed value is calculated, thereby deciding to use which mapping table, and both the encoder side and the decoder side need to perform, and in S63 of S6, the final prediction value is obtained according to the finally decided mapping table. The number of constructed mapping tables may be arbitrarily designated.

The specific process of performing LUT prediction on the template of the current block is as follows.

The reconstructed luma sample recBefDownLumaR at the collocated luma region template position lumaPos = (xCbR, yCbR) corresponding to the current chroma block template is acquired, the same downsampling method is performed on the luma sample by using the method in S61, to obtain the downsampled reconstructed luma sample recAftDownLumaR, and the same mapping processing of the sample range as S62 is performed on the sample.

It is assumed that the prediction value of the current chroma block template is predSamplesR, then for predSamplesR[cIdx][x][y], the variable cIdx specifies the color component index of the current block, and the following prediction method is used.

The prediction value is derived by using the discrete mapping model constructed in S62, with reference to its collocated luma value Yc.

If Yc is not found in the input luma set in the discrete mapping model constructed in S62, then the following processing method is included but not limited to: checking in the order of {Yc+1, Yc-1, Yc+2, Yc-2, Yc+3, Yc-3}, and if the model cannot match all the above-mentioned values, setting the prediction value to the average value of the reconstructed chroma sample recBvChroma at the corresponding BV.

The cost calculation is performed on the template of the current block and the template prediction value of each LUT: for the template selection when calculating the cost, reference is made to the template selection in the BV decision in S5. The cases of the use of the template when calculating the cost include the following several cases.

First type: both the upper template and the left template of the current block exist, and in this case, both the upper template and the left template are available.

Second type: only the upper template of the current block exists, and in this case, only the upper template is available.

Third type: only the left template of the current block exists, and in this case, only the left template is available.

Fourth type: neither the upper template nor the left template of the current block exists, and in this case, the finally selected LUT is a first LUT constructed or a LUT at a specified position.

It is assumed that the reconstructed value of the current chroma block template is recSamplesR, there are multiple selections for the cost function for calculating the cost of the template region, for example, the evaluation criteria such as sum of absolute differences (SAD), sum of absolute transformed differences (SATD), sum of squared errors (SSE), mean absolute difference (MAD), mean absolute error (MAE), mean squared error (MSE), rate-distortion function (RDO), etc., may be selected. One of the above criteria may be selected for a certain evaluation criterion mentioned in the embodiments of the present disclosure, for the cost calculation.

The template of the current block is used to select the final LUT: for other cases except for cases where costs cannot be calculated, a cost of each constructed LUT candidate is calculated and sorted; the sort method include but is not limited to sort methods such as bubble sort, selection sort, insertion sort, shell sort, merge sort, quick sort, radix sort, heap sort, counting sort, bucket sort, etc. A LUT candidate with a minimum cost is selected as a finally used mapping table LUT, so as to perform prediction in S233 of S6.

It should also be noted that, in the embodiments of the present disclosure, a solution of performing chroma upsampling and aligning with luma and then constructing an LUT, may be performed. Specifically, for the luma sample acquired in acquiring the luma and chroma samples in S231 of S6: only the reconstructed luma sample recBvBefDownLuma of the corresponding luma region is acquired, without performing downsampling.

For the chroma sample acquired in acquiring the luma and chroma samples in S231 of S6: after acquiring the reconstructed chroma sample recBvChroma at corresponding BV of the current chroma block, upsampling including but not limited to a method such as linear interpolation, is performed, to obtain a reconstructed chroma sample recBvChromaUp of the same size as the reconstructed luma sample at the BV.

The obtained reconstructed luma sample recBvBefDownLuma and the reconstructed chroma sample recBvChromaUp are processed through S232 to construct a luma-to-chroma mapping table LUT at the BV.

The luma-to-chroma prediction is performed on the current block by the reconstructed luma sample recBefDownLuma of the current chroma block and the LUT being processed through S63, and then a downsampling operation is performed on the prediction value to obtain the final chroma prediction value of the current block, and the downsampling method includes but is not limited to average downsampling, etc.

It should also be noted that, in the embodiments of the present disclosure, it may also be used simultaneously with other modes. In the DM mode, competition with other modes in addition to this mode may also be performed. A finally used mode is decided according to template costs. For example, compared with directly using the BV obtained from luma, the BV copy may be directly used, or the mode defined in this patent may be used, and after both modes are applied to the template of the current chroma block, the one with a smaller template cost is selected as the prediction mode of the current chroma block.

In the embodiments of the present disclosure, the specific implementations of the aforementioned embodiments are described in detail through the above embodiments, from which it can be seen that the embodiments of the present disclosure aim to propose a new chroma prediction method: on one hand, the advantages of existing technologies are fully utilized, to improve the singleness of chroma prediction, the information of the collocated luma region is fully utilized, to improve the accuracy of chroma prediction effectively; on the other hand, a mapping table is constructed for the luma and the chroma at the BV, which may effectively perform pixel-level prediction, thereby further improving the coding efficiency. That is, the embodiments of the present disclosure fully consider the available information such as the reconstructed luma and the BV, etc., and perform prediction on chroma based on the information, thereby improving the singleness of chroma prediction; and after acquiring the luma BV, a mapping table is constructed for the luma and the chroma at the BV, which may effectively perform pixel-level prediction, thereby effectively enabling the accurate prediction of the chroma block and further improving the coding efficiency.

In yet another embodiment of the present disclosure, based on the same inventive concept as the aforementioned embodiments, FIG. 24 is a schematic diagram of a composition structure of an encoder provided in the embodiments of the present disclosure. As shown in FIG. 24, the encoder 240 may include a first determination unit 2401 and a first prediction unit 2402, where:
the first determination unit 2401 is configured to determine a prediction parameter of a current block; and determine a first reference prediction parameter set of the current block according to the prediction parameter; where the first reference prediction parameter set includes one or more first candidate reference prediction parameters;
the first determination unit 2401 is further configured to determine a first color component reference sample value and a second color component reference sample value of the current block according to the first reference prediction parameter set; and determine a mapping relationship between a first color component and a second color component according to the first color component reference sample value and the second color component reference sample value; and
the first prediction unit 2402 is configured to determine a prediction value of the second color component of the current block according to the mapping relationship and a first color component sample value of the current block.

In some embodiments, the first determination unit 2401 is further configured to: in response to the prediction parameter indicating that a first prediction mode is used for the current block, determine the first reference prediction parameter set of the current block.

In some embodiments, the first determination unit 2401 is further configured to: determine a first cost value for using the first prediction mode for the current block, and determine a second cost value for not using the first prediction mode is for the current block; and determine the prediction parameter according to the first cost value and the second cost value.

In some embodiments, the first determination unit 2401 is further configured to: in response to the first cost value being less than the second cost value, determine that the prediction parameter indicates that the first prediction mode is used for the current block; and in response to the first cost value being greater than the second cost value, determine that the prediction parameter indicates that the first prediction mode is not used for the current block.

In some embodiments, referring to FIG. 24, the encoder 240 may further include an encoding unit 2403, where:
the first determination unit 2401 is further configured to determine a value of a first syntax element according to the prediction parameter; and
the encoding unit 2403 is configured to perform encoding processing on the value of the first syntax element, and write obtained encoded bits into a bitstream.

In some embodiments, the first determination unit 2401 is further configured to: in response to the prediction parameter indicating that the first prediction mode is used for the current block, determine that the value of the first syntax element is a first value; and in response to the prediction parameter indicating that the first prediction mode is not used for the current block, determine that the value of the first syntax element is a second value.

In some embodiments, the first determination unit 2401 is further configured to: determine a first color component block of the current block; determine a second reference prediction parameter set of the current block according to the first color component block; where the second reference prediction parameter set includes one or more second candidate reference prediction parameters; and determine the first reference prediction parameter set of the current block according to the second reference prediction parameter set.

In some embodiments, the first candidate reference prediction parameters are vector parameters based on the second color component, and the second candidate reference prediction parameters are vector parameters based on the first color component

In some embodiments, the vector parameter includes one of: a block vector parameter, a motion vector parameter.

In some embodiments, the first determination unit 2401 is further configured to determine a collocated first color component region of the current block; and determine the first color component block of the current block based on multiple partitioned blocks of the first color component region.

In some embodiments, the first determination unit 2401 is further configured to determine a first candidate block at a first position from the multiple partitioned blocks; and determine the first color component block of the current block according to the first candidate block at the first position.

In some embodiments, the first determination unit 2401 is further configured to: perform a position offset search in a preset search region at the first position to determine multiple second candidate blocks; and determine the first color component block of the current block according to the first candidate block and/or the multiple second candidate blocks.

In some embodiments, the first determination unit 2401 is further configured to: determine one or more candidate vector parameters based on the first color component, according to the first color component block; determine the second reference prediction parameter set of the current block according to the one or more candidate vector parameters based on the first color component.

In some embodiments, the first determination unit 2401 is further configured to: adjust the candidate vector parameter based on the first color component, to determine a candidate vector parameter based on the second color component; and in response to the candidate vector parameter based on the second color component satisfying a preset availability condition, use the candidate vector parameter based on the first color component as the second candidate reference prediction parameter to add to the second reference prediction parameter set.

In some embodiments, the first determination unit 2401 is further configured to: determine a preset sampling format of the current block; and scale the candidate vector parameter based on the first color component according to the preset sampling format, to determine the candidate vector parameter based on the second color component.

In some embodiments, the first determination unit 2401 is further configured to: adjust the one or more second candidate reference prediction parameters in the second reference prediction parameter set, to determine first candidate reference prediction parameters respectively corresponding to the one or more second candidate reference prediction parameters; and determine the first reference prediction parameter set of the current block according to the first candidate reference prediction parameters respectively corresponding to the one or more second candidate reference prediction parameters.

In some embodiments, the first determination unit 2401 is further configured to: adjust the second candidate reference prediction parameter, to determine a third reference prediction parameter set based on the second color component; and determine a first candidate reference prediction parameter corresponding to the second candidate reference prediction parameter according to the third reference prediction parameter set.

In some embodiments, the first determination unit 2401 is further configured to: scale the second candidate reference prediction parameter according to a preset sampling format of the current block, to determine a candidate vector parameter based on the second color component, and add the candidate vector parameter based on the second color component to the third reference prediction parameter set.

In some embodiments, the first determination unit 2401 is further configured to: scale the second candidate reference prediction parameter according to a preset sampling format of the current block, to determine a first initial vector parameter based on the second color component; and perform an offset calculation on the first initial vector parameter based on the second color component according to one or more offset values, to determine one or more candidate vector parameters based on the second color component, and add the one or more candidate vector parameters based on the second color component to the third reference prediction parameter set.

In some embodiments, the first determination unit 2401 is further configured to: perform an offset calculation on the second candidate reference prediction parameter according to one or more offset values, to determine one or more second initial vector parameters based on the first color component; and scale the one or more second initial vector parameters based on the first color component according to a preset sampling format of the current block, to determine one or more candidate vector parameters based on the second color component, and add the one or more candidate vector parameters based on the second color component to the third reference prediction parameter set.

In some embodiments, the first determination unit 2401 is further configured to: in a case where one or more candidate vector parameters satisfying a preset availability condition exist in the third reference prediction parameter set, determine the first candidate reference prediction parameter according to the one or more candidate vector parameters.

In some embodiments, the one or more candidate vector parameters satisfy the preset availability condition, at least including: an offset position indicated by the one or more candidate vector parameters does not exceed a picture boundary; an offset position indicated by the one or more candidate vector parameters does not exceed a slice boundary; an offset position indicated by the one or more candidate vector parameters does not cover the current block; an offset position indicated by the one or more candidate vector parameters does not exceed a preset available region; an offset position indicated by the one or more candidate vector parameters has been reconstructed.

In some embodiments, the first determination unit 2401 is further configured to: in a case where a candidate vector parameter satisfying the preset availability condition exists in the third reference prediction parameter set, determine the candidate vector parameter satisfying the preset availability condition as the first candidate reference prediction parameter; and in a case where multiple candidate vector parameters satisfying the preset availability condition exist in the third reference prediction parameter set, perform a decision on the multiple candidate vector parameters satisfying the preset availability condition to determine the first candidate reference prediction parameter.

In some embodiments, the first determination unit 2401 is further configured to: determine a first template of the current block; determine respective first matching templates of the multiple candidate vector parameters according to the first template and the multiple candidate vector parameters; in response to the first template and the first matching templates satisfying a preset existence condition, calculate matching errors between the first template of the current block and the first matching templates according to a preset error criterion, to determine respective first cost values of the multiple candidate vector parameters; and determine a minimum cost value from the respective first cost values of the multiple candidate vector parameters, and determine a candidate vector parameter corresponding to the minimum cost value as the first candidate reference prediction parameter.

In some embodiments, the first determination unit 2401 is further configured to: in response to the first template and the first matching templates not satisfying the preset existence condition, determine a first candidate vector parameter satisfying the preset availability condition in the third reference prediction parameter set as the first candidate reference prediction parameter; or in response to the first template and the first matching templates not satisfying the preset existence condition, determine a candidate vector parameter satisfying the preset availability condition at a second position in the third reference prediction parameter set as the first reference prediction parameter.

In some embodiments, the first determination unit 2401 is configured to: in response to all candidate vector parameters in the third reference prediction parameter set not satisfying the preset availability condition, determine a first color component reconstructed sample and a second color component reconstructed sample at a third position of the current block; the first determination unit 2401 is further configured to: determine a first color component reference sample value and a second color component reference sample value of the current block according to the first color component reconstructed sample and the second color component reconstructed sample at the third position.

In some embodiments, the first determination unit 2401 is further configured to: determine first color component reconstructed samples and second color component reconstructed samples respectively indicated by the one or more first candidate reference prediction parameters, according to the first reference prediction parameter set; determine a first color component reconstructed sample and a second color component reconstructed sample at a third position of the current block; and determine the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

In some embodiments, the first determination unit 2401 is further configured to: determine a position of the current block; scale the position of the current block to determine a position of a collocated first color component region of the current block; and scale the first candidate reference prediction parameter to determine a scaled block vector parameter of the collocated first color component region of the current block; and determine a reference block of the first color component according to the position of the first color component region and the scaled block vector parameter, and determine a first color component reconstructed sample indicated by the first candidate reference prediction parameter according to the reference block of the first color component; and determine a reference block of the second color component according to the position of the current block and the first candidate reference prediction parameter, and determine a second color component reconstructed sample indicated by the first candidate reference prediction parameter according to the reference block of the second color component.

In some embodiments, the first determination unit 2401 is further configured to: perform downsampling processing on the reference block of the first color component to determine the first color component reconstructed sample indicated by the first candidate reference prediction parameter, so that a resolution of the first color component reconstructed sample is same as a resolution of the second color component reconstructed sample.

In some embodiments, the first determination unit 2401 is further configured to: perform upsampling processing on the reference block of the second color component to determine the second color component reconstructed sample indicated by the first candidate reference prediction parameter, so that a resolution of the first color component reconstructed sample is same as a resolution of the second color component reconstructed sample; and accordingly, perform downsampling processing on the prediction value of the second color component of the current block.

In some embodiments, the first determination unit 2401 is further configured to: determine a downsampling method of the current block; and perform downsampling processing on the reference block of the first color component according to the downsampling method, to determine the first color component reconstructed sample indicated by the first candidate reference prediction parameter.

In some embodiments, the first determination unit 2401 is further configured to: perform a cost calculation on multiple candidate downsampling methods based on a preset competition method to determine cost results respectively corresponding to the multiple candidate downsampling methods; select a minimum cost result from the cost results respectively corresponding to the multiple candidate downsampling methods; and determine a candidate downsampling method corresponding to the minimum cost result as the downsampling method of the current block.

In some embodiments, the preset competition method is a rate-distortion optimization method.

In some embodiments, the first determination unit 2401 is further configured to: determine a value of filter identification information; where the filter identification information is used to indicate an index number of the downsampling method of the current block in the multiple candidate downsampling methods; and the encoding unit 2403 is further configured to: perform encoding processing on the value of the filter identification information, and write obtained encoded bits into a bitstream.

In some embodiments, the first determination unit 2401 is further configured to: determine a first template of the current block; and determine the first color component reconstructed sample and the second color component reconstructed sample at the third position, according to the first template.

In some embodiments, a type of the first template includes at least one of: an upper template, an upper-right template, a left template, a lower-left template, and an upper-left template; where the upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

In some embodiments, the first determination unit 2401 is further configured to: determine a first Look Up Table according to the first color component reference sample value and the second color component reference sample value, where the first Look Up Table is used for recording a value of the second color component that corresponds to an index key as the first color component.

In some embodiments, the first determination unit 2401 is further configured to: determine a first discrete model according to the first color component reference sample value and the second color component reference sample value, where the first discrete model is used for indicating the mapping relationship between the first color component and the second color component.

In some embodiments, the first determination unit 2401 is further configured to: perform mapping processing on the first color component reference sample value, so that the first color component reference sample value is within a preset sample range.

In some embodiments, the first determination unit 2401 is further configured to: in a case where a same first reference sample value in the first color component reference sample values corresponds to different multiple second reference sample values in the second color component reference sample values, perform overwriting processing sequentially according to a sample order, and use a last second reference sample value as a value having a mapping relationship with the first reference sample value.

In some embodiments, the first determination unit 2401 is further configured to: in a case where a same first reference sample value in the first color component reference sample values corresponds to different multiple second reference sample values in the second color component reference sample values, perform an average calculation on the multiple second reference sample values, and use an obtained average value as a value having a mapping relationship with the first reference sample value.

In some embodiments, the first determination unit 2401 is further configured to: determine a reconstructed pixel sample of a collocated first color component region of the current block; and determine the first color component sample value of the current block based on the reconstructed pixel sample of the first color component region.

In some embodiments, the first prediction unit 2402 is further configured to: in a case where a first color component value equal to the first color component sample value is found in the mapping relationship, determine a value of the second color component corresponding to the first color component value as the prediction value of the second color component of the current block.

In some embodiments, the first determination unit 2401 is further configured to: in a case where no first color component value equal to the first color component sample value is found in the mapping relationship, perform modification processing on the first color component sample value to determine a first color component modification value, and continue to find in the mapping relationship for whether there is a first color component value equal to the first color component modification value.

In some embodiments, the first determination unit 2401 is further configured to: perform an offset calculation on the first color component sample value according to one or more preset offset values to determine the first color component modification value.

In some embodiments, the first prediction unit 2402 is further configured to: in a case where no first color component value equal to the first color component modification value is found in the mapping relationship, perform an average calculation on the second color component reference sample values, and determine an obtained average value as the prediction value of the second color component of the current block.

In some embodiments, the first prediction unit 2402 is further configured to: determine a first initial prediction value of the second color component of the current block according to the mapping relationship and the first color component sample value of the current block; and perform a modification operation on the first initial prediction value to determine the prediction value of the second color component of the current block.

In some embodiments, the first prediction unit 2402 is further configured to: perform prediction processing on the second color component of the current block according to a first preset mode, to determine a second initial prediction value of the second color component of the current block; where the first preset mode at least includes one of: a PLANAR mode, a DM mode, a DC mode, and a CCLM mode; and perform a weighting calculation on the first initial prediction value and the second initial prediction value to determine the prediction value of the second color component of the current block.

In some embodiments, the first determination unit 2401 is further configured to: determine an initial value of the second color component of the current block; and determine a residual value of the second color component of the current block according to the initial value and the prediction value; the encoding unit 2403 is further configured to: perform encoding processing on the residual value of the second color component of the current block, and write obtained encoded bits into a bitstream.

In some embodiments, the first determination unit 2401 is further configured to: in response to the first reference prediction parameter set including multiple first candidate reference prediction parameters, determine first color component reconstructed samples and second color component reconstructed samples respectively indicated by the multiple first candidate reference prediction parameters; and determine multiple mapping relationships between the first color component and the second color component, according to the first color component reconstructed samples and the second color component reconstructed samples respectively indicated by the multiple first candidate reference prediction parameters; and the first prediction unit 2402 is further configured to: determine multiple third initial prediction values of the second color component of the current block according to the multiple mapping relationships; and perform a weighting calculation on the multiple third initial prediction values to determine the prediction value of the second color component of the current block.

In some embodiments, the first determination unit 2401 is further configured to: in response to a first color component block of the current block including multiple candidate blocks, determine a second reference prediction parameter set of the current block; where the second reference prediction parameter set includes multiple second candidate reference prediction parameters; determine multiple first candidate reference prediction parameters according to the multiple second candidate reference prediction parameters; determine multiple candidate mapping relationships between the first color component and the second color component based on the multiple first candidate reference prediction parameters; and determine a target mapping relationship from the multiple candidate mapping relationships; the first prediction unit 2402 is further configured to: determine the prediction value of the second color component of the current block according to the target mapping relationship and the first color component sample value of the current block.

In some embodiments, the first determination unit 2401 is further configured to: perform a cost calculation on the multiple candidate mapping relationships respectively, to determine cost results respectively corresponding to the multiple candidate mapping relationships; and determine a minimum cost result from the cost results respectively corresponding to the multiple candidate mapping relationships, and determine a candidate mapping relationship corresponding to the minimum cost result as the target mapping relationship.

In some embodiments, the first determination unit 2401 is further configured to: determine a mapping relationship index value, where the mapping relationship index value is used to indicate an index number of the target mapping relationship in the multiple candidate mapping relationships; the encoding unit 2403 is further configured to: perform encoding processing on the mapping relationship index value, and write obtained encoded bits into a bitstream.

In some embodiments, the first determination unit 2401 is further configured to: in response to a first color component block of the current block including multiple candidate blocks, determine a second reference prediction parameter set of the current block; where the second reference prediction parameter set includes multiple second candidate reference prediction parameters; determine multiple first candidate reference prediction parameters according to the multiple second candidate reference prediction parameters; determine multiple candidate mapping relationships between the first color component and the second color component based on the multiple first candidate reference prediction parameters; perform a matching error calculation on the multiple candidate mapping relationships based on a template matching method, to determine respective second cost values of the multiple candidate mapping relationships; determine a minimum cost value from the respective second cost values of the multiple candidate mapping relationships, and determine a candidate mapping relationship corresponding to the minimum cost value as a target mapping relationship; the first prediction unit 2402 is further configured to: determine the prediction value of the second color component of the current block according to the target mapping relationship and the first color component sample value of the current block.

In some embodiments, the first determination unit 2401 is further configured to: determine a first template of the current block; determine a reconstructed pixel sample value of a collocated first color component region template of the first template; the first prediction unit 2402 is further configured to: determine respective prediction values of the second color component of the first template under the multiple mapping relationships, according to the multiple candidate mapping relationships and the reconstructed pixel sample value of the first color component region template; and the first determination unit 2401 is further configured to: perform a cost calculation according to a reconstructed value of the second color component of the first template and the respective prediction values of the second color component of the first template under the multiple mapping relationships, to determine the respective second cost values of the multiple candidate mapping relationships.

In some embodiments, the first determination unit 2401 is further configured to: determine a prediction mode of the current block; and determine the prediction parameter of the current block according to the prediction mode of the current block.

In some embodiments, the first determination unit 2401 is further configured to: determine multiple candidate modes of the current block; where the multiple candidate modes include a first prediction mode and other prediction modes other than the first prediction mode; perform a cost calculation on the multiple candidate modes based on a preset cost method, to determine cost results respectively corresponding to the multiple candidate modes; and determine a minimum cost result from the cost results respectively corresponding to the multiple candidate modes, and determine a candidate mode corresponding to the minimum cost result as the prediction mode of the current block; where the preset cost method at least includes one of: a rate-distortion cost method and a template matching method.

In some embodiments, the first determination unit 2401 is further configured to: determine a collocated first color component region of the current block; and in a case where a DM mode is used for the current block and the first color component region is predicted based on a block vector, determine that a first prediction mode is used for the current block.

In some embodiments, the first determination unit 2401 is further configured to: determine a value of a second syntax element; where the second syntax element is used to indicate whether a first prediction mode is allowed to be used for the current block; the encoding unit 2403 is further configured to: perform encoding processing on the value of the second syntax element, and write obtained encoded bits into a bitstream.

It can be understood that in the embodiments of the present disclosure, a "unit" may be a part of a circuit, a part of a processor, a part of a program or software, etc., and of course, it may also be a module or non-modularized. Furthermore, in the embodiments, various components may be integrated into a processing unit, or each unit may exist physically separately, or two or more units may be integrated into a unit. The above-mentioned integrated unit may be implemented in a form of hardware or in a form of a software functional module.

If the integrated unit is implemented in a form of a software functional module and is sold or used as an independent product, it may be stored in a computer-readable storage medium. Based on such an understanding, the technical solutions of the embodiments essentially, or a part thereof that contributes to the prior art, or all or a part of the technical solutions may be embodied in a form of a software product; the computer software product is stored in a storage medium and includes several instructions for enabling a computer device (which may be a personal computer, a server, or a network device, etc.) or a processor to perform all or a part of steps of the method described in the embodiments. The aforementioned storage medium includes: a U disk, a mobile hard disk, a read-only memory (ROM), a random access memory (RAM), a magnetic disk, an optical disc, or any other medium that may store program codes.

Therefore, the embodiments of the present disclosure provide a computer-readable storage medium, applied to the encoder 240, the computer-readable storage medium stores a computer program, and when the computer program is executed by a first processor, the method according to any one of the aforementioned embodiments is implemented.

Based on the composition of the encoder 240 and the computer-readable storage medium, FIG. 25 is a schematic diagram of a specific hardware structure of the encoder 240 provided in an embodiments of the present disclosure. As shown in FIG. 25, the encoder 240 may include: a first communication interface 2501, a first memory 2502, and a first processor 2503; each component is coupled together through a first bus system 2504. It can be understood that the first bus system 2504 is configured to implement connection communication between these components. The first bus system 2504 includes a power bus, a control bus, and a status signal bus in addition to a data bus. However, for the sake of clear description, in FIG. 25, various buses are labeled as the first bus system 2504.

The first communication interface 2501 is configured to receive and sending signals during information transmission and reception with other external network elements.

The first memory 2502 is configured to store a computer program capable of being run on the first processor 2503.

The first processor 2503 is configured to, when running the computer program, perform:
determining a prediction parameter of a current block; and determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; and determining a mapping relationship between a first color component and a second color component according to the first color component reference sample value and the second color component reference sample value; and determining a prediction value of the second color component of the current block according to the mapping relationship and a first color component sample value of the current block.

It can be understood that the first memory 2502 in the embodiments of the present disclosure may be a volatile memory or a non-volatile memory, or may include both the volatile memory and the non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), which is used as an external cache. By way of example and not limitation, many forms of RAMs are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synchlink dynamic random access memory (Synchlink DRAM, SLDRAM), and direct rambus random access memory (Direct Rambus RAM, DRRAM). The first memory 2502 of the system and method described in the present disclosure is intended to include, but is not limited to, these and any other suitable types of memory.

Moreover, the first processor 2503 may be an integrated circuit chip with a signal processing capability. In an implementation process, each step of the above method may be completed by an integrated logic circuit of hardware or instructions in the form of software in the first processor 2503. The above first processor 2503 may be a general-purpose processor, a digital signal processor (DSP), an application specific integrated circuit (ASIC), a field programmable gate array (FPGA), or another programmable logic device, a discrete gate or transistor logic device, or a discrete hardware component. The methods, steps, and logic block diagrams disclosed in the embodiments of the present disclosure may be implemented or executed. The general-purpose processor may be a microprocessor, or the processor may also be any conventional processor or the like. The steps of the method disclosed in conjunction with the embodiments of the present disclosure may be directly embodied as being executed and completed by a hardware decoding processor, or executed and completed by a combination of hardware and software modules in a decoding processor. The software module may be located in a random memory, a flash memory, a read-only memory, a programmable read-only memory, or an electrically erasable programmable memory, a register, or other storage media well known in the art. The storage medium is located in the first memory 2502, and the first processor 2503 reads information from the first memory 2502 and completes the steps of the above method in conjunction with its hardware.

It can be understood that these embodiments described in the present disclosure may be implemented by hardware, software, firmware, middleware, microcode, or a combination thereof. For a hardware implementation, the processing unit may be implemented in one or more application specific integrated circuits (ASICs), digital signal processors (DSPs), digital signal processing devices (DSP Devices, DSPDs), programmable logic devices (PLDs), field-programmable gate arrays (Field-Programmable Gate Array, FPGAs), general-purpose processors, controllers, microcontrollers, microprocessors, other electronic units configured to perform the functions described in the present disclosure, or a combination thereof. For a software implementation, the technology described in the present disclosure may be implemented by modules (e.g., processes, functions, etc.) for performing the functions described in the present disclosure. The software code may be stored in the memory and executed by the processor. The memory may be implemented inside the processor or outside the processor.

Optionally, as another embodiment, the first processor 2503 is further configured to perform the method according to any one of the aforementioned embodiments when running the computer program.

The embodiments provide an encoder, and in the encoder, the correlation between the reconstructed sample and the current block sample in the current picture is fully utilized, which improves the singleness of chroma prediction, thereby improving the accuracy of chroma prediction; and according to the constructed mapping relationship, pixel-level prediction may also be effectively performed, thereby further saving bit rate, improving encoding and decoding efficiency, and then improving encoding and decoding performance.

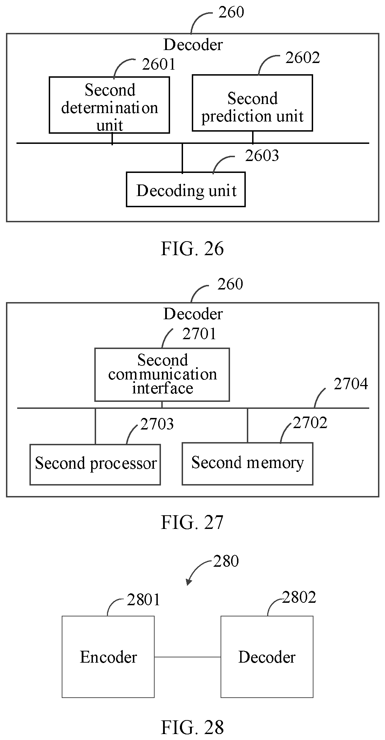

In yet another embodiment of the present disclosure, based on the same inventive concept as the aforementioned embodiments, FIG. 26 is a schematic diagram of a composition structure of a decoder provided in the embodiments of the present disclosure. As shown in FIG. 26, the decoder 260 may include a second determination unit 2601 and a second prediction unit 2602, where:
the second determination unit 2601 is configured to determine a prediction parameter of a current block; and determine a first reference prediction parameter set of the current block according to the prediction parameter; where the first reference prediction parameter set includes one or more first candidate reference prediction parameters;
the second determination unit 2601 is further configured to determine a first color component reference sample value and a second color component reference sample value of the current block according to the first reference prediction parameter set; and determine a mapping relationship between a first color component and a second color component according to the first color component reference sample value and the second color component reference sample value; and
the second prediction unit 2602 is configured to determine a prediction value of the second color component of the current block according to the mapping relationship and a first color component sample value of the current block.

In some embodiments, referring to FIG. 26, the decoder 260 further includes a decoding unit 2603, configured to decode a bitstream and determine a value of a first syntax element; and the second determination unit 2601 is further configured to determine the prediction parameter of the current block according to the value of the first syntax element.

In some embodiments, the second determination unit 2601 is further configured to: in response to the prediction parameter indicating that a first prediction mode is used for the current block, determine the first reference prediction parameter set of the current block.

In some embodiments, the second determination unit 2601 is further configured to: determine a first color component block of the current block; determine a second reference prediction parameter set of the current block according to the first color component block; where the second reference prediction parameter set includes one or more second candidate reference prediction parameters; and determine the first reference prediction parameter set of the current block according to the second reference prediction parameter set.

In some embodiments, the first candidate reference prediction parameters are vector parameters based on the second color component, and the second candidate reference prediction parameters are vector parameters based on the first color component.

In some embodiments, the vector parameter includes one of: a block vector parameter, a motion vector parameter.

In some embodiments, the second determination unit 2601 is further configured to: determine a collocated first color component region of the current block; and determine the first color component block of the current block based on multiple partitioned blocks of the first color component region.

In some embodiments, the second determination unit 2601 is further configured to: determine a first candidate block at a first position from the multiple partitioned blocks; and determine the first color component block of the current block according to the first candidate block at the first position.

In some embodiments, the second determination unit 2601 is further configured to: perform a position offset search in a preset search region at the first position to determine multiple second candidate blocks; and determine the first color component block of the current block according to the first candidate block and/or the multiple second candidate blocks.

In some embodiments, the second determination unit 2601 is further configured to: determine one or more candidate vector parameters based on the first color component, according to the first color component block; determine the second reference prediction parameter set of the current block according to the one or more candidate vector parameters based on the first color component.

In some embodiments, the second determination unit 2601 is further configured to: adjust the candidate vector parameter based on the first color component, to determine a candidate vector parameter based on the second color component; and in response to the candidate vector parameter based on the second color component satisfying a preset availability condition, use the candidate vector parameter based on the first color component as the second candidate reference prediction parameter to add to the second reference prediction parameter set.

In some embodiments, the second determination unit 2601 is further configured to: determine a preset sampling format of the current block; and scale the candidate vector parameter based on the first color component according to the preset sampling format, to determine the candidate vector parameter based on the second color component.

In some embodiments, the second determination unit 2601 is further configured to: adjust the one or more second candidate reference prediction parameters in the second reference prediction parameter set, to determine first candidate reference prediction parameters respectively corresponding to the one or more second candidate reference prediction parameters; and determine the first reference prediction parameter set of the current block according to the first candidate reference prediction parameters respectively corresponding to the one or more second candidate reference prediction parameters.

In some embodiments, the second determination unit 2601 is further configured to: adjust the second candidate reference prediction parameter, to determine a third reference prediction parameter set based on the second color component; and determine a first candidate reference prediction parameter corresponding to the second candidate reference prediction parameter according to the third reference prediction parameter set.

In some embodiments, the second determination unit 2601 is further configured to: scale the second candidate reference prediction parameter according to a preset sampling format of the current block, to determine a candidate vector parameter based on the second color component, and add the candidate vector parameter based on the second color component to the third reference prediction parameter set.

In some embodiments, the second determination unit 2601 is further configured to: scale the second candidate reference prediction parameter according to a preset sampling format of the current block, to determine a first initial vector parameter based on the second color component; and perform an offset calculation on the first initial vector parameter based on the second color component according to one or more offset values, to determine one or more candidate vector parameters based on the second color component, and add the one or more candidate vector parameters based on the second color component to the third reference prediction parameter set.

In some embodiments, the second determination unit 2601 is further configured to: perform an offset calculation on the second candidate reference prediction parameter according to one or more offset values, to determine one or more second initial vector parameters based on the first color component; and scale the one or more second initial vector parameters based on the first color component according to a preset sampling format of the current block, to determine one or more candidate vector parameters based on the second color component, and add the one or more candidate vector parameters based on the second color component to the third reference prediction parameter set.

In some embodiments, the second determination unit 2601 is further configured to: in a case where one or more candidate vector parameters satisfying a preset availability condition exist in the third reference prediction parameter set, determine the first candidate reference prediction parameter according to the one or more candidate vector parameters.

In some embodiments, the one or more candidate vector parameters satisfy the preset availability condition, at least including: an offset position indicated by the one or more candidate vector parameters does not exceed a picture boundary; an offset position indicated by the one or more candidate vector parameters does not exceed a slice boundary; an offset position indicated by the one or more candidate vector parameters does not cover the current block; an offset position indicated by the one or more candidate vector parameters does not exceed a preset available region; an offset position indicated by the one or more candidate vector parameters has been reconstructed.

In some embodiments, the second determination unit 2601 is further configured to: in a case where a candidate vector parameter satisfying the preset availability condition exists in the third reference prediction parameter set, determine the candidate vector parameter satisfying the preset availability condition as the first candidate reference prediction parameter; and in a case where multiple candidate vector parameters satisfying the preset availability condition exist in the third reference prediction parameter set, perform a decision on the multiple candidate vector parameters satisfying the preset availability condition to determine the first candidate reference prediction parameter.

In some embodiments, the second determination unit 2601 is further configured to: determine a first template of the current block; determine respective first matching templates of the multiple candidate vector parameters according to the first template and the multiple candidate vector parameters; in response to the first template and the first matching templates satisfying a preset existence condition, calculate matching errors between the first template of the current block and the first matching templates according to a preset error criterion, to determine respective first cost values of the multiple candidate vector parameters; and determine a minimum cost value from the respective first cost values of the multiple candidate vector parameters, and determine a candidate vector parameter corresponding to the minimum cost value as the first candidate reference prediction parameter.

In some embodiments, the second determination unit 2601 is further configured to: in response to the first template and the first matching templates not satisfying the preset existence condition, determine a first candidate vector parameter satisfying the preset availability condition in the third reference prediction parameter set as the first candidate reference prediction parameter; or in response to the first template and the first matching templates not satisfying the preset existence condition, determine a candidate vector parameter satisfying the preset availability condition at a second position in the third reference prediction parameter set as the first reference prediction parameter.

In some embodiments, the second determination unit 2601 is further configured to: in response to all candidate vector parameters in the third reference prediction parameter set not satisfying the preset availability condition, determine a first color component reconstructed sample and a second color component reconstructed sample at a third position of the current block; and determine a first color component reference sample value and a second color component reference sample value of the current block according to the first color component reconstructed sample and the second color component reconstructed sample at the third position.

In some embodiments, the second determination unit 2601 is configured to: determine first color component reconstructed samples and second color component reconstructed samples respectively indicated by the one or more first candidate reference prediction parameters, according to the first reference prediction parameter set; determine a first color component reconstructed sample and a second color component reconstructed sample at a third position of the current block; and determine the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

In some embodiments, the second determination unit 2601 is further configured to: determine a position of the current block; scale the position of the current block to determine a position of a collocated first color component region of the current block; and scale the first candidate reference prediction parameter to determine a scaled block vector parameter of the collocated first color component region of the current block; and determine a reference block of the first color component according to the position of the first color component region and the scaled block vector parameter, and determine a first color component reconstructed sample indicated by the first candidate reference prediction parameter according to the reference block of the first color component; and determine a reference block of the second color component according to the position of the current block and the first candidate reference prediction parameter, and determine a second color component reconstructed sample indicated by the first candidate reference prediction parameter according to the reference block of the second color component.

In some embodiments, the second determination unit 2601 is further configured to: perform downsampling processing on the reference block of the first color component to determine the first color component reconstructed sample indicated by the first candidate reference prediction parameter, so that a resolution of the first color component reconstructed sample is same as a resolution of the second color component reconstructed sample.

In some embodiments, the second determination unit 2601 is further configured to: perform upsampling processing on the reference block of the second color component to determine the second color component reconstructed sample indicated by the first candidate reference prediction parameter, so that a resolution of the first color component reconstructed sample is same as a resolution of the second color component reconstructed sample; and accordingly, perform downsampling processing on the prediction value of the second color component of the current block.

In some embodiments, the second determination unit 2601 is further configured to: determine a downsampling method of the current block; and perform downsampling processing on the reference block of the first color component according to the downsampling method, to determine the first color component reconstructed sample indicated by the first candidate reference prediction parameter.

In some embodiments, the decoding unit 2603 is further configured to: decode a bitstream, to determine a value of filter identification information; and the second determination unit 2601 is further configured to: determine the downsampling method of the current block according to the value of the filter identification information.

In some embodiments, the second determination unit 2601 is further configured to: determine a first template of the current block; and determine the first color component reconstructed sample and the second color component reconstructed sample at the third position, according to the first template.

In some embodiments, a type of the first template includes at least one of: an upper template, an upper-right template, a left template, a lower-left template, and an upper-left template; where the upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

In some embodiments, the second determination unit 2601 is further configured to: determine a first Look Up Table according to the first color component reference sample value and the second color component reference sample value, where the first Look Up Table is used for recording a value of the second color component that corresponds to an index key as the first color component.

In some embodiments, the second determination unit 2601 is further configured to: determine a first discrete model according to the first color component reference sample value and the second color component reference sample value, where the first discrete model is used for indicating the mapping relationship between the first color component and the second color component.

In some embodiments, the second determination unit 2601 is further configured to: perform mapping processing on the first color component reference sample value, so that the first color component reference sample value is within a preset sample range.

In some embodiments, the second determination unit 2601 is further configured to: in a case where a same first reference sample value in the first color component reference sample values corresponds to different multiple second reference sample values in the second color component reference sample values, perform overwriting processing sequentially according to a sample order, and use a last second reference sample value as a value having a mapping relationship with the first reference sample value.

In some embodiments, the second determination unit 2601 is further configured to: in a case where a same first reference sample value in the first color component reference sample values corresponds to different multiple second reference sample values in the second color component reference sample values, perform an average calculation on the multiple second reference sample values, and use an obtained average value as a value having a mapping relationship with the first reference sample value.

In some embodiments, the second determination unit 2601 is further configured to: determine a reconstructed pixel sample of a collocated first color component region of the current block; and determine the first color component sample value of the current block based on the reconstructed pixel sample of the first color component region.

In some embodiments, the second prediction unit 2602 is further configured to: in a case where a first color component value equal to the first color component sample value is found in the mapping relationship, determine a value of the second color component corresponding to the first color component value as the prediction value of the second color component of the current block.

In some embodiments, the second determination unit 2601 is further configured to: in a case where no first color component value equal to the first color component sample value is found in the mapping relationship, perform modification processing on the first color component sample value to determine a first color component modification value, and continue to find in the mapping relationship for whether there is a first color component value equal to the first color component modification value.

In some embodiments, the second determination unit 2601 is further configured to: perform an offset calculation on the first color component sample value according to one or more preset offset values to determine the first color component modification value.

In some embodiments, the second prediction unit 2602 is further configured to: in a case where no first color component value equal to the first color component modification value is found in the mapping relationship, perform an average calculation on the second color component reference sample values, and determine an obtained average value as the prediction value of the second color component of the current block.

In some embodiments, the second prediction unit 2602 is further configured to: determine a first initial prediction value of the second color component of the current block according to the mapping relationship and the first color component sample value of the current block; and perform a modification operation on the first initial prediction value to determine the prediction value of the second color component of the current block.

In some embodiments, the second prediction unit 2602 is further configured to: perform prediction processing on the second color component of the current block according to a first preset mode, to determine a second initial prediction value of the second color component of the current block; where the first preset mode at least includes one of: a PLANAR mode, a DM mode, a DC mode, and a CCLM mode; and perform a weighting calculation on the first initial prediction value and the second initial prediction value to determine the prediction value of the second color component of the current block.

In some embodiments, the decoding unit 2603 is further configured to decode a bitstream to determine a residual value of the second color component of the current block; the second determination unit 2601 is further configured to determine a reconstructed value of the second color component of the current block according to the residual value and the prediction value.

In some embodiments, the second determination unit 2601 is further configured to: in response to the first reference prediction parameter set including multiple first candidate reference prediction parameters, determine first color component reconstructed samples and second color component reconstructed samples respectively indicated by the multiple first candidate reference prediction parameters; and determine multiple mapping relationships between the first color component and the second color component, according to the first color component reconstructed samples and the second color component reconstructed samples respectively indicated by the multiple first candidate reference prediction parameters; and the second prediction unit 2602 is further configured to: determine multiple third initial prediction values of the second color component of the current block according to the multiple mapping relationships; and perform a weighting calculation on the multiple third initial prediction values to determine the prediction value of the second color component of the current block.

In some embodiments, the second determination unit 2601 is further configured to: in response to a first color component block of the current block including multiple candidate blocks, determine a second reference prediction parameter set of the current block; where the second reference prediction parameter set includes multiple second candidate reference prediction parameters; determine multiple first candidate reference prediction parameters according to the multiple second candidate reference prediction parameters; determine multiple candidate mapping relationships between the first color component and the second color component based on the multiple first candidate reference prediction parameters; and determine a target mapping relationship from the multiple candidate mapping relationships; the decoding unit 2603 is further configured to decode a bitstream to determine a mapping index value; the second determination unit 2601 is further configured to determine a target mapping relationship according to the mapping relationship index value and the multiple candidate mapping relationships; the second prediction unit 2602 is further configured to determine the prediction value of the second color component of the current block according to the target mapping relationship and the first color component sample value of the current block.

In some embodiments, the second determination unit 2601 is further configured to: in response to a first color component block of the current block including multiple candidate blocks, determine a second reference prediction parameter set of the current block; where the second reference prediction parameter set includes multiple second candidate reference prediction parameters; determine multiple first candidate reference prediction parameters according to the multiple second candidate reference prediction parameters; determine multiple candidate mapping relationships between the first color component and the second color component based on the multiple first candidate reference prediction parameters; perform a matching error calculation on the multiple candidate mapping relationships based on a template matching method, to determine respective second cost values of the multiple candidate mapping relationships; determine a minimum cost value from the respective second cost values of the multiple candidate mapping relationships, and determine a candidate mapping relationship corresponding to the minimum cost value as a target mapping relationship; and the second prediction unit 2602 is further configured to: determine the prediction value of the second color component of the current block according to the target mapping relationship and the first color component sample value of the current block.

In some embodiments, the second determination unit 2601 is further configured to: determine a first template of the current block; determine a reconstructed pixel sample value of a collocated first color component region template of the first template; the second prediction unit 2602 is further configured to: determine respective prediction values of the second color component of the first template under the multiple mapping relationships, according to the multiple candidate mapping relationships and the reconstructed pixel sample value of the first color component region template; and the second determination unit 2601 is further configured to: perform a cost calculation according to a reconstructed value of the second color component of the first template and the respective prediction values of the second color component of the first template under the multiple mapping relationships, to determine the respective second cost values of the multiple candidate mapping relationships.

In some embodiments, the second determination unit 2601 is further configured to: determine a collocated first color component region of the current block; and in a case where a DM mode is used for the current block and the first color component region is predicted based on a block vector, determine that a first prediction mode is used for the current block.

In some embodiments, the second determination unit 2601 is further configured to: determine a value of a second syntax element; and in response to the second syntax element indicating that a first prediction mode is allowed to be used for the current block, perform the determining of the prediction parameter of the current block.

It can be understood that in the embodiments, a "unit" may be a part of a circuit, a part of a processor, a part of a program or software, etc., and of course, it may also be a module or non-modularized. Furthermore, in the embodiments, various components may be integrated into a processing unit, or each unit may exist physically separately, or two or more units may be integrated into a unit. The above-mentioned integrated unit may be implemented in a form of hardware or in a form of a software functional module.

If the integrated unit is implemented in a form of a software functional module and is not sold or used as an independent product, it may be stored in a computer-readable storage medium. Based on such an understanding, the embodiments provide a computer-readable storage medium, applied to the decoder 260, and the computer-readable storage medium stores a computer program, and when the computer program is executed by a second processor, the method according to any one of the aforementioned embodiments is implemented.

Based on the composition of the decoder 260 and the computer-readable storage medium, FIG. 27 is a schematic diagram of a specific hardware structure of the decoder 260 provided in an embodiments of the present disclosure. As shown in FIG. 27, the decoder 260 may include: a second communication interface 2701, a second memory 2702, and a second processor 2703; each component is coupled together through a second bus system 2704. It can be understood that the second bus system 2704 is configured to implement connection communication between these components. The second bus system 2704 includes a power bus, a control bus, and a status signal bus in addition to a data bus. However, for the sake of clear description, in FIG. 27, various buses are labeled as the second bus system 2704.

The second communication interface 2701 is configured to receive and sending signals during information transmission and reception with other external network elements.

The second memory 2702 is configured to store a computer program capable of being run on the second processor 2703.

The second processor 2703 is configured to, when running the computer program, perform:
determining a prediction parameter of a current block; and determining a first reference prediction parameter set of the current block according to the prediction parameter; where the first reference prediction parameter set includes one or more first candidate reference prediction parameters; determining a first color component reference sample value and a second color component reference sample value of the current block according to the first reference prediction parameter set; and determining a mapping relationship between a first color component and a second color component according to the first color component reference sample value and the second color component reference sample value; and determining a prediction value of the second color component of the current block according to the mapping relationship and a first color component sample value of the current block.

Optionally, as another embodiment, the second processor 2703 is further configured to, perform the method according to any one of the aforementioned embodiments when running the computer program.

It can be understood that the hardware functions of the second memory 2702 are similar to those of the first memory 2502, and the hardware functions of the second processor 2703 are similar to those of the first processor 2503; details are not described herein.

The embodiments provide an decoder, and in the decoder, the correlation between the reconstructed sample and the current block sample in the current picture is fully utilized, which improves the singleness of chroma prediction, thereby improving the accuracy of chroma prediction; and according to the constructed mapping relationship, pixel-level prediction may also be effectively performed, thereby further saving bit rate, improving encoding and decoding efficiency, and then improving encoding and decoding performance.

In yet another embodiment of the present disclosure, FIG. 28 is a schematic diagram of a composition structure of an encoding and decoding system provided in the embodiments of the present disclosure. As shown in FIG. 28, the encoding and decoding system 280 may include an encoder 2801 and a decoder 2802.

In the embodiments of the present disclosure, the encoder 2801 may be the encoder according to any one of the aforementioned embodiments, and the decoder 2802 may be the decoder according to any one of the aforementioned embodiments.

It should be noted that, in the present disclosure, the terms "include", "comprise" or any other variants thereof are intended to cover non-exclusive inclusion, so that a process, method, article or apparatus that includes a series of elements includes not only those elements but also other elements that are not explicitly listed, or further includes elements that are inherent to the process, method, article or apparatus. Under no more limitations, an element defined by the statement "including a/an/one ..." does not exclude the presence of additional identical elements in the process, method, article or apparatus that includes the element.

The sequence numbers of the above embodiments of the present disclosure are only for description and do not represent the superiority or inferiority of the embodiments.

The methods disclosed in several method embodiments provided in the present disclosure may be arbitrarily combined without conflict to obtain new method embodiments.

The features disclosed in several product embodiments provided in the present disclosure may be arbitrarily combined without conflict to obtain new product embodiments.

The features disclosed in several method or device embodiments provided in the present disclosure may be arbitrarily combined without conflict to obtain new method embodiments or device embodiments.

The above description is only a specific implementation of the present disclosure, but the protection scope of the present disclosure is not limited thereto; any changes or substitutions that may be easily conceived by those skilled in the art within the technical scope disclosed in the present disclosure shall fall within the protection scope of the present disclosure. Therefore, the protection scope of the present disclosure shall be based on the protection scope of the claims.

### Industrial Applicability

In the embodiments of the present disclosure, an encoder side or a decoder side determines a prediction parameter of a current block; determines a first reference prediction parameter set of the current block according to the prediction parameter; where the first reference prediction parameter set includes one or more first candidate reference prediction parameters; determines a first color component reference sample value and a second color component reference sample value of the current block according to the first reference prediction parameter set; determines a mapping relationship between a first color component and a second color component according to the first color component reference sample value and the second color component reference sample value; and determines a prediction value of the second color component of the current block according to the mapping relationship and a first color component sample value of the current block. In this way, if a BVG-LUT mode is used for the current block, then a first reference prediction parameter set applied to a chroma component may be determined, and according to the first reference prediction parameter set, a luma component reference sample value and a chroma component reference sample value of the current block are determined, thereby constructing a mapping relationship between the luma component and the chroma component, and then the chroma component is predicted by utilizing the mapping relationship. That is, a correlation between a reconstructed sample and a sample of the current block in the current picture is fully utilized here, which improves a singularity of chroma prediction, thereby improving the accuracy of chroma prediction; moreover, according to the constructed mapping relationship, pixel-level prediction may also be effectively performed, thereby further saving bit rate, improving encoding and decoding efficiency, and then improving encoding and decoding performance.

## Claims

1. A decoding method, applied to a decoder, comprising:
determining a prediction parameter of a current block;
determining a first reference prediction parameter set of the current block according to the prediction parameter; wherein the first reference prediction parameter set comprises one or more first candidate reference prediction parameters;
determining a first color component reference sample value and a second color component reference sample value of the current block according to the first reference prediction parameter set;
determining a mapping relationship between a first color component and a second color component according to the first color component reference sample value and the second color component reference sample value; and
determining a prediction value of the second color component of the current block according to the mapping relationship and a first color component sample value of the current block.

2. The method according to claim 1, wherein determining the prediction parameter of the current block, comprises:
decoding a bitstream to determine a value of a first syntax element; and
determining the prediction parameter of the current block according to the value of the first syntax element.

3. The method according to claim 1, wherein determining the first reference prediction parameter set of the current block according to the prediction parameter, comprises:
in response to the prediction parameter indicating that a first prediction mode is used for the current block, determining the first reference prediction parameter set of the current block.

4. The method according to claim 1, wherein determining the first reference prediction parameter set of the current block, comprises:
determining a first color component block of the current block;
determining a second reference prediction parameter set of the current block according to the first color component block; wherein the second reference prediction parameter set comprises one or more second candidate reference prediction parameters; and
determining the first reference prediction parameter set of the current block according to the second reference prediction parameter set.

5. The method according to claim 4, wherein the first candidate reference prediction parameters are vector parameters based on the second color component, and the second candidate reference prediction parameters are vector parameters based on the first color component.

6. The method according to claim 5, wherein the vector parameter comprises one of: a block vector parameter, a motion vector parameter.

7. The method according to claim 4, wherein determining the first color component block of the current block, comprises:
determining a collocated first color component region of the current block; and
determining the first color component block of the current block based on multiple partitioned blocks of the first color component region.

8. The method according to claim 7, wherein determining the first color component block of the current block based on the multiple partitioned blocks of the first color component region, comprises:
determining a first candidate block at a first position from the multiple partitioned blocks; and
determining the first color component block of the current block according to the first candidate block at the first position.

9. The method according to claim 8, wherein determining the first color component block of the current block according to the first candidate block at the first position, comprises:
performing a position offset search in a preset search region at the first position to determine multiple second candidate blocks; and
determining the first color component block of the current block according to the first candidate block and/or the multiple second candidate blocks.

10. The method according to claim 4, wherein determining the second reference prediction parameter set of the current block according to the first color component block, comprises:
determining one or more candidate vector parameters based on the first color component, according to the first color component block;
determining the second reference prediction parameter set of the current block according to the one or more candidate vector parameters based on the first color component.

11. The method according to claim 10, wherein determining the second reference prediction parameter set of the current block according to the one or more candidate vector parameters based on the first color component, comprises:
adjusting the candidate vector parameter based on the first color component, to determine a candidate vector parameter based on the second color component; and
in response to the candidate vector parameter based on the second color component satisfying a preset availability condition, using the candidate vector parameter based on the first color component as the second candidate reference prediction parameter to add to the second reference prediction parameter set.

12. The method according to claim 11, wherein adjusting the candidate vector parameter based on the first color component, to determine the candidate vector parameter based on the second color component, comprises:
determining a preset sampling format of the current block; and
scaling the candidate vector parameter based on the first color component according to the preset sampling format, to determine the candidate vector parameter based on the second color component.

13. The method according to claim 4, wherein determining the first reference prediction parameter set of the current block according to the second reference prediction parameter set, comprises:
adjusting the one or more second candidate reference prediction parameters in the second reference prediction parameter set, to determine first candidate reference prediction parameters respectively corresponding to the one or more second candidate reference prediction parameters; and
determining the first reference prediction parameter set of the current block according to the first candidate reference prediction parameters respectively corresponding to the one or more second candidate reference prediction parameters.

14. The method according to claim 13, wherein adjusting the one or more second candidate reference prediction parameters in the second reference prediction parameter set, to determine the first candidate reference prediction parameters respectively corresponding to the one or more second candidate reference prediction parameters, comprises:
adjusting the second candidate reference prediction parameter, to determine a third reference prediction parameter set based on the second color component; and
determining a first candidate reference prediction parameter corresponding to the second candidate reference prediction parameter according to the third reference prediction parameter set.

15. The method according to claim 14, wherein adjusting the second candidate reference prediction parameter, to determine the third reference prediction parameter set based on the second color component, comprises:
scaling the second candidate reference prediction parameter according to a preset sampling format of the current block, to determine a candidate vector parameter based on the second color component, and adding the candidate vector parameter based on the second color component to the third reference prediction parameter set.

16. The method according to claim 14, wherein adjusting the second candidate reference prediction parameter, to determine the third reference prediction parameter set based on the second color component, comprises:
scaling the second candidate reference prediction parameter according to a preset sampling format of the current block, to determine a first initial vector parameter based on the second color component; and
performing an offset calculation on the first initial vector parameter based on the second color component according to one or more offset values, to determine one or more candidate vector parameters based on the second color component, and adding the one or more candidate vector parameters based on the second color component to the third reference prediction parameter set.

17. The method according to claim 14, wherein adjusting the second candidate reference prediction parameter, to determine the third reference prediction parameter set based on the second color component, comprises:
performing an offset calculation on the second candidate reference prediction parameter according to one or more offset values, to determine one or more second initial vector parameters based on the first color component; and
scaling the one or more second initial vector parameters based on the first color component according to a preset sampling format of the current block, to determine one or more candidate vector parameters based on the second color component, and adding the one or more candidate vector parameters based on the second color component to the third reference prediction parameter set.

18. The method according to claim 14, wherein determining the first candidate reference prediction parameter corresponding to the second candidate reference prediction parameter according to the third reference prediction parameter set, comprises:
in a case where one or more candidate vector parameters satisfying a preset availability condition exist in the third reference prediction parameter set, determining the first candidate reference prediction parameter according to the one or more candidate vector parameters.

19. The method according to claim 18, wherein the one or more candidate vector parameters satisfy the preset availability condition, at least comprising:
an offset position indicated by the one or more candidate vector parameters does not exceed a picture boundary;
an offset position indicated by the one or more candidate vector parameters does not exceed a slice boundary;
an offset position indicated by the one or more candidate vector parameters does not cover the current block;
an offset position indicated by the one or more candidate vector parameters does not exceed a preset available region;
an offset position indicated by the one or more candidate vector parameters has been reconstructed.

20. The method according to claim 18, wherein determining the first candidate reference prediction parameter according to the one or more candidate vector parameters, comprises:
in a case where a candidate vector parameter satisfying the preset availability condition exists in the third reference prediction parameter set, determining the candidate vector parameter satisfying the preset availability condition as the first candidate reference prediction parameter;
in a case where multiple candidate vector parameters satisfying the preset availability condition exist in the third reference prediction parameter set, performing a decision on the multiple candidate vector parameters satisfying the preset availability condition to determine the first candidate reference prediction parameter.

21. The method according to claim 20, wherein performing the decision on the multiple candidate vector parameters satisfying the preset availability condition to determine the first candidate reference prediction parameter, comprises:
determining a first template of the current block;
determining respective first matching templates of the multiple candidate vector parameters according to the first template and the multiple candidate vector parameters;
in response to the first template and the first matching templates satisfying a preset existence condition, calculating matching errors between the first template of the current block and the first matching templates according to a preset error criterion, to determine respective first cost values of the multiple candidate vector parameters; and
determining a minimum cost value from the respective first cost values of the multiple candidate vector parameters, and determining a candidate vector parameter corresponding to the minimum cost value as the first candidate reference prediction parameter.

22. The method according to claim 21, wherein the method further comprises:
in response to the first template and the first matching templates not satisfying the preset existence condition, determining a first candidate vector parameter satisfying the preset availability condition in the third reference prediction parameter set as the first candidate reference prediction parameter; or,
in response to the first template and the first matching templates not satisfying the preset existence condition, determining a candidate vector parameter satisfying the preset availability condition at a second position in the third reference prediction parameter set as the first reference prediction parameter.

23. The method according to claim 14, wherein the method further comprises:
in response to all candidate vector parameters in the third reference prediction parameter set not satisfying the preset availability condition, determining a first color component reconstructed sample and a second color component reconstructed sample at a third position of the current block; and
determine a first color component reference sample value and a second color component reference sample value of the current block according to the first color component reconstructed sample and the second color component reconstructed sample at the third position.

24. The method according to claim 1, wherein determining the first color component reference sample value and the second color component reference sample value of the current block according to the first reference prediction parameter set, comprises:
determining first color component reconstructed samples and second color component reconstructed samples respectively indicated by the one or more first candidate reference prediction parameters, according to the first reference prediction parameter set;
determining a first color component reconstructed sample and a second color component reconstructed sample at a third position of the current block; and
determining the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

25. The method according to claim 24, wherein determining first color component reconstructed samples and second color component reconstructed samples respectively indicated by the one or more first candidate reference prediction parameters, according to the first reference prediction parameter set, comprises:
determining a position of the current block;
scaling the position of the current block to determine a position of a collocated first color component region of the current block; and scaling the first candidate reference prediction parameter to determine a scaled reference prediction parameter of the collocated first color component region of the current block;
determining a reference block of the first color component according to the position of the first color component region and the scaled reference prediction parameter, and determining a first color component reconstructed sample indicated by the first candidate reference prediction parameter according to the reference block of the first color component; and
determining a reference block of the second color component according to the position of the current block and the first candidate reference prediction parameter, and determining a second color component reconstructed sample indicated by the first candidate reference prediction parameter according to the reference block of the second color component.

26. The method according to claim 25, wherein determining the first color component reconstructed sample indicated by the first candidate reference prediction parameter according to the reference block of the first color component, comprises:
performing downsampling processing on the reference block of the first color component to determine the first color component reconstructed sample indicated by the first candidate reference prediction parameter, so that a resolution of the first color component reconstructed sample is same as a resolution of the second color component reconstructed sample.

27. The method according to claim 25, wherein determining the second color component reconstructed sample indicated by the first candidate reference prediction parameter according to the reference block of the second color component, comprises:
performing upsampling processing on the reference block of the second color component to determine the second color component reconstructed sample indicated by the first candidate reference prediction parameter, so that a resolution of the first color component reconstructed sample is same as a resolution of the second color component reconstructed sample; and
accordingly, the method further comprises: performing downsampling processing on the prediction value of the second color component of the current block.

28. The method according to claim 26, wherein performing downsampling processing on the reference block of the first color component to determine the first color component reconstructed sample indicated by the first candidate reference prediction parameter, comprises:
determining a downsampling method of the current block; and
performing downsampling processing on the reference block of the first color component according to the downsampling method, to determine the first color component reconstructed sample indicated by the first candidate reference prediction parameter.

29. The method according to claim 28, wherein determining the downsampling method of the current block, comprises:
decoding a bitstream, to determine a value of filter identification information; and
determining the downsampling method of the current block according to the value of the filter identification information.

30. The method according to claim 24, wherein determining the first color component reconstructed sample and the second color component reconstructed sample at the third position of the current block, comprises:
determining a first template of the current block; and
determining the first color component reconstructed sample and the second color component reconstructed sample at the third position, according to the first template.

31. The method according to claim 21 or 30, wherein a type of the first template comprises at least one of: an upper template, an upper-right template, a left template, a lower-left template, and an upper-left template;
wherein the upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

32. The method according to any one of claims 1 to 31, wherein determining the mapping relationship between the first color component and the second color component according to the first color component reference sample value and the second color component reference sample value, comprises:
determining a first Look Up Table according to the first color component reference sample value and the second color component reference sample value, wherein the first Look Up Table is used for recording a value of the second color component that corresponds to an index key as the first color component.

33. The method according to any one of claims 1 to 31, wherein determining the mapping relationship between the first color component and the second color component according to the first color component reference sample value and the second color component reference sample value, comprises:
determining a first discrete model according to the first color component reference sample value and the second color component reference sample value, wherein the first discrete model is used for indicating the mapping relationship between the first color component and the second color component.

34. The method according to claim 32 or 33, wherein the method further comprises:
performing mapping processing on the first color component reference sample value, so that the first color component reference sample value is within a preset sample range.

35. The method according to claim 32 or 33, wherein the method further comprises:
in a case where a same first reference sample value in the first color component reference sample values corresponds to different multiple second reference sample values in the second color component reference sample values, performing overwriting processing sequentially according to a sample order, and using a last second reference sample value as a value having a mapping relationship with the first reference sample value.

36. The method according to claim 32 or 33, wherein the method further comprises:
in a case where a same first reference sample value in the first color component reference sample values corresponds to different multiple second reference sample values in the second color component reference sample values, performing an average calculation on the multiple second reference sample values, and using an obtained average value as a value having a mapping relationship with the first reference sample value.

37. The method according to claim 1, wherein the method further comprises:
determining a reconstructed pixel sample of a collocated first color component region of the current block; and
determining the first color component sample value of the current block based on the reconstructed pixel sample of the first color component region.

38. The method according to claim 1, wherein determining the prediction value of the second color component of the current block according to the mapping relationship and the first color component sample value of the current block, comprises:
in a case where a first color component value equal to the first color component sample value is found in the mapping relationship, determining a value of the second color component corresponding to the first color component value as the prediction value of the second color component of the current block.

39. The method according to claim 38, wherein the method further comprises:
in a case where no first color component value equal to the first color component sample value is found in the mapping relationship, performing modification processing on the first color component sample value to determine a first color component modification value, and continuing to find in the mapping relationship for whether there is a first color component value equal to the first color component modification value.

40. The method according to claim 39, wherein performing modification processing on the first color component reconstructed value to determine the first color component modification value, comprises:
performing an offset calculation on the first color component sample value according to one or more preset offset values, to determine the first color component modification value.

41. The method according to claim 39, wherein the method further comprises:
in a case where no first color component value equal to the first color component modification value is found in the mapping relationship, performing an average calculation on the second color component reference sample values, and determining an obtained average value as the prediction value of the second color component of the current block.

42. The method according to claim 1, wherein determining the prediction value of the second color component of the current block according to the mapping relationship and the first color component sample value of the current block, comprises:
determining a first initial prediction value of the second color component of the current block according to the mapping relationship and the first color component sample value of the current block; and
performing a modification operation on the first initial prediction value to determine the prediction value of the second color component of the current block.

43. The method according to claim 42, wherein performing the modification operation on the first initial prediction value to determine the prediction value of the second color component of the current block, comprises:
performing prediction processing on the second color component of the current block according to a first preset mode, to determine a second initial prediction value of the second color component of the current block; wherein the first preset mode at least comprises one of: a PLANAR mode, a Direct Mode (DM) mode, a Direct Current (DC) mode, and a cross-component linear model prediction (CCLM) mode; and
performing a weighting calculation on the first initial prediction value and the second initial prediction value to determine the prediction value of the second color component of the current block.

44. The method according to claim 1, wherein the method further comprises:
decoding a bitstream to determine a residual value of the second color component of the current block; and
determining a reconstructed value of the second color component of the current block according to the residual value and the prediction value.

45. The method according to claim 1, wherein the method further comprises:
in response to the first reference prediction parameter set comprising multiple first candidate reference prediction parameters, determining first color component reconstructed samples and second color component reconstructed samples respectively indicated by the multiple first candidate reference prediction parameters;
determining multiple mapping relationships between the first color component and the second color component, according to the first color component reconstructed samples and the second color component reconstructed samples respectively indicated by the multiple first candidate reference prediction parameters;
determining multiple third initial prediction values of the second color component of the current block according to the multiple mapping relationships; and
performing a weighting calculation on the multiple third initial prediction values to determine the prediction value of the second color component of the current block.

46. The method according to claim 1, wherein the method further comprises:
in response to a first color component block of the current block comprising multiple candidate blocks, determining a second reference prediction parameter set of the current block; wherein the second reference prediction parameter set comprises multiple second candidate reference prediction parameters;
determining multiple first candidate reference prediction parameters according to the multiple second candidate reference prediction parameters;
determining multiple candidate mapping relationships between the first color component and the second color component based on the multiple first candidate reference prediction parameters;
decoding a bitstream to determine a mapping relationship index value;
determining a target mapping relationship according to the mapping relationship index value and the multiple candidate mapping relationships; and
determining the prediction value of the second color component of the current block according to the target mapping relationship and the first color component sample value of the current block.

47. The method according to claim 1, wherein the method further comprises:
in response to a first color component block of the current block comprising multiple candidate blocks, determining a second reference prediction parameter set of the current block; wherein the second reference prediction parameter set comprises multiple second candidate reference prediction parameters;
determining multiple first candidate reference prediction parameters according to the multiple second candidate reference prediction parameters;
determining multiple candidate mapping relationships between the first color component and the second color component based on the multiple first candidate reference prediction parameters;
performing a matching error calculation on the multiple candidate mapping relationships based on a template matching method, to determine respective second cost values of the multiple candidate mapping relationships;
determining a minimum cost value from the respective second cost values of the multiple candidate mapping relationships, and determining a candidate mapping relationship corresponding to the minimum cost value as a target mapping relationship; and
determining the prediction value of the second color component of the current block according to the target mapping relationship and the first color component sample value of the current block.

48. The method according to claim 47, wherein performing the matching error calculation on the multiple candidate mapping relationships based on the template matching method, to determine the respective second cost values of the multiple candidate mapping relationships, comprises:
determining a first template of the current block;
determining a reconstructed pixel sample value of a collocated first color component region template of the first template;
determining respective prediction values of the second color component of the first template under the multiple mapping relationships, according to the multiple candidate mapping relationships and the reconstructed pixel sample value of the first color component region template; and
performing a cost calculation according to a reconstructed value of the second color component of the first template and the respective prediction values of the second color component of the first template under the multiple mapping relationships, to determine the respective second cost values of the multiple candidate mapping relationships.

49. The method according to claim 1, wherein the method further comprises:
determining a collocated first color component region of the current block; and
in a case where a DM mode is used for the current block and the first color component region is predicted based on a block vector, determining that a first prediction mode is used for the current block.

50. The method according to any one of claims 1 to 49, wherein the method further comprises:
determining a value of a second syntax element; and
in response to the second syntax element indicating that a first prediction mode is allowed to be used for the current block, performing the determining of the prediction parameter of the current block.

51. An encoding method, applied to an encoder, comprising:
determining a prediction parameter of a current block;
determining a first reference prediction parameter set of the current block according to the prediction parameter; wherein the first reference prediction parameter set comprises one or more first candidate reference prediction parameters;
determining a first color component reference sample value and a second color component reference sample value of the current block according to the first reference prediction parameter set;
determining a mapping relationship between a first color component and a second color component according to the first color component reference sample value and the second color component reference sample value; and
determining a prediction value of the second color component of the current block according to the mapping relationship and a first color component sample value of the current block.

52. The method according to claim 51, wherein determining the first reference prediction parameter set of the current block according to the prediction parameter, comprises:
in response to the prediction parameter indicating that a first prediction mode is used for the current block, determining the first reference prediction parameter set of the current block.

53. The method according to claim 52, wherein determining the prediction parameter of the current block, comprises:
determining a first cost value for using the first prediction mode for the current block, and determining a second cost value for not using the first prediction mode for the current block; and
determining the prediction parameter according to the first cost value and the second cost value.

54. The method according to claim 53, wherein determining the prediction parameter according to the first cost value and the second cost value, comprises:
in response to the first cost value being less than the second cost value, determining that the prediction parameter indicates that the first prediction mode is used for the current block;
in response to the first cost value being greater than the second cost value, determining that the prediction parameter indicates that the first prediction mode is not used for the current block.

55. The method according to claim 54, wherein the method further comprises:
determining a value of a first syntax element according to the prediction parameter;
performing encoding processing on the value of the first syntax element, and writing obtained encoded bits into a bitstream.

56. The method according to claim 55, wherein determining the value of the first syntax element according to the prediction parameter, comprises:
in response to the prediction parameter indicating that the first prediction mode is used for the current block, determining that the value of the first syntax element is a first value;
in response to the prediction parameter indicating that the first prediction mode is not used for the current block, determining that the value of the first syntax element is a second value.

57. The method according to claim 51, wherein determining the first reference prediction parameter set of the current block, comprises:
determining a first color component block of the current block;
determining a second reference prediction parameter set of the current block according to the first color component block; wherein the second reference prediction parameter set comprises one or more second candidate reference prediction parameters; and
determining the first reference prediction parameter set of the current block according to the second reference prediction parameter set.

58. The method according to claim 57, wherein the first candidate reference prediction parameters are vector parameters based on the second color component, and the second candidate reference prediction parameters are vector parameters based on the first color component.

59. The method according to claim 58, wherein the vector parameter comprises one of: a block vector parameter, a motion vector parameter.

60. The method according to claim 57, wherein determining the first color component block of the current block, comprises:
determining a collocated first color component region of the current block; and
determining the first color component block of the current block based on multiple partitioned blocks of the first color component region.

61. The method according to claim 60, wherein determining the first color component block of the current block based on the multiple partitioned blocks of the first color component region, comprises:
determining a first candidate block at a first position from the multiple partitioned blocks; and
determining the first color component block of the current block according to the first candidate block at the first position.

62. The method according to claim 61, wherein determining the first color component block of the current block according to the first candidate block at the first position, comprises:
performing a position offset search in a preset search region at the first position to determine multiple second candidate blocks; and
determining the first color component block of the current block according to the first candidate block and/or the multiple second candidate blocks.

63. The method according to claim 57, wherein determining the second reference prediction parameter set of the current block according to the first color component block, comprises:
determining one or more candidate vector parameters based on the first color component, according to the first color component block;
determining the second reference prediction parameter set of the current block according to the one or more candidate vector parameters based on the first color component.

64. The method according to claim 63, wherein determining the second reference prediction parameter set of the current block according to the one or more candidate vector parameters based on the first color component, comprises:
adjusting the candidate vector parameter based on the first color component, to determine a candidate vector parameter based on the second color component; and
in response to the candidate vector parameter based on the second color component satisfying a preset availability condition, using the candidate vector parameter based on the first color component as the second candidate reference prediction parameter to add to the second reference prediction parameter set.

65. The method according to claim 64, wherein adjusting the candidate vector parameter based on the first color component, to determine the candidate vector parameter based on the second color component, comprises:
determining a preset sampling format of the current block; and
scaling the candidate vector parameter based on the first color component according to the preset sampling format, to determine the candidate vector parameter based on the second color component.

66. The method according to claim 57, wherein determining the first reference prediction parameter set of the current block according to the second reference prediction parameter set, comprises:
adjusting the one or more second candidate reference prediction parameters in the second reference prediction parameter set, to determine first candidate reference prediction parameters respectively corresponding to the one or more second candidate reference prediction parameters; and
determining the first reference prediction parameter set of the current block according to the first candidate reference prediction parameters respectively corresponding to the one or more second candidate reference prediction parameters.

67. The method according to claim 66, wherein adjusting the one or more second candidate reference prediction parameters in the second reference prediction parameter set, to determine the first candidate reference prediction parameters respectively corresponding to the one or more second candidate reference prediction parameters, comprises:
adjusting the second candidate reference prediction parameter, to determine a third reference prediction parameter set based on the second color component; and
determining a first candidate reference prediction parameter corresponding to the second candidate reference prediction parameter according to the third reference prediction parameter set.

68. The method according to claim 67, wherein adjusting the second candidate reference prediction parameter, to determine the third reference prediction parameter set based on the second color component, comprises:
scaling the second candidate reference prediction parameter according to a preset sampling format of the current block, to determine a candidate vector parameter based on the second color component, and adding the candidate vector parameter based on the second color component to the third reference prediction parameter set.

69. The method according to claim 67, wherein adjusting the second candidate reference prediction parameter, to determine the third reference prediction parameter set based on the second color component, comprises:
scaling the second candidate reference prediction parameter according to a preset sampling format of the current block, to determine a first initial vector parameter based on the second color component; and
performing an offset calculation on the first initial vector parameter based on the second color component according to one or more offset values, to determine one or more candidate vector parameters based on the second color component, and adding the one or more candidate vector parameters based on the second color component to the third reference prediction parameter set.

70. The method according to claim 67, adjusting the second candidate reference prediction parameter, to determine the third reference prediction parameter set based on the second color component, comprises:
performing an offset calculation on the second candidate reference prediction parameter according to one or more offset values, to determine one or more second initial vector parameters based on the first color component; and
scaling the one or more second initial vector parameters based on the first color component according to a preset sampling format of the current block, to determine one or more candidate vector parameters based on the second color component, and adding the one or more candidate vector parameters based on the second color component to the third reference prediction parameter set.

71. The method according to claim 67, wherein determining the first candidate reference prediction parameter corresponding to the second candidate reference prediction parameter according to the third reference prediction parameter set, comprises:
in a case where one or more candidate vector parameters satisfying a preset availability condition exist in the third reference prediction parameter set, determining the first candidate reference prediction parameter according to the one or more candidate vector parameters.

72. The method according to claim 71, wherein the one or more candidate vector parameters satisfy the preset availability condition, at least comprising:
an offset position indicated by the one or more candidate vector parameters does not exceed a picture boundary;
an offset position indicated by the one or more candidate vector parameters does not exceed a slice boundary;
an offset position indicated by the one or more candidate vector parameters does not cover the current block;
an offset position indicated by the one or more candidate vector parameters does not exceed a preset available region;
an offset position indicated by the one or more candidate vector parameters has been reconstructed.

73. The method according to claim 71, wherein determining the first candidate reference prediction parameter according to the one or more candidate vector parameters, comprises:
in a case where a candidate vector parameter satisfying the preset availability condition exists in the third reference prediction parameter set, determining the candidate vector parameter satisfying the preset availability condition as the first candidate reference prediction parameter;
in a case where multiple candidate vector parameters satisfying the preset availability condition exist in the third reference prediction parameter set, performing a decision on the multiple candidate vector parameters satisfying the preset availability condition to determine the first candidate reference prediction parameter.

74. The method according to claim 73, wherein performing the decision on the multiple candidate vector parameters satisfying the preset availability condition to determine the first candidate reference prediction parameter, comprises:
determining a first template of the current block;
determining respective first matching templates of the multiple candidate vector parameters according to the first template and the multiple candidate vector parameters;
in response to the first template and the first matching templates satisfying a preset existence condition, calculating matching errors between the first template of the current block and the first matching templates according to a preset error criterion, to determine respective first cost values of the multiple candidate vector parameters; and
determining a minimum cost value from the respective first cost values of the multiple candidate vector parameters, and determining a candidate vector parameter corresponding to the minimum cost value as the first candidate reference prediction parameter.

75. The method according to claim 74, wherein the method further comprises:
in response to the first template and the first matching templates not satisfying the preset existence condition, determining a first candidate vector parameter satisfying the preset availability condition in the third reference prediction parameter set as the first candidate reference prediction parameter; or,
in response to the first template and the first matching templates not satisfying the preset existence condition, determining a candidate vector parameter satisfying the preset availability condition at a second position in the third reference prediction parameter set as the first reference prediction parameter.

76. The method according to claim 67, wherein the method further comprises:
in response to all candidate vector parameters in the third reference prediction parameter set not satisfying the preset availability condition, determining a first color component reconstructed sample and a second color component reconstructed sample at a third position of the current block; and
determining a first color component reference sample value and a second color component reference sample value of the current block according to the first color component reconstructed sample and the second color component reconstructed sample at the third position.

77. The method according to claim 51, wherein determining the first color component reference sample value and the second color component reference sample value of the current block according to the first reference prediction parameter set, comprises:
determining first color component reconstructed samples and second color component reconstructed samples respectively indicated by the one or more first candidate reference prediction parameters, according to the first reference prediction parameter set;
determining a first color component reconstructed sample and a second color component reconstructed sample at a third position of the current block; and
determining the first color component reference sample value and the second color component reference sample value of the current block, according to the first color component reconstructed samples and the second color component reconstructed samples respectively indicated by the one or more first candidate reference prediction parameters, as well as the first color component reconstructed sample and the second color component reconstructed sample at the third position.

78. The method according to claim 77, wherein determining first color component reconstructed samples and second color component reconstructed samples respectively indicated by the one or more first candidate reference prediction parameters, according to the first reference prediction parameter set, comprises:
determining a position of the current block;
scaling the position of the current block to determine a position of a collocated first color component region of the current block; and scaling the first candidate reference prediction parameter to determine a scaled reference prediction parameter of the collocated first color component region of the current block;
determining a reference block of the first color component according to the position of the first color component region and the scaled reference prediction parameter, and determining a first color component reconstructed sample indicated by the first candidate reference prediction parameter according to the reference block of the first color component; and
determining a reference block of the second color component according to the position of the current block and the first candidate reference prediction parameter, and determining a second color component reconstructed sample indicated by the first candidate reference prediction parameter according to the reference block of the second color component.

79. The method according to claim 78, wherein determining the first color component reconstructed sample indicated by the first candidate reference prediction parameter according to the reference block of the first color component, comprises:
performing downsampling processing on the reference block of the first color component to determine the first color component reconstructed sample indicated by the first candidate reference prediction parameter, so that a resolution of the first color component reconstructed sample is same as a resolution of the second color component reconstructed sample.

80. The method according to claim 78, wherein determining the second color component reconstructed sample indicated by the first candidate reference prediction parameter according to the reference block of the second color component, comprises:
performing upsampling processing on the reference block of the second color component to determine the second color component reconstructed sample indicated by the first candidate reference prediction parameter, so that a resolution of the first color component reconstructed sample is same as a resolution of the second color component reconstructed sample; and
accordingly, the method further comprises: performing downsampling processing on the prediction value of the second color component of the current block.

81. The method according to claim 79, wherein performing downsampling processing on the reference block of the first color component to determine the first color component reconstructed sample indicated by the first candidate reference prediction parameter, comprises:
determining a downsampling method of the current block; and
performing downsampling processing on the reference block of the first color component according to the downsampling method, to determine the first color component reconstructed sample indicated by the first candidate reference prediction parameter.

82. The method according to claim 81, wherein determining the downsampling method of the current block, comprises:
performing a cost calculation on multiple candidate downsampling methods based on a preset competition method to determine cost results respectively corresponding to the multiple candidate downsampling methods;
selecting a minimum cost result from the cost results respectively corresponding to the multiple candidate downsampling methods; and
determining a candidate downsampling method corresponding to the minimum cost result as the downsampling method of the current block.

83. The method according to claim 82, wherein the preset competition method is a rate-distortion optimization method.

84. The method according to claim 82, wherein the method further comprises:
determining a value of filter identification information; wherein the filter identification information is used to indicate an index number of the downsampling method of the current block in the multiple candidate downsampling methods; and
performing encoding processing on the value of the filter identification information, and writing obtained encoded bits into a bitstream.

85. The method according to claim 77, wherein determining the first color component reconstructed sample and the second color component reconstructed sample at the third position of the current block, comprises:
determining a first template of the current block; and
determining the first color component reconstructed sample and the second color component reconstructed sample at the third position, according to the first template.

86. The method according to claim 74 or 85, wherein a type of the first template comprises at least one of: an upper template, an upper-right template, a left template, a lower-left template, and an upper-left template;
wherein the upper template is located in an upper decoded region adjacent to the current block, the upper-right template is located in an upper-right decoded region adjacent to the current block, the left template is located in a left decoded region adjacent to the current block, the lower-left template is located in a lower-left decoded region adjacent to the current block, and the upper-left template is located in an upper-left decoded region adjacent to the current block.

87. The method according to any one of claims 51 to 86, wherein determining the mapping relationship between the first color component and the second color component according to the first color component reference sample value and the second color component reference sample value, comprises:
determining a first Look Up Table according to the first color component reference sample value and the second color component reference sample value, wherein the first Look Up Table is used for recording a value of the second color component that corresponds to an index key as the first color component.

88. The method according to any one of claims 51 to 86, wherein determining the mapping relationship between the first color component and the second color component according to the first color component reference sample value and the second color component reference sample value, comprises:
determining a first discrete model according to the first color component reference sample value and the second color component reference sample value, wherein the first discrete model is used for indicating the mapping relationship between the first color component and the second color component.

89. The method according to claim 87 or 88, wherein the method further comprises:
performing mapping processing on the first color component reference sample value, so that the first color component reference sample value is within a preset sample range.

90. The method according to claim 87 or 88, wherein the method further comprises:
in a case where a same first reference sample value in the first color component reference sample values corresponds to different multiple second reference sample values in the second color component reference sample values, performing overwriting processing sequentially according to a sample order, and using a last second reference sample value as a value having a mapping relationship with the first reference sample value.

91. The method according to claim 87 or 88, wherein the method further comprises:
in a case where a same first reference sample value in the first color component reference sample values corresponds to different multiple second reference sample values in the second color component reference sample values, performing an average calculation on the multiple second reference sample values, and using an obtained average value as a value having a mapping relationship with the first reference sample value.

92. The method according to claim 51, wherein the method further comprises:
determining a reconstructed pixel sample of a collocated first color component region of the current block; and
determining the first color component sample value of the current block based on the reconstructed pixel sample of the first color component region.

93. The method according to claim 51, wherein determining the prediction value of the second color component of the current block according to the mapping relationship and the first color component sample value of the current block, comprises:
in a case where a first color component value equal to the first color component sample value is found in the mapping relationship, determining a value of the second color component corresponding to the first color component value as the prediction value of the second color component of the current block.

94. The method according to claim 93, wherein the method further comprises:
in a case where no first color component value equal to the first color component sample value is found in the mapping relationship, performing modification processing on the first color component sample value to determine a first color component modification value, and continuing to find in the mapping relationship for whether there is a first color component value equal to the first color component modification value.

95. The method according to claim 94, wherein performing modification processing on the first color component reconstructed value to determine the first color component modification value, comprises:
performing an offset calculation on the first color component sample value according to one or more preset offset values to determine the first color component modification value.

96. The method according to claim 94, wherein the method further comprises:
in a case where no first color component value equal to the first color component modification value is found in the mapping relationship, performing an average calculation on the second color component reference sample values, and determining an obtained average value as the prediction value of the second color component of the current block.

97. The method according to claim 51, wherein determining the prediction value of the second color component of the current block according to the mapping relationship and the first color component sample value of the current block, comprises:
determining a first initial prediction value of the second color component of the current block according to the mapping relationship and the first color component sample value of the current block; and
performing a modification operation on the first initial prediction value to determine the prediction value of the second color component of the current block.

98. The method according to claim 97, wherein performing the modification operation on the first initial prediction value to determine the prediction value of the second color component of the current block, comprises:
performing prediction processing on the second color component of the current block according to a first preset mode, to determine a second initial prediction value of the second color component of the current block; wherein the first preset mode at least comprises one of: a PLANAR mode, a Direct Mode (DM) mode, a Direct Current (DC) mode, and a cross-component linear model prediction (CCLM) mode; and
performing a weighting calculation on the first initial prediction value and the second initial prediction value to determine the prediction value of the second color component of the current block.

99. The method according to claim 51, wherein the method further comprises:
determining an initial value of the second color component of the current block;
determining a residual value of the second color component of the current block according to the initial value and the prediction value; and
performing encoding processing on the residual value of the second color component of the current block, and writing obtained encoded bits into a bitstream.

100. The method according to claim 51, wherein the method further comprises:
in response to the first reference prediction parameter set comprising multiple first candidate reference prediction parameters, determining first color component reconstructed samples and second color component reconstructed samples respectively indicated by the multiple first candidate reference prediction parameters;
determining multiple mapping relationships between the first color component and the second color component, according to the first color component reconstructed samples and the second color component reconstructed samples respectively indicated by the multiple first candidate reference prediction parameters;
determining multiple third initial prediction values of the second color component of the current block according to the multiple mapping relationships; and
performing a weighting calculation on the multiple third initial prediction values to determine the prediction value of the second color component of the current block.

101. The method according to claim 51, wherein the method further comprises:
in response to a first color component block of the current block comprising multiple candidate blocks, determining a second reference prediction parameter set of the current block; wherein the second reference prediction parameter set comprises multiple second candidate reference prediction parameters;
determining multiple first candidate reference prediction parameters according to the multiple second candidate reference prediction parameters;
determining multiple candidate mapping relationships between the first color component and the second color component based on the multiple first candidate reference prediction parameters;
determining a target mapping relationship from the multiple candidate mapping relationships; and
determining the prediction value of the second color component of the current block according to the target mapping relationship and the first color component sample value of the current block.

102. The method according to claim 101, wherein determining the target mapping relationship from the multiple candidate mapping relationships, comprises:
performing a cost calculation on the multiple candidate mapping relationships respectively, to determine cost results respectively corresponding to the multiple candidate mapping relationships; and
determining a minimum cost result from the cost results respectively corresponding to the multiple candidate mapping relationships, and determining a candidate mapping relationship corresponding to the minimum cost result as the target mapping relationship.

103. The method according to claim 101, wherein, the method further comprises:
determining a mapping relationship index value, wherein the mapping relationship index value is used to indicate an index number of the target mapping relationship in the multiple candidate mapping relationships; and
performing encoding processing on the mapping relationship index value, and writing obtained encoded bits into a bitstream.

104. The method according to claim 51, wherein the method further comprises:
in response to a first color component block of the current block comprising multiple candidate blocks, determining a second reference prediction parameter set of the current block; wherein the second reference prediction parameter set comprises multiple second candidate reference prediction parameters;
determining multiple first candidate reference prediction parameters according to the multiple second candidate reference prediction parameters;
determining multiple candidate mapping relationships between the first color component and the second color component based on the multiple first candidate reference prediction parameters;
performing a matching error calculation on the multiple candidate mapping relationships based on a template matching method, to determine respective second cost values of the multiple candidate mapping relationships;
determining a minimum cost value from the respective second cost values of the multiple candidate mapping relationships, and determining a candidate mapping relationship corresponding to the minimum cost value as a target mapping relationship; and
determining the prediction value of the second color component of the current block according to the target mapping relationship and the first color component sample value of the current block.

105. The method according to claim 104, wherein performing the matching error calculation on the multiple candidate mapping relationships based on the template matching method, to determine the respective second cost values of the multiple candidate mapping relationships, comprises:
determining a first template of the current block;
determining a reconstructed pixel sample value of a collocated first color component region template of the first template;
determining respective prediction values of the second color component of the first template under the multiple mapping relationships, according to the multiple candidate mapping relationships and the reconstructed pixel sample value of the first color component region template; and
performing a cost calculation according to a reconstructed value of the second color component of the first template and the respective prediction values of the second color component of the first template under the multiple mapping relationships, to determine the respective second cost values of the multiple candidate mapping relationships.

106. The method according to claim 51, wherein determining the prediction parameter of the current block, comprises:
determining a prediction mode of the current block; and
determining the prediction parameter of the current block according to the prediction mode of the current block.

107. The method according to claim 106, wherein determining the prediction mode of the current block, comprises:
determining multiple candidate modes of the current block; wherein the multiple candidate modes comprise a first prediction mode and other prediction modes other than the first prediction mode;
performing a cost calculation on the multiple candidate modes based on a preset cost method, to determine cost results respectively corresponding to the multiple candidate modes; and
determining a minimum cost result from the cost results respectively corresponding to the multiple candidate modes, and determining a candidate mode corresponding to the minimum cost result as the prediction mode of the current block;
wherein the preset cost method at least comprises one of: a rate-distortion cost method and a template matching method.

108. The method according to claim 51, wherein the method further comprises:
determining a collocated first color component region of the current block; and
in a case where a DM mode is used for the current block and the first color component region is predicted based on a block vector, determining that a first prediction mode is used for the current block.

109. The method according to any one of claims 51 to 108, wherein the method further comprises:
determining a value of a second syntax element; wherein the second syntax element is used to indicate whether a first prediction mode is allowed to be used for the current block; and
performing encoding processing on the value of the second syntax element, and writing obtained encoded bits into a bitstream.

110. A bitstream, wherein the bitstream is generated by performing bit encoding according to to-be-encoded information; wherein the to-be-encoded information comprises at least one of:
a residual value of a second color component of a current block, a value of filter identification information, a mapping relationship index value, a value of a first syntax element, and a value of a second syntax element;
wherein the filter identification information is used to indicate a downsampling method of the current block, the first syntax element is used to indicate whether a first prediction mode is used for the current block, and the second syntax element is used to indicate whether the first prediction mode is allowed to be used for the current block.

111. An encoder, comprising a first determination unit and a first prediction unit, wherein:
the first determination unit is configured to: determine a prediction parameter of a current block; determine a first reference prediction parameter set of the current block according to the prediction parameter; wherein the first reference prediction parameter set comprises one or more first candidate reference prediction parameters;
the first determination unit is further configured to: determine a first color component reference sample value and a second color component reference sample value of the current block according to the first reference prediction parameter set; determine a mapping relationship between a first color component and a second color component according to the first color component reference sample value and the second color component reference sample value; and
the first prediction unit is configured to: determine a prediction value of the second color component of the current block according to the mapping relationship and a first color component sample value of the current block.

112. An encoder, comprising a first memory and a first processor, wherein:
the first memory is configured to store a computer program capable of being run on the first processor; and
the first processor is configured to: upon running the computer program, perform the method according to any one of claims 51 to 109.

113. A decoder, comprising a second determination unit and a second prediction unit, wherein:
the second determination unit is configured to: determine a prediction parameter of a current block; determine a first reference prediction parameter set of the current block according to the prediction parameter; wherein the first reference prediction parameter set comprises one or more first candidate reference prediction parameters;
the second determination unit is further configured to: determine a first color component reference sample value and a second color component reference sample value of the current block according to the first reference prediction parameter set; determine a mapping relationship between a first color component and a second color component according to the first color component reference sample value and the second color component reference sample value; and
the second prediction unit is configured to: determine a prediction value of the second color component of the current block according to the mapping relationship and a first color component sample value of the current block.

114. A decoder, the decoder comprising a second memory and a second processor, wherein:
the second memory is configured to store a computer program capable of being run on the second processor; and
the second processor is configured to: upon running the computer program, perform the method according to any one of claims 1 to 50.

115. A computer-readable storage medium, wherein the computer-readable storage medium stores a computer program, and the computer program, when executed by at least one processor, implements the method according to any one of claims 1 to 50 or the method according to any one of claims 51 to 109.
